# EUROPÄISCHE PATENTSCHRIFT

(11) **EP 3 261 509 B1**
(45) Veröffentlichungstag und Bekanntmachung des Hinweises auf die Patenterteilung: **10.04.2019**
(21) Anmeldenummer: 16702742.4
(22) Anmeldetag: 04.02.2016
(51) Int. Cl.: A47L 15/42, A47L 15/48

(54) **HAUSHALTS-GESCHIRRSPÜLMASCHINE ZUM WASCHEN VON SPÜLGUT IN EIN ODER MEHREREN TEILSPÜLGÄNGEN SOWIE ZUGEHÖRIGES VERFAHREN**
HOUSEHOLD DISHWASHER FOR WASHING DISHES IN ONE OR MORE PARTIAL WASH CYCLES, AND ASSOCIATED METHOD
LAVE-VAISSELLE MÉNAGER POUR LAVER LA VAISSELLE EN UN OU PLUSIEURS CYCLES DE LAVAGE PARTIELS ET PROCÉDÉ CORRESPONDANT

(30) Priorität: 27.02.2015 DE 102015203532; 22.12.2015 DE 102015226481
(43) Veröffentlichungstag der Anmeldung: 03.01.2018
(73) Patentinhaber: BSH Hausgeräte GmbH, 81739 München (DE)
(72) Erfinder: HEINLE, Martin, 89353 Glött (DE); NANNT, Hans-Peter, 89547 Gerstetten (DE); PAINTNER, Kai, 86465 Welden (DE)
(86) Internationale Anmeldenummer: PCT/EP2016/052335
(87) Internationale Veröffentlichungsnummer: WO 2016/134938

(56) Entgegenhaltungen:
- EP-A1- 2 471 434
- EP-A1- 2 662 013
- EP-A2- 2 193 741
- EP-A2- 2 229 866
- JP-A- 2007 125 198
- KR-A- 20070 046 740

## Beschreibung

Die Erfindung betrifft eine Haushalts- Geschirrspülmaschine zum Waschen von Spülgut in ein oder mehreren wasserführenden Teilspülgängen und zum anschließenden Trocknen des Spülguts in mindestens einem nachfolgenden Trocknungsgang eines durchzuführenden Spülgangs.

Bei konventionellen Geschirrspülmaschinen ist üblicherweise eine elektrische Wasserheizung, insbesondere mit mindestens einem elektrischen Heizwiderstand, vorgesehen, um für mindestens einen wasserführenden Teilspülgang, wie z.B. für den Reinigungsgang und/oder Klarspülgang, eines durchzuführenden Spülgangs eine dafür jeweilig in den Spülbehälter der Geschirrspülmaschine eingefüllte Wassermenge auf eine geforderte Temperatur aufheizen zu können. Sie kann z.B. in Form eines Durchlauferhitzers ausgebildet sein. Sie ist vorzugsweise eine Komponente des Flüssigkeits-Umwälzkreislaufs der Geschirrspülmaschine, welcher insbesondere eine Umwälzpumpe, ggf. eine Wasserweiche zur selektiven Ankopplung von zu mehreren Sprüheinrichtungen führenden Zuführrohren an das Ausgangsrohr der Umwälzpumpe, ein oder mehrere Sprüheinrichtungen, einen am Boden des Spülbehälters angebrachten Pumpensumpf, in dem sich die von den ein oder mehreren Sprüheinrichtungen ausgesprühte Spülflüssigkeit im Spülbehälter sammelt, und/oder ggf. Ventile, Flüssigkeits-Verbindungsleitungen, usw.... umfasst. Die Wasserheizung kann insbesondere im Gehäuse der Umwälzpumpe untergebracht sein, so dass eine sogenannte Heizpumpe gebildet ist. Die Wirkungsweise einer Wasserheizung beruht insbesondere auf dem Prinzip der elektrischen Widerstandsheizung, bei der elektrische Energie in thermische Energie umgesetzt und diese auf das an oder in der Wasserheizung vorbeiströmende Wasser übertragen wird. In der Praxis kann z.B. ein sogenannter Rohrheizkörper verwendet sein, der vorzugsweise in einem wasserführenden, insbesondere wasserdurchströmten Rohr liegt. Alternativ kann z.B. auch ein Rohrabschnitt vorgesehen sein, der außen mit zumindest einem Rohrheizkörper oder einer sogenannten Dickschicht- Heizleiterbahn versehen ist und bei eingeschalteter Umwälzpumpe der Geschirrspülmaschine im Inneren von Wasser durchströmt ist. Das Aufheizen derjenigen Wassermenge, die für die Durchführung des jeweiligen Teilspülgangs, wie z.B. des Reinigungsgangs und/oder Klarspülgangs, in den Spülbehälter eingelassen ist, auf eine geforderte Mindesttemperatur erfordert die Erzeugung einer bestimmten thermischen Energie bzw. Wärmeenergie durch die elektrische Widerstandsheizung, was einen entsprechenden Bedarf an elektrischer Energie mit sich bringt. Wünschenswert ist es, diesen elektrischen Energieverbrauch möglichst gering zu halten.

Aus EP 2 471 434 A1 ist eine Geschirrspülmaschine mit einer Wärmepumpe sowie zugehöriges Steuerungsverfahren bekannt. Aufgabe der Erfindung ist es, eine Haushalts- Geschirrspülmaschine bereitzustellen, bei der für die Durchführung eines Spülgangs eines Geschirrspülprogramms der elektrische Energieeinsatz zur Deckung des thermischen Energiebedarfs der ein oder mehreren Teilspülgänge, bei dem oder denen jeweils eine spezifische Wassermenge im Spülbehälter auf eine gewünschte Mindesttemperatur aufzuheizen ist, verringert ist.

Diese Aufgabe wird durch eine erfindungsgemäße Geschirrspülmaschine mit den Merkmalen des Anspruchs 1 gelöst:
Haushalts- Geschirrspülmaschine zum Waschen von Spülgut in ein oder mehreren wasserführenden Teilspülgängen und zum anschließenden Trocknen des Spülguts in mindestens einem nachfolgenden Trocknungsgang eines durchzuführenden Spülgangs
- mit einem Spülbehälter zur Aufnahme des Spülguts,
- mit zumindest einem außen am Spülbehälter angebrachten Füllreservoir, dessen Einlauf mit einer einlaufseitigen Frischwasser- Zuführvorrichtung zur Befüllung mit Frischwasser aus einem Frischwassernetz verbunden ist, und dessen Auslauf mit einer auslaufseitigen Frischwasser-Abführvorrichtung zur Entnahme einer für den jeweilig durchzuführenden Teilspülgang jeweils geforderten Frischwassermenge aus dem Füllreservoir und zu deren Zuführung in den Spülbehälter verbunden ist,
- mit zumindest einer Wärmepumpe, deren Kreislauf einen Kompressor, Druckminderungsmittel, einen Verdampfer und einen Verflüssiger umfasst, wobei der Verdampfer mit dem Füllreservoir zum Entzug von Wärmeenergie aus dort gespeichertem Frischwasser thermisch gekoppelt ist und der Verflüssiger zur Einspeisung von Wärmeenergie in den Innenraum des Spülbehälters vorgesehen ist, und
- mit einem zwischen dem Innenraum des Spülbehälters und dem Innenraum des Füllreservoirs ein- oder mehrlagigen Isolationsmaterialsystem zur Verringerung eines Wärmestroms aus dem Spülbehälter.

Das Füllreservoir dient somit zum einen als Befüllungstank, aus dessen Auslauf eine für den jeweiligen Teilspülgang geforderte Frischwassermenge über eine Abführvorrichtung in den Spülbehälter einläuft. Zum anderen bildet das Füllreservoir für den Kreislauf der Wärmepumpe eine Wärmequelle bzw. ein Wärmereservoir, aus der bzw. aus dem der Verdampfer der Wärmepumpe Wärmeenergie herauspumpt. Es ist also kein zusätzlicher, eigens vorgesehener und geschlossener Tank als Wärmespeicher nötig.

Zusätzlich kann das Füllreservoir insbesondere dazu dienen, während des Trocknungsgangs eines Spülgangs die von ihm jeweilig belegte, insbesondere kontaktierte Wandung zu kühlen, so dass an deren Innenwandfläche im Innenraum des Spülbehälters eine Kondensationstrocknung begünstigt ist. Das Füllreservoir fungiert also auch als Wärmetauscher mit Kühlfunktion zur Trocknungsunterstützung.

Das thermische Isolationssystem bzw. das Wärmedämmsystem, das zwischen dem Innenraum des Spülbehälters und dem Innenraum des Füllreservoirs vorgesehen ist, sorgt zum einen als thermische Barriere bzw. Sperre zwischen dem Innenraum des Spülbehälters und dem Innenraum des Füllreservoirs dafür, dass während des Betriebs der Wärmepumpe durch diese (bezogen auf eine gewünschte Aufheizzeitdauer) mehr Wärmeenergie insgesamt in den Spülbehälter hineingepumpt werden kann als durch Wärmetransport aus dem Spülbehälter insgesamt nach außen verloren geht. Zum anderen stellt das ein- oder mehrlagige Isolationsmaterialsystem bzw. Wärmedämmsystem dennoch eine schwache thermische Kopplung zwischen dem Innenraum des Spülbehälters und dem Innenraum des Füllreservoirs derart her, dass Verlustwärme, die durch Transport von Wärme aus dem Innenraum des Spülbehälters durch das Isolationsmaterialsystem hindurch bedingt ist, durch das Frischwasser im Füllreservoir aufgefangen und durch die Wärmepumpe bei deren erneuten Inbetriebnahme wieder in den Spülbehälter zurückgepumpt werden kann. Es lässt nur einen zeitlich verzögerten, d.h. gedrosselten bzw. reduzierten Durchgang von Wärme aus dem Spülbehälter zurück in das Füllreservoir zu. Das Füllreservoir dient also auch noch als Auffang- bzw. Sammelmittel von Verlustwärme, die über die jeweilige Wandung des Spülbehälters, an der das Füllreservoir außen angebracht ist, durch Wärmetransport entweicht. Es ist somit in vorteilhafter Weise eine Wärmeregenerierung durch einen Wärmezirkulationskreislauf ermöglicht, der das Füllreservoir als Wärmequelle, die Wärmepumpe als Transportmittel für die aus dem Füllreservoir abgepumpte Wärme, den Spülbehälter als Wärmesenke, und das ein- oder mehrlagige Isolationsmaterialsystem zwischen dem Innenraum des Spülbehälters und dem Innenraum des Füllreservoirs als thermisches Kopplungsmittel mit Retardations-, d.h. Abbremsungsfunktion für den Wärmetransport vom Innenraum des Spülbehälters in den Innenraum des Füllreservoirs umfasst. Das ein - oder mehrlagige Isolationsmaterialsystem verringert also einen Wärmestrom aus dem Spülbehälter in das Füllreservoir hinein (im Vergleich zum Fall, dass außen an einer Wandung des Spülbehälters ein Füllreservoir direkt thermisch kontaktierend ohne zusätzliches thermisches Isolationsmaterial angebracht ist).

Auf diese Weise ist die erfindungsgemäße Geschirrspülmaschine besonders effizient mit elektrischer Energie betreibbar, d.h. der elektrische Energieeinsatz pro Spülgang lässt sich gegenüber einer konventionellen Geschirrspülmaschine (ohne Wärmepumpe und ohne erfindungsgemäß ausgebildetes und angeordnetes Füllreservoir) deutlich verringern.

Durch die Mehrfachfunktion des Füllreservoirs als Frischwasser- Befüllungsmittel für den Spülbehälter, als Wärmereservoir für die Wärmepumpe, als Wärmetauscher mit Kühlfunktion zur Trocknungsunterstützung, und als Auffang- bzw. Sammelmittel von Verlustwärme aus dem Spülbehälter reicht der im Gehäuse der Geschirrspülmaschine zur Verfügung stehende knappe Bauraum zur Unterbringung all dieser Funktionalitäten aus und die Bauweise der Haushalts- Geschirrspülmaschine kann trotz des Einsatzes einer Wärmepumpe einfach gehalten werden. Insbesondere kann der bisherige Grundaufbau einer Geschirrspülmaschine mit einem außenseitig an deren Spülbehälter angebrachten Wasserbehälter, der zur Trocknungsunterstützung mit Frischwasser befüllbar ist, beibehalten werden.

Da das Füllreservoir mit Frischwasser über die einlaufseitige Frischwasser-Zuführvorrichtung aus einem Frischwassernetz befüllbar ist und aus diesem eine für den jeweilig durchzuführenden Teilspülgang im Spülbehälter jeweils geforderte Frischwassermenge über die auslaufseitige Frischwasser- Abführvorrichtung teilweise oder vollständig entnehmbar ist, ist ein teilweiser oder vollständiger Wasserwechsel im Füllreservoir von einem Spülgang zum nächsten, zeitlich später nachfolgenden Spülgang oder sogar von einem Teilspülgang zum nächsten Teilspülgang innerhalb der Zeitdauer eines Spülgangs ermöglicht. Durch diesen Wasseraustausch lässt sich ein unzulässig hoher Befall des Füllreservoirs mit Mikroorganismen oder sonstigen Verunreinigungen weitgehend vermeiden.

Wenn bei zumindest einem Teilspülgang, insbesondere bei mehreren Teilspülgängen, des Spülgangs eines ablaufenden Geschirrspülprogramms aus dem Füllreservoir jeweils eine für den jeweiligen Teilspülgang geforderte Frischwassermenge entnommen wird, und für mindestens einen Teilspülgang, insbesondere denselben Teilspülgang, Frischwasser mittels der Frischwasser- Zuführvorrichtung in das Füllreservoir nachgefüllt wird, ist ein zumindest teilweiser oder gar ein vollständiger Wasserwechsel im Füllreservoir pro Spülgang, insbesondere sogar per Teilspülgang, durchgeführt. Dadurch ist die Gefahr einer unzulässigen Verkeimung des erfindungsgemäßen Füllreservoirs mit unerwünschten Mikroorganismen im Vergleich zu einem vollständig geschlossenen Wärmespeichertank stark verringert.

Insbesondere weist die Frischwasser-Zuführvorrichtung eine Enthärtungsanlage, bevorzugt einen lonentauscher, auf. Somit wird das Füllreservoir in vorteilhafter Weise mit enthärtetem Frischwasser befüllt, welches ja nach dem jeweiligen Entnahmevorgang als Spülflüssigkeit im Spülbehälter für den jeweiligen wasserführenden Teilspülgang eines Spülgangs verwendet ist.

Nach einer vorteilhaften Weiterbildung der Erfindung folgt nach einer Phase wie z.B. im Reinigungsgang, während der zum Aufheizen einer Wassermenge im Spülbehälter auf eine gewünschte Temperatur erstmals ein Wärmepumpenbetrieb durchgeführt worden ist, der zu einer Abnahme, insbesondere Erschöpfung der Wärmeenergiemenge im Frischwasser des Füllreservoirs geführt hat, zweckmäßigerweise eine Regenerationsphase zum Wiederauffüllen des Füllreservoirs mit Wärmeenergie. Diese Abfolge von Wärmeentnahme aus dem Füllreservoir durch die Wärmepumpe und thermischer Regeneration des Füllreservoirs kann vorteilhaft mittels einer Kontrolleinrichtung eingestellt werden, die die Wärmepumpe steuert und/oder regelt. Während dieser Regenerationsphase ist die Wärmepumpe insbesondere ausgeschaltet oder in ihrer Pumpleistung reduziert. Dazu erhält ihr Kompressor vorzugsweise ein entsprechendes Beeinflussungssignal von der Kontrolleinrichtung, insbesondere Steuer- und/oder Regelungseinrichtung. Während der Regenerationsphase wird insbesondere Eiswasser/Festeis, das sich im Füllreservoir während eines vorausgehenden, ersten Wärmepumpenbetriebs für einen Teilspülgang wie z.B. dem Reinigungsgang gebildet hat, aufgetaut, d.h. verflüssigt. Unter Eiswasser wird dabei insbesondere ein Gemisch aus Eisstückchen und flüssigem Wasser verstanden. Durch die Regenerationsphase ist sichergestellt, dass genügend Frischwasser in flüssiger Form im Füllreservoir vorhanden ist, um aus dem Füllreservoir eine gewünschte Frischwassermenge zum Befüllen des Spülbehälters für einen zeitlich nachfolgenden Teilspülgang (ohne oder mit Wärmepumpenbetrieb) wie z.B. dem Zwischenspülgang eines Spülgangs problemlos entnehmen zu können. Zudem ist das Füllreservoir nach seiner Regenerierung wieder soweit mit thermischer Energie aufgeladen, dass eine zweite Phase mit Wärmepumpenbetrieb wie z.B. im Klarspülgang nachfolgen kann. Die thermische Regenerierung des Füllreservoirs erfolgt also insbesondere zumindest derart, dass nach einer ersten Phase mit Wärmepumpenbetrieb, wie z.B. beim Reinigungsgang, zum Aufheizen einer ersten Wassermenge im Spülbehälter auf eine gewünschte erste Temperatur ein nachfolgender, erneuter Betrieb der Wärmepumpe, wie z.B. beim Klarspülgang, zum Aufheizen einer zweiten Wassermenge im Spülbehälter auf eine gewünschte zweite Temperatur ermöglicht ist.

Insbesondere wird zweckmäßigerweise während eines Zeitabschnitts mit ausgeschalteter Wärmepumpe, wie z.B. des Zwischenspülgangs, der zwischen zwei zeitlich beabstandeten, jeweils einen Wärmepumpenbetrieb umfassenden Aufheizzeitabschnitten, insbesondere zweier zeitlich voneinander getrennter Teilspülgänge wie z.B. des Reinigungsgangs und des Klarspülgangs eines Spülgangs liegt, Eiswasser und/oder Festeis, das sich im Füllreservoir durch den Wärmeentzug mittels des Verdampfers während der ersten Aufheizzeitdauer bzw. ersten Phase mit Wärmepumpenbetrieb, insbesondere während der Aufheizzeitdauer des Reinigungsgangs, gebildet hat, aufgetaut und das verflüssigte Frischwasser im Füllreservoir auf eine derartige Temperatur erwärmt, dass nachfolgend die zweite Aufheizung einer bestimmten Wassermenge im Spülbehälter, wie z.B. beim Klarspülgang, auf eine gewünschte Mindesttemperatur mittels der Wärmepumpe ermöglicht ist. Dabei wird während des Regenerationszeitabschnitts, der zwischen den zwei zeitlich versetzten Phasen mit Wärmepumpenbetrieb liegt, das im Füllreservoir gespeicherte Frischwasser bevorzugt wieder auf eine Temperatur erwärmt, die oberhalb des Gefrierpunkts von Wasser liegt, insbesondere mindestens 4°C, vorzugsweise zwischen 15° C und 30° C beträgt.

Die thermische Regenerierung des Füllreservoirs kann vorzugsweise durch den Rücktransport der in den Spülbehälter eingebrachten Wärmeenergie aus dem Innenraum des Spülbehälters durch das thermische Isolationssystem hindurch in den Innenraum des Füllreservoirs hinein, d.h. durch Verlustwärme aus dem Spülbehälter erfolgen.

Unterstützend hierzu kann ggf. die Umgebungswärme am Standort der Geschirrspülmaschine zur thermischen Regenerierung des Füllreservoirs beitragen, da der Frischwasserinhalt des Füllreservoirs nach einer Phase mit Wärmepumpenbetrieb eine Temperatur niedriger als die Umgebungstemperatur aufweist, so dass es aufgrund dieses Temperaturgefälles zu einem Transport von Umgebungswärme zum Füllreservoir kommt.

Insbesondere kann es ggf. zusätzlich zweckmäßig sein, wenn zur thermischen Regenerierung des Füllreservoirs Frischwasser mittels der Zuführvorrichtung aus einem Frischwassernetz in das Füllreservoir nachgefüllt wird. Das derart nachgefüllte Frischwasser weist in der Regel eine Einlauftemperatur auf, die höher als die Temperatur des Kaltwassers oder Eiswasser/Festeises im Füllreservoir ist, das sich dort nach einer Phase mit Wärmepumpenbetrieb wie z.B. nach der Aufheizzeitdauer beim Reinigungsgang gebildet hat. Während das Eiswasser/Eis im Füllreservoir am Ende der Phase mit Wärmepumpenbetrieb eine Temperatur von weniger als 4° C, insbesondere unter 0°C hat, weist das in das Füllreservoir einlaufende Frischwasser aus einem hausseitigen Fischwassernetz üblicherweise 15° C oder mehr auf und ist damit um 10° C - 15° C wärmer als das Kaltwasser oder das Eiswasser/Festeis im Füllreservoir, das sich nach einer Phase mit Wärmepumpenbetrieb im Füllreservoir gebildet hat. Aufgrund der gegenüber Luft großen Wärmekapazität von Wasser ist durch diese Zufuhr von Frischwasser in das Füllreservoir dessen thermische Regenerierung besonders effizient und schnell möglich. Insbesondere sorgt der Kontakt des in das Füllreservoir einlaufenden Frischwassers mit dem dort vorhandenen Eiswasser/Festeis für eine kurze Auftauzeit, die kürzer ist als im Fall, dass eine thermische Regenerierung nur über die Verlustwärme und/oder Umgebungswärme stattfinden würde. Wird die thermische Regenerierung des Füllreservoirs durch Zuführung von Frischwasser vorgenommen, so kann zwischen dem Spülbehälter und dem Füllreservoir insbesondere ein Wärmedämmelement mit einem besonders niedrigeren spezifischen Wärmedurchlasskoeffizienten vorgesehen sein, so dass die in den Spülbehälter mittels der Wärmepumpe eingebrachte Wärmeenergie noch besser in diesem gehalten werden kann, was Vorteile für die Gesamtenergiebilanz der Geschirrspülmaschine pro Spülgang bringen kann. Für die Regenerierung des Füllreservoirs mittels der Zufuhr von Frischwasser ist es zweckmäßig, wenn der Behälter des Füllreservoirs ein ausreichend großes Nachfüllvolumen für Frischwasser zusätzlich zu seinem Eisspeichervolumen aufweist und eine ausreichende Kontaktzone zwischen dem Eis und dem nachgefüllten Frischwasser bereitgestellt ist.

Verallgemeinert betrachtet kann es zweckmäßig sein, wenn die einlaufseitige Frischwasser- Zuführvorrichtung zur Zuführung von Frischwasser in das Füllreservoir derart ausgebildet ist, und/oder insbesondere unter Zuhilfenahme einer Kontrolleinrichtung derart einstellbar ist, dass nach der Aufheizphase eines Teilspülgangs, bei der die im Spülbehälter vorhandene Wassermenge unter Zuhilfenahme des Verflüssigers der Wärmepumpe aufgeheizt worden ist und bei der die im Füllreservoir vorhandene Frischwassermenge unter Zuhilfenahme des Verdampfers der Wärmepumpe auf eine Kaltwassertemperatur, die geringer als die Einlauftemperatur des Frischwassers ist, insbesondere auf weniger als 8 ° C, abgekühlt, bevorzugt teilweise oder vollständig zu Eis gefroren ist, Frischwasser mit einer gegenüber der Kaltwassertemperatur höheren Einlauftemperatur zum Regenerieren dieses Kaltwassers oder Eises in das Füllreservoir neu eingelassen ist. Dazu weist der Behälter des Füllreservoirs zweckmäßigerweise ein ausreichend großes Nachfüllvolumen für Frischwasser zusätzlich zu seinem Eisspeichervolumen auf. Dadurch ist vermieden, dass das Frischwasser, dass zum Auftauen des Eises in das Füllreservoir nachgefüllt wird, zu stark abgekühlt in den Spülbehälter, insbesondere während des laufenden Teilspülgangs mit Wärmepumpenbetrieb oder eines nachfolgenden wasserführenden Teilspülgangs, gelangt, sondern im Füllreservoir solange verbleiben kann, bis es durch Verlustwärme aus dem Spülbehälter auf eine ausreichend hohe Temperatur erwärmt worden ist. Zweckmäßigerweise weist das Füllreservoir zusätzlich zu seinem für flüssiges Frischwasser vorgegebenen Soll- Füllvolumen einen Freiraum bzw. Leerraum auf, in den sich Eiswasser/Eis, das sich aus dem im Füllreservoir gespeicherten Frischwasser durch die Abkühlung mittels des Verdampfers beim Betrieb der Wärmepumpe bilden kann, aufgrund seines Volumenzuwachses (gegenüber dem von flüssigen Wasser eingenommen Raumvolumen) ausdehnen kann. Ggf. kann der zusätzliche Freiraum auch dadurch bereitgestellt sein, dass für das Füllreservoir ein Material, insbesondere Kunststoff gewählt ist, das nachgiebig ist und sich dadurch das vom Behälter des Füllreservoirs eingeschlossene Volumen bei Eisbildung aufweiten bzw. vergrößern lässt. Dadurch bleibt der Behälter des Füllreservoirs dauerhaft funktionstüchtig, d.h. Beschädigungen des Füllreservoirs sind somit vermieden.

Insbesondere kann es zweckmäßig sein, dass das Füllreservoir mit einer ausreichenden Wartezeit bereits vor Beginn des Spülgangs eines durchzuführenden Geschirrspülprogramms, insbesondere beim vorausgehenden Spülgang, mit Frischwasser gefüllt worden ist, insbesondere sein gesamtes für flüssiges Wasser vorgesehenes Soll- Füllvolumen mit Frischwasser vollgefüllt worden ist, so dass durch Wärmeübertragung aus der Umgebung das Frischwasser im Füllreservoir etwa auf Raumtemperatur am Aufstellungsort der Geschirrspülmaschine vorerwärmt ist. In diesem Fall weist das Füllreservoir von vornherein eine höheres Temperaturniveau und damit eine höhere thermische Speicherdichte (im sensiblen Wärmebereich) auf als ein Wärmespeichertank, der erst bei Beginn des ersten Teilspülgangs des Spülgangs eines durchzuführenden Geschirrspülprogramms mit Frischwasser gefüllt werden würde. Dies spart elektrische Energie beim anschließenden Betrieb der Wärmepumpe ein, da sich für diese eine höhere Leistungszahl, d.h. ein höherer COP ("coefficient of performance") ergibt.

Zweckmäßigerweise liegt das Füllreservoir außen an einer Wandung, insbesondere Seitenwandung, des Spülbehälters an. Insbesondere ist es dort flächig kontaktierend fest angebracht. Dadurch ist sichergestellt, dass Wärmeverluste aus dem Spülbehälter durch das Frischwasser des Füllreservoirs aufgenommen sowie in diesem gespeichert werden können und bei der nächsten Inbetriebnahme der Wärmepumpe über deren Verflüssiger zurück in den Spülbehälter übertragen werden können.

Günstiger Weise ist das Füllreservoir als Hohlraumkörper, insbesondere flach kasten- oder quaderförmig, ausgebildet. Dadurch trägt es außen auf der Wandung des Spülbehälters nur wenig auf, so dass vorgegebene Abmessungen bzw. Maße der Geschirrspülmaschine eingehalten werden können. Er weist vorzugsweise ein Füllvolumen zwischen 2 und 10 l auf.

Gemäß einer vorteilhaften Weiterbildung der Erfindung umfasst das thermische Isolationsmaterialsystem zumindest ein, insbesondere flächiges, Wärmedämmungselement, das als Festkörper, insbesondere als Dämmvlies oder Schaummateriallage, ausgebildet ist. Dadurch ist dauerhaft eine thermische Barriere oder thermische Bremse zwischen dem Innenraum des Spülbehälters und dem Innenraum des Füllreservoirs vorhanden. Dadurch ist es erst ermöglicht, mittels der Wärmepumpe Wärmeenergie aus dem im Füllreservoir gespeicherten Frischwasser in den Innenraum des Spülbehälters zu pumpen und diesen somit zu erwärmen, ohne dass diese eingepumpte Wärmeenergie sofort wieder - noch während des Betriebs der Wärmepumpe - größtenteils bzw. zum überwiegenden Teil aus dem Spülbehälter entweicht und in das demgegenüber kältere Frischwasser des Füllreservoirs durch Wärmetransport zurücktransportiert werden würde. Das thermische Isolationsmaterialsystem bewirkt also eine zeitliche Verzögerung bzw. Verlangsamung für den Wärmetransportvorgang bzw. Wärmestrom aus dem Innenraum des Spülbehälters heraus, d.h. es hält die durch die Wärmepumpe insgesamt in den Spülbehälter eingepumpte und dort eingeschlossene Wärmeenergie für eine vorbestimmte Zeitdauer auf oder zurück. Diese kann je nach Materialwahl des Isolationsmaterialsystems festgelegt werden. Der Wärmestrom aus dem Spülbehälter durch die Wandung mit dem außen angebrachten Füllreservoir hinein ist durch das zwischen diesen vorgesehene thermische Isolationssystem gegenüber einem Wärmestrom aus dem Spülbehälter verringert, der durch eine Wandung des Spülbehälters ohne Füllreservoir und ohne Wärmedämmsystem hindurchgeht.

Nach einer vorteilhaften Weiterbildung der Erfindung ist vorgesehen, dass das flächige Wärmedämmungselement zweckmäßigerweise außen auf der äußeren Wandung des Spülbehälters bzw. Behandlungsbehälters oder außen auf einer auf der Wandung aufgebrachten Belagschicht, insbesondere Bitumenschicht, aufliegt und darüber das Füllreservoir flächig kontaktierend aufsitzt. Bei dieser Mehrschichtkonstruktion erlaubt die Belagsschicht, insbesondere Bitumenschicht, außen auf der Wandung die Erfüllung weiterer Anforderungen wie z.B. an die Abschirmung von Geräuschen aus dem Spülbehälter, während das Wärmedämmungselement die geforderte thermische Barriere oder Bremse zwischen dem Innenraum des Spülbehälters und dem Innenraum des Füllreservoirs sicherstellt. Zudem sind keine Veränderungen der üblichen Grundkonstruktion eines Spülbehälters erforderlich, der außenseitig zur Entdröhnung mit Bitumenmatten belegt ist.

Energetisch vorteilhaft ist es insbesondere, wenn das Füllreservoir mindestens 50%, insbesondere zwischen 70% und 100%, der Gesamtfläche der ihm jeweils zugeordneten Wandung, bevorzugt im Wesentlichen die Gesamtfläche der ihm zugeordneten Wandung, des Spülbehälters außen abdeckt. Je größer der Flächenanteil der jeweiligen Wandung des Spülbehälters ist, der vom Füllreservoir von außen belegt ist, desto mehr kann über diese aus dem Spülbehälter entweichende Wärmeenergie - trotz außen auf der Wandung aufgebrachten Wärmedämmungselement - durch das im Füllreservoir gespeicherte Frischwasser aufgesammelt werden.

Besonders zweckmäßig kann es sein, wenn mehrere, insbesondere die beiden einander gegenüberliegenden Seitenwandungen, des Spülbehälters jeweils durch mindestens ein Füllreservoir von außen abgedeckt sind. Je mehr Wandungen des Spülbehälters außen jeweils mit einem Füllreservoir versehen sind, desto besser können Wärmeverluste aus dem Spülbehälter im Frischwasser des jeweiligen Füllreservoirs eingefangen werden, was zu dessen Erwärmung führt. Damit geht noch weniger Wärmeenergie aus dem Spülbehälter an die Umgebung am Standort der Geschirrspülmaschine verloren, sondern sie verbleibt im Wärmekreislaufsystem von Füllreservoir, Wärmepumpe und Spülbehälter. Besonders günstig ist es, wenn außen an allen Wandungen des Spülbehälters in entsprechender Weise jeweils ein Füllreservoir angebracht ist, das mit Frischwasser gefüllt ist. Dann kann etwaig aus dem Spülbehälter entweichende Wärmeenergie rundum von den Füllreservoirs eingesammelt werden und für den nächsten Wärmepumpenbetrieb wieder genutzt werden.

Zweckmäßig kann es insbesondere sein, wenn an jedes Füllreservoir der Verdampfer einer eigens vorgesehenen Wärmepumpe thermisch angekoppelt ist. Alternativ können mehrere Füllreservoirs mit den Verdampferabschnitten des Verdampfers einer gemeinsamen Wärmepumpe thermisch gekoppelt sein. Dies ist weniger aufwendig. Nach einer weiteren vorteilhaften Variante kann an nur ein Füllreservoir oder einer ersten Gruppe von Füllreservoirs der Verdampfer der Wärmepumpe thermisch angekoppelt sein, während die übrigen Füllreservoirs oder die zweite Gruppe von Füllreservoirs mit diesem Füllreservoir oder dieser ersten Gruppe von Füllreservoirs fluidisch verbunden sind und ohne Verdampferankopplung auskommen, d.h. verdampferfrei sind. Dadurch lässt sich der konstruktive Aufwand in Grenzen halten.

Gemäß einer weiteren zweckmäßigen Weiterbildung der Erfindung ist das Füllreservoir auf seiner dem Spülbehälter zugewandten Wandungsseite thermisch stärker isoliert als auf seiner dem Spülbehälter abgewandten, insbesondere der Umgebung zugewandten Wandungsseite. Dadurch lässt sich auch Wärmeenergie aus der Umgebung am Standort der Geschirrspülmaschine durch das Frischwasser des Füllreservoirs einsammeln. Dabei sorgt eine thermische Isolationsschicht auf der dem Spülbehälter abgewandten Wandung des Füllreservoirs dafür, dass dort eine unerwünscht große Auskondensierung von Feuchtigkeit aus der Umgebungsluft weitgehend vermieden ist. Dies ist vorteilhaft, da die Geschirrspülmaschine frei von Kondensatproblemen in Küchenräumen aufgestellt werden kann. Insbesondere eignet sie sich zum Einbau in eine Küchenmöbelnische, ohne dass die Gefahr der Beschädigung von benachbarten Küchenmöbelteilen oder einer Arbeitsplatte oberhalb der Geschirrspülmaschine durch Kondensat besteht.

Ggf. kann es aber auch genügen, z.B. wenn ein entsprechendes Kondensat-Auffangelement vorgesehen ist, das der jeweiligen, dem Spülbehälter abgewandten Außenwand des Füllreservoirs zugeordnet ist. Dann kann die thermische Isolierung auf der dem Spülbehälter abgewandten Seite des Füllreservoirs entfallen.

Nach einer zweckmäßigen Weiterbildung der Erfindung weist das thermische Isolationsmaterialsystem insgesamt betrachtet einen Wärmedurchgangswiderstand R_{T} von mindestens von mindestens 0,02 (K m²)/W, insbesondere zwischen 0,1 (K m²)/W und 1 (K m²)/W, auf. Dadurch ist zum einen eine ausreichende thermische Barriere oder Bremse für die während eines Teilspülgangs mit aufzuheizender Spülflüssigkeit in den Innenraum des Spülbehälters eingebrachte Wärmeenergie bereitgestellt, d.h. diese bleibt für die Zeitdauer des Teilspülgangs so im Innenraum des Spülbehälters erhalten, dass ein für diesen Teilspülgang gefordertes Profil des zeitlichen Temperaturverlaufs im Innenraum des Spülbehälters eingehalten werden kann. Dieses Profil entspricht vorzugsweise etwa dem zeitlichen Temperaturverlauf desselben Teilspülgangs bei einer konventionell konstruierten Geschirrspülmaschine (ohne Wärmepumpe). Zum anderen reicht die schwache thermische Kopplungswirkung des Isolationsmaterialsystems aus, beim spülgangabschließenden Trocknungsgang die Wandung des Spülbehälters, an der außen das Füllreservoir angebracht ist, für eine gewünschte Kondensationstrocknung ausreichend gegenüber der Luft und/oder dem Spülgut im Spülbehälter abzukühlen, wenn das Füllreservoir zuvor beim dem Trocknungsgang unmittelbar vorausgehenden Teilspülgang, wie z.B. Klarspülgang, durch den Wärmepumpenbetrieb gekühlt wird. Dies gilt erst recht, wenn nach einer vorteilhaften Weiterbildung der Erfindung die Wärmepumpe beim Trocknungsgang weiter betrieben wird, d.h. eingeschaltet ist.

Nach einer vorteilhaften Weiterbildung der Erfindung ist es für die Energiebilanz eines Spülgangs günstig, wenn das Füllreservoir mit dem Spülbehälter derart in thermischer Wirkverbindung steht, insbesondere durch ein den Innenraum des Spülbehälters und den Innenraum des Füllreservoirs voneinander trennendes Isolationsmaterialsystem derart thermisch aneinander gekoppelt sind, und das Flüssigkeits- Gesamtfüllvolumen des Füllreservoirs derart gewählt ist, dass sich aus dem Produkt des Wärmewiderstands Rth (Einheit: K/W) des Isolationsmaterialsystems zwischen dem Innenraum des Spülbehälters und dem Innenraum des Füllreservoirs sowie der Wärmekapazität Cth (Einheit: (W sec)/K) der im Füllreservoir gespeicherten Wassermenge eine thermische Zeitkonstante τ (Einheit: min (Minuten)) zwischen 5 min (Minuten) und 60 min, insbesondere zwischen 10 min und 30 min, für den Transfer von Wärme aus dem Spülbehälter in das Füllreservoir ergibt. Die Zeitkonstante τ gibt ein einfaches Maß bzw. eine Richtgröße dafür an, nach welcher Zeit sich eine in den Spülbehälter eingebrachte Wärmemenge über das thermische Isolationsmaterialsystem in das Füllreservoir (durch Wärmetransport) selbst entlädt. Nach der Zeitdauer τ ist nach einer ersten Abschätzung die Differenz zwischen der Temperatur im Spülbehälter und der Temperatur im Füllreservoir auf etwa 37% ihres Anfangswerts, der am Ende eines Aufheizzeitabschnitts für einen wasserführenden Teilspülgang vorliegt, gesunken.

Falls die Wandung des vorzugsweise aus Metall, insbesondere Edelstahl gefertigten Spülbehälters, an der außen das Füllreservoir angebracht ist, mit einer Bitumenschicht als Entdröhnung bzw. Schalldämmung, insbesondere von üblich zwischen 2 mm und 10 mm Wanddicke, belegt ist, und darüber zusätzlich mindestens ein Wärmedämmungselement wie z.B. ein Vlies oder ein Schaumkörper aufgelegt ist, so haben Tests gezeigt, dass es für eine ausreichende thermische Sperrwirkung vorteilhaft ist, wenn für das Wärmedämmungselement ein Material mit einer spezifischen Wärmeleitfähigkeit von höchstens 0,5 W/(m K), insbesondere zwischen 0,1 und 0,005 W/(m K), gewählt ist. Dann ist eine zu starke Abkühlung des Spülbehälters durch das Füllreservoir, dessen Frischwasserfüllung durch den Verdampfer der Wärmepumpe bei deren Betrieb abgekühlt und/oder zu Eiswasser/Festeis gemacht wird, gegenüber einer konventionell konstruierten Geschirrspülmaschine (ohne Wärmepumpe) weitgehend vermieden, so dass das geforderte, über den Zeitfortgang des Spülgangs abzufahrende Temperaturprofil im Spülbehälter trotz dem kalten Wasser und/oder Eis im Füllreservoir eingehalten werden kann.

Günstig kann es insbesondere sein, wenn das thermische Isolationssystem hinsichtlich seiner spezifischen Wärmeleitfähigkeit veränderbar, bevorzugt schaltbar ausgebildet ist. Vorteilhafterweise ist es während der wasserführenden Teilspülgänge, insbesondere denen mit aufzuheizender Spülflüssigkeit, thermisch stärker isolierend ausgebildet als beim Trocknungsgang. Anders ausgedrückt wird seine spezifische Wärmeleitfähigkeit für den Trocknungsgang gegenüber den ein oder mehreren vorausgehenden wasserführenden Teilspülgängen vergrößert. Die thermische Isolierung zwischen dem Füllreservoir und der ihm zugeordneten Spülbehälterwand wird also zweckmäßigerweise als schaltbare Wärmedämmung derart ausgeführt, dass diese in der Trocknungsphase besser thermisch leitend als zuvor in den ein oder mehreren wasserführenden Teilspülgängen wird und somit die Kondensationswärme aus dem Spülbehälter bei leitend geschalteter Isolation besser in das Füllreservoir abgeführt wird. Diese Veränderung der spezifischen Wärmeleitfähigkeit des thermischen Isolationssystems kann insbesondere mittels der Kontrolleinrichtung vorgenommen werden.

Zu Verstärkung der Abkühlung der Innenseite der Wandung des Spülbehälters, an der außen das Füllreservoir angebracht ist, während des Trocknungsgangs eines Spülgangs, kann es insbesondere zweckmäßig sein, wenn die Wärmepumpe während des spülgangabschließenden Trocknungsgangs eingeschaltet ist, d.h. operativ betrieben wird. Dies ist besonders zweckmäßig, wenn es beim vorausgehenden Teilspülgang mit Wärmepumpenbetrieb wie z.B. beim Klarspülgang zu keinem Gefrieren des Wassers im Füllreservoir kommt, d.h. das Wasser im Füllreservoir trotz Wärmepumpenbetrieb flüssig bleibt. Durch den Wärmepumpenbetrieb beim Trocknungsgang ist eine aktive, andauernde Kühlung der Wandung des Spülbehälters, an der das Füllreservoir angebracht ist, insbesondere anliegt, sichergestellt und an ihr kann im Innenraum des Spülbehälters eine verbesserte Kondensationstrocknung stattfinden. Günstig kann es in diesem Zusammenhang sein, wenn der Verflüssiger der Wärmepumpe mit der Luft im Spülbehälter in direktem oder indirektem thermischen Kontakt steht, so dass diese beim Trocknungsgang durch den Verflüssiger aktiv beheizt wird und dadurch aufnahmefähiger für Feuchtigkeit wird.

Ggf. kann die durch den aktiven Betrieb der Wärmepumpe bewirkte Abkühlung der Frischwassermenge im Füllreservoir während des Trocknungsgangs so groß sein, dass es nicht erforderlich, ein schaltbares Wärmedämmelement vorzusehen, sondern es kann ein stationär ausgebildetes, nicht schaltbares Wärmedämmelement genügen.

Unter Umständen kann es günstig sein, wenn das Füllreservoir zumindest an seiner dem Spülbehälter zugewandten Wandung innen- und/oder außenseitig mit einem thermischen Isolierungselement bzw. Wärmedämmelement vorab versehen ist. Dies kann fertigungstechnische Vorteile bringen, weil das Füllreservoir als vorgefertigte Einheit vorliegt, als solche gelagert werden kann, und als Ganzes mit bereits vorhandenem Wärmedämmelement an die jeweilig zugeordnete Wandung des Spülbehälters angebracht werden kann. Ein zusätzlicher Montageschritt zum Anbringen eines separaten Wärmedämmelements auf der dem Füllreservoir zugewandten Wandung des Spülbehälters kann dann eingespart werden. Dies ist günstig für die Massenproduktion von Haushalts-Geschirrspülmaschinen.

Ggf. kann das Füllreservoir rundum mit einer thermischen Isolationshülle versehen sein. Dadurch kann insbesondere auf der dem Spülbehälter abgewandten Wandung des Spülbehälters eine unerwünschte Kondensatbildung von Feuchtigkeit aus der Umgebungsluft am Standort der Geschirrspülmaschine verringert oder vermieden werden, wenn das Füllreservoir durch den Betrieb der Wärmepumpe stark abgekühlt wird.

Besonders zweckmäßig kann es sein, wenn das Füllreservoir mit einer vollständigen Hülle aus PCM, d.h. rundum innenwandseitig und/oder außenwandseitig mit PCM ("phase change material") als Isolationsmaterial versehen ist, dessen Phasenwechseltemperatur höher als die des im Füllreservoir zwischengespeicherten Frischwassers ist, insbesondere zwischen 3°C und 10 °C liegt. Seine Phasenwechseltemperatur ist vorzugsweise niedriger als die Temperatur im Spülbehälter am Ende des jeweiligen Aufheizzeitabschnitts des jeweiligen Teilspülgangs mit aufzuheizender Spülflüssigkeit wie z.B. des Reinigungsgangs oder Klarspülgangs gewählt, so dass in ihm Verlustwärme aus dem Spülbehälter als latente Wärme gespeichert werden kann. Übliche PCM- Materialien wie z.B. Paraffine weisen relativ schlechte wärmeleitende Eigenschaften auf, d.h. sie wirken thermisch isolierend. Auf diese Weise kann das Füllreservoir durch innenwandseitig und/oder außenwandseitig angebrachtes PCM- Material innen und/oder außen thermisch isoliert werden. Dadurch, dass der Phasenwechsel des PCM- Materials auf einem höheren Temperaturniveau als der Phasenwechsel des Wassers erfolgt, bleibt die Temperatur der Wandung des Füllreservoirs an der dem Spülbehälter abgewandten Außenseite des Füllreservoirs durch Abgabe von latenter Wärme annähernd konstant bei der Schmelztemperatur während der Zeitdauer, in der die Wärmepumpe in Betrieb ist und das Frischwasser im Füllreservoir zu Eiswasser und/oder Festeis macht. Wenn die Wärmepumpe ausgeschaltet ist, nimmt das PCM-Material Wärme aus der Umgebung und/oder Verlustwärme aus dem Spülbehälter auf und schmilzt auf, wodurch es zumindest auf Schmelztemperatur ist, die höher als die von Wasser im Füllreservoir ist. In einer Küche ist üblicherweise mit einer Temperatur von etwa 15 °C - 24°C zu rechnen, so dass das PCM- Material seine Schmelztemperatur aufweist, die höher als die von Eiswasser/Festeis ist und niedriger als die Umgebungstemperatur. Wegen dieser Reduzierung des Temperaturgefälles zwischen der Temperatur der Umgebungsluft und der Temperatur der dem Spülbehälter angewandten Außenwand des Füllreservoirs gegenüber dem Fall, dass die dem Spülbehälter abgewandte Außenwand des Füllreservoirs ohne PCM- Material ist, kann weniger Wasser aus der Umgebungsluft an der dem Spülbehälter abgewandten Außenseite des Füllreservoirs kondensieren. Dadurch sind Verunreinigungen oder Beschädigungen des Bodens und/oder angrenzender Küchenmöbelteile am Aufstellungsort der Geschirrspülmaschine weitgehend vermieden. Wenn das Frischwasser im Füllreservoir nach Abschluss des letzten Wärmepumpenbetriebs wie z.B. beim Klarspülgang stark, insbesondere auf weniger als 4° C, bevorzugt unter 0° C abgekühlt worden ist, und zu Eiswasser/Festeis geworden ist, so verzögert das dann ebenfalls unter seine Phasenwechseltemperatur abgekühlte und erstarrte PCM die Erwärmung des Kaltwassers oder Eiswassers/Festeises im Füllreservoir durch die aus dem Spülbehälter entweichende Verlustwärme im Vergleich zu einem Füllreservoir ohne PCM. Dies ist für den spülgangabschließenden Trocknungsgang günstig.

Es kann insbesondere bereits ausreichend sein, wenn das Füllreservoir nur an seiner dem Spülbehälter zugewandten Wandung außenseitig und/oder innenseitig zumindest eine thermische Isolations- Schicht bzw. -Lage, insbesondere aus PCM aufweist. An seinen übrigen Wandungen kann eine thermische Isolierung, insbesondere PCM- Material ggf. weggelassen sein. Dies spart Isolationsmaterial ein und kann konstruktiv und montagetechnisch günstig sein. Es ist somit auf einfache Weise zwischen den Innenraum des Spülbehälters und dem Innenraum des Füllreservoirs ein erfindungsgemäßes schwach thermisch koppelndes Isolationssystem bereitgestellt.

Schließlich kann es zusätzlich oder unabhängig hiervon auch zweckmäßig sein, wenn im Inneren des Füllvolumens des Füllreservoirs mindestens ein PCM-Element bzw. -Bauteil untergebracht ist, dessen Phasenwechseltemperatur zweckmäßigerweise höher als die von Wasser, insbesondere zwischen 3 °C und 20° C, gewählt ist. Das PCM-Element ist bei Vollbefüllung des Füllreservoirs mit Wasser von diesem vorzugsweise rundum umgeben. Dadurch lässt sich besonders günstig das Füllreservoir auf ein höheres Temperaturniveau als ohne PCM heben, so dass der COP der Wärmepumpe verbessert ist.

Als PCM- Material können insbesondere Paraffine gewählt sein. Es ist zweckmäßigerweise in eine rundum dichte Hülle eingeschlossen, so dass es bei Überschreiten seiner Phasenwechseltemperatur, d.h. im flüssigen Zustand nicht auslaufen kann.

Zusätzlich oder unabhängig zu vorstehendem vorteilhaftem Ausführungsbeispiel kann es zweckmäßig sein, wenn für das Wärmedämmelement, das zwischen dem Spülbehälter und dem außen angebrachten Füllreservoir vorgesehen ist, ein PCM-Material verwendet ist, d.h. verallgemeinert ausgedrückt ist bei dieser vorteilhaften Variante zwischen der dem Spülbehälter zugewandten Wandung des Füllreservoirs und der dem Füllreservoir zugewandten Wandung des Spülbehälters zumindest eine Lage oder Schicht aus PCM eingefügt. Für das PCM ist die Schmelztemperatur vorteilhaft höher als die von Wasser und niedriger als die Temperatur im Spülbehälter am Ende der Aufheizzeitdauer des jeweiligen Teilspülgangs mit aufzuheizendem Spülwasser gewählt. Dies verhilft dem Füllreservoir zu einem höheren Temperaturniveau, was vorteilhaft zu einem höheren COP der Wärmepumpe führt. Darüber hinaus ist dies wie bereits oben erläutert auch günstig für den Trocknungsgang, da die Wandung des Spülbehälters, an der das Füllreservoir angebracht ist, länger ausreichend kühl für eine an ihr gewünschte Kondensation von Feuchtigkeit aus der feucht-warmen Luft im Spülbehälter beim Trocknungsgang gehalten werden kann. Eine thermische Isolierung, insbesondere eine PCM- Ummantelung des Füllreservoirs kann dann ggf. entfallen.

Gemäß einer vorteilhaften Weiterbildung der Erfindung kann die Wärmepumpe derart ausgebildet und/oder insbesondere mittels einer Kontrolleinrichtung derart betrieben sein, dass am Ende des mittels der Wärmepumpe durchgeführten Aufheizzeitabschnitts eines Teilspülgangs eine im Spülbehälter vorhandene Spülbadmenge an Wasser auf eine geforderte Mindesttemperatur unter Zuhilfenahme des Verflüssigers der Wärmepumpe erwärmt und das Frischwasser im Füllreservoir mittels des Verdampfers der Wärmepumpe auf eine Temperatur im Bereich zwischen - 4 °C und + 10°C abgekühlt ist, insbesondere zwischen 10% und 90 % des maximalen Füllvolumens an Wasser, insbesondere Frischwasser, im Füllreservoir in den gefrorenen Zustand gebracht ist. Dann kann durch die Wärmepumpe sowohl die sensible Wärme als auch größtenteils die latente Wärme aus der im Füllreservoir vorhandenen Wassermenge abgepumpt und in den Spülbehälter hineingepumpt werden. Auf diese Weise kann ein relativ kleines Volumen des Füllreservoirs, vorzugsweise 2 l - 10 l Fassungsvolumen, genügen, um mit der Wärmepumpe die im Spülbehälter für den jeweiligen Teilspülgang vorhandene Wassermenge auf eine gewünschte, vorgegebene Temperatur aufzuheizen.

Weiterhin kann es ggf. zweckmäßig sein, wenn das Füllreservoir mit dem Spülbehälter derart in thermischer Wirkverbindung steht, und/oder die Wärmepumpe derart ausgebildet und/oder insbesondere unter Zuhilfenahme einer Kontrolleinrichtung derart betrieben ist, dass die Temperatur des Frischwassers im Füllreservoir während der Zeitdauer nach dem Ende des Aufheizzeitabschnitts eines vorausgehenden Teilspülgangs, bei dem die im Spülbehälter vorhandene Wassermenge unter Zuhilfenahme des Verflüssigers der Wärmepumpe aufgeheizt worden ist, bis zum Start eines nachfolgenden Teilspülgangs, insbesondere bis zum Start eines nachfolgenden Teilspülgangs, bei dem die Wärmepumpe erneut in Betrieb genommen ist, niedriger als die Temperatur im Spülbehälter ist, und insbesondere überwiegend während dieser Zeitdauer niedriger als die Umgebungstemperatur am Standort der Haushalts- Geschirrspülmaschine ist. Dann sammelt das Füllreservoir besonders günstig Verlustwärme aus dem Spülbehälter und auch Umgebungswärme ein und kann sich bereits über diese thermisch regenerieren. Seine thermische Regenerierung mittels der Zufuhr von Frischwasser kann dann ggf. weniger häufig nötig sein oder gar ganz entfallen, so dass Frischwasser eingespart werden kann. Auch kann dann ein relativ kleines Füllvolumen des Füllreservoirs, insbesondere zwischen 2 l und 10 l genügen.

Vorteilhaft kann es in insbesondere sein, wenn das Füllreservoir mit dem Spülbehälter derart in thermischer Wirkverbindung steht, und/oder die Wärmepumpe derart ausgebildet und/oder insbesondere unter Zuhilfenahme einer Kontrolleinrichtung derart betrieben ist/sind, dass Eis/Eiswasser, das sich während des Aufheizzeitabschnitts eines vorausgehenden Teilspülgangs, bei dem die im Spülbehälter vorhandene Wassermenge unter Zuhilfenahme des Verflüssigers der Wärmepumpe aufgeheizt worden ist, im Füllreservoir aufgrund von Wärmeentzug durch den Verdampfer gebildet hat, bis zum Start eines nachfolgenden Teilspülgangs, insbesondere bis zum Start eines nachfolgenden Teilspülgangs, bei der die Wärmepumpe erneut in Betrieb genommen ist, im Wesentlichen durch Wärmetransport aus dem Spülbehälter in das Füllreservoir hinein und/oder ggf. durch Wärmetransport aus der Umgebung der Haushalts-Geschirrspülmaschine in das Füllreservoir hinein zu mindestens 25 %, insbesondere zwischen 40 % und 100 %, bevorzugt zu 100%, seines am Ende des Aufheizzeitabschnitts jenes vorausgehenden Teilspülgangs vorliegenden Eisvolumens, aufgetaut ist, und dass das aufgetaute Wasser im Füllreservoir zum Start des nachfolgenden Teilspülgangs insbesondere eine Temperatur von mindestens 0°C, bevorzugt zwischen 15°C und 30°C, aufweist. Dann kann aus dem Füllreservoir eine ausreichende Menge an flüssigem Wasser für den nachfolgenden Teilspülgang entnommen und dem Spülbehälter zugeführt werden. Insbesondere ist das Füllreservoir wieder als Wärmequelle für den erneuten Betrieb der Wärmepumpe nutzbar.

Vorteilhaft ist das Füllreservoir als offener Speicher ausgebildet, d.h. ihm wird während des jeweiligen Spülgangs, insbesondere sogar pro wasserführenden Teilspülgang, zumindest einmal gespeichertes Frischwasser über die Abführvorrichtung entnommen und ihm wird während dieses Spülgangs, insbesondere Teilspülgangs, zumindest einmal neues Frischwasser über die Zuführvorrichtung zugeführt. Durch diesen teilweisen oder vollständigen Wasseraustausch bzw. Wasserwechsel ist eine Verkeimung des Füllreservoirs mit Mikroorganismen weitgehend vermieden, wie dies ansonsten bei einem geschlossenen, mit Wasser einmalig vollgefüllten Wärmespeichertank möglich ist. Auch die Gefahr von unangenehmen Gerüchen ist bei einem offenen Speicher unkritisch. Zudem ist durch den teilweisen oder vollständigen Wasseraustausch oder Wasserwechsel in vorteilhafter Weise ggf. auch eine thermische Regenerierung des Füllreservoirs effizient möglich. Durch die ein oder mehrmalige Entnahme und Zufuhr von Frischwasser pro Spülgang, vorzugsweise durch mindestens einen Entnahme- und mindestens einen Zuführvorgang pro wasserführenden Teilspülgang, insbesondere am Ende des jeweiligen wasserführenden Teilspülgangs oder in der Übergangsphase von einem wasserführenden Teilspülgang zum nächsten Teilspülgang eines Spülgangs, kann zudem ggf. eine Wasserbewegung, insbesondere Fließdynamik bzw. Wasserströmung im Füllreservoir erzeugt, d.h. eine Konvektion erzwungen werden, wodurch es zu einer Durchmischung der neu aus der Zuführeinrichtung zufließenden Frischwassermenge und der im Füllreservoir etwaig bereits vorhandenen Wassermenge kommt. Es stellt sich somit eine Mischtemperatur für dieses Wassergemisch im Füllreservoir ein, welche zwischen der Einlauftemperatur des neu zulaufenden Frischwassers und der aktuellen Temperatur des im Füllreservoir vorhandenen Wassers liegt. Erfolgt ein Betrieb der Wärmepumpe für eine gewünschte Aufheizzeitdauer eines Teilspülgangs und wird dadurch mittels des Verdampfers der im Füllreservoir enthaltenden Wassermenge Wärmeenergie entzogen, so wird die Wassermenge im Füllreservoir abgekühlt und insbesondere zur Nutzung der im Wasser gespeicherten latenten Wärmeenergie Eis erzeugt. Wird nun Frischwasser in das Füllreservoir mittels der Zuführvorrichtung zumindest einmal während der Zeitdauer des Wärmeentzugs mittels des Verdampfers eingelassen, so kann das Gefrieren der im Füllreservoir vorhandenen Wassermenge verzögert, oder falls sich bereits Eiswasser/Festeis gebildet hat, dieses aufgetaut, d.h. regeneriert werden. Durch die Zufuhr von Frischwasser kann also das Füllreservoir mit thermischer Energie neu aufgeladen bzw. aufgefrischt werden. Für den Entzug einer bestimmten gewünschten thermischen Wärmeenergiemenge durch die Wärmepumpe kann durch die Zufuhr von Frischwasser das Speichervolumen des offenen Füllreservoirs für Wasser kleiner dimensioniert werden als dies bei einem geschlossenen Wassertank der Fall wäre.

Besonders vorteilhaft kann es sein, wenn das Füllreservoir als Überlaufspeicher ausgebildet ist. Wird also dem Füllreservoir neues Frischwasser über die Frischwasser-Zuführvorrichtung zugeführt, so läuft das Füllreservoir über und Wasser läuft von selbst aus ihm über die Abführvorrichtung in den Spülbehälter. Es findet dabei im Füllreservoir ein Wasserwechsel oder Wasseraustausch statt. Durch eine solche Überlaufspeicherkonstruktion ist eine Pumpe oder ein Ventil in der Abführvorrichtung zur Entnahme von Wasser aus dem Füllreservoir nicht erforderlich. Außerdem bleibt das vorgesehene Füllvolumen des Füllreservoirs während des gesamten Spülgangs stets vollständig mit Wasser befüllt. Dadurch steht das Füllreservoir über die Gesamtzeitdauer des gesamten Spülgangs hinweg betrachtet in jedem wasserführenden Teilspülgang mit jeweils seinem gesamten vorgesehenen Speichervolumen entweder als Frischwasser-Befüllungsmittel für den Spülbehälter, als Wärmereservoir für die Wärmepumpe, als Auffang- bzw. Sammelmittel von Verlustwärme aus dem Spülbehälter, oder ggf. für den spülgangabschließenden Trocknungsgang als Wärmetauscher mit Kühlfunktion zur Trocknungsunterstützung bereit, d.h. er ist stets voll funktionstüchtig.

Losgelöst von der vorteilhaften Ausführungsform eines Überlaufspeichers kann es in diesem Zusammenhang verallgemeinert ausgedrückt zweckmäßig sein, wenn das Füllreservoir, seine einlaufseitige Frischwasser- Zuführvorrichtung zur Zuführung von Frischwasser in das Füllreservoir, und/oder seine auslaufseitige Frischwasser-Abführvorrichtung zur Entnahme von Frischwasser aus dem Füllreservoir derart ausgebildet ist/sind, und/oder insbesondere unter Zuhilfenahme einer Kontrolleinrichtung derart einstellbar ist/sind, dass dem Füllreservoir im Wesentlichen dieselbe Wassermenge an Frischwasser, die aus ihm für den jeweiligen wasserführenden Teilspülgang entnommen und über die Frischwasser- Abführvorrichtung in den Spülbehälter abgeführt ist, durch die Frischwasser- Zuführvorrichtung zeitlich weitgehend vollständig überlappend zu dieser Entnahme neu zugeführt ist. Dann bleibt das für das flüssige Wasser vorgesehene Füllvolumen im Füllreservoir über die Gesamtzeitdauer des jeweiligen Spülgangs hinweg betrachtet stets weitgehend konstant voll mit Wasser (unter Voraussetzung, dass das Füllvolumen im Füllreservoir zu Beginn des jeweiligen Spülgangs mit Wasser vollgefüllt ist). Das Füllreservoir, seine einlaufseitige Frischwasser-Zuführvorrichtung zur Zuführung von Frischwasser in das Füllreservoir, und/oder seine auslaufseitige Frischwasser- Abführvorrichtung zur Entnahme von Frischwasser aus dem Füllreservoir ist/sind zweckmäßigerweise derart ausgebildet, und/oder insbesondere unter Zuhilfenahme einer Kontrolleinrichtung derart einstellbar, dass das Füllreservoir während der ein oder mehreren Teilspülgänge und ggf. auch während des spülgangabschließenden Trocknungsgangs des jeweiligen Spülgangs, insbesondere über die ein oder mehreren Füll- und/oder Abpumpsequenzen des gesamten Spülgangs hinweg, stets etwa mit demselben Sollpegelstand, insbesondere maximalen Sollpegelstand, der dem maximalen Flüssigkeits- Füllvolumen des Füllreservoirs zugeordnet ist, mit Frischwasser, gefüllt ist.

Zweckmäßig kann es nach einer weiteren Ausführungsvariante sein, wenn das Füllreservoir, seine einlaufseitige Frischwasser- Zuführvorrichtung zur Zuführung von Frischwasser in das Füllreservoir, und/oder seine auslaufseitige Frischwasser-Abführvorrichtung zur Entnahme von Frischwasser aus dem Füllreservoir derart ausgebildet ist/sind, und/oder insbesondere unter Zuhilfenahme einer Kontrolleinrichtung derart einstellbar ist/sind, dass mit der Entnahme von Frischwasser aus dem Füllreservoir für den jeweiligen wasserführenden Teilspülgang die Zuführung von Frischwasser in das Füllreservoir, insbesondere zeitlich und/oder mengenmäßig, gekoppelt ist, insbesondere korreliert. Dies ermöglicht eine variable bzw. dynamische Beeinflussung des thermischen Speichervermögens des Füllreservoirs, dessen Auffangverhaltens hinsichtlich der aus dem Spülbehälter austretenden Verlustwärme, des thermischen Regenerationsvermögens, insbesondere Auftauverhaltens des Füllreservoirs, des Entnahmeverhaltens des Füllreservoirs zur Befüllung des Spülbehälters mit Frischwasser, und/oder dessen Funktion als Kühlmittel zur Unterstützung der Kondensationstrocknung beim jeweiligen Trocknungsgang. Verallgemeinert ausgedrückt lassen sich thermodynamische Vorgänge im Füllreservoir und/oder Spülbehälter in gezielter Weise derart beeinflussen, insbesondere kontrolliert durchführen, dass ein gefordertes Temperaturprofil im Spülbehälter und/oder im Füllreservoir über die Zeitdauer des jeweiligen Spülgangs hinweg eingehalten werden kann.

Günstig kann es vorzugsweise sein, wenn zusätzlich mindestens ein Wasserbewegungsmittel, insbesondere Strömungserzeugungsmittel, vorgesehen ist, das im Füllreservoir eine Wasserbewegung, insbesondere Wasserströmung, bevorzugt Zirkulationsströmung, erzwingt, insbesondere wenn die Wärmepumpe in Betrieb ist. Dadurch ist eine gleichmäßigere Abkühlung des gesamten Wassers im Füllreservoir durch den Verdampfer ermöglicht. Es kann ein vorzeitiges Ausgefrieren von Wasser an einzelnen lokalen Stellen im Füllreservoir wie z.B. an den Verdampferrohren vermieden werden. Dadurch kann die Gesamtgehalt an sensibler und latenter Wärme, der in der jeweiligen Gesamtwassermenge des Füllreservoirs steckt, durch den Verdampfer abgepumpt und mittels des Verflüssigers der Wärmepumpe in den Spülbehälter zur Aufheizung einer dort vorhandenen Flüssigkeitsmenge gepumpt werden. Dies ermöglicht ein gegenüber einem geschlossenen Wärmespeichertank mit stillstehendem Wasser ein kleineres Wasserspeichervolumen für das Füllreservoir, so dass dies außen am Spülbehälter der Geschirrspülmaschine unter Einhaltung deren vorgegebenen Geräteabmessungen angebracht werden kann.

Gemäß einer vorteilhaften Weiterbildung der Erfindung ist mindestens ein Detektionsmittel zum Erfassen mindestens eines Parameters, der den jeweiligen Wärmeenergiegehalt des Füllreservoirs kennzeichnet, vorgesehen. Als Parameter kann insbesondere die Temperatur im Innenraum des Füllreservoirs herangezogen werden. Zusätzlich oder unabhängig hiervon kann als Parameter auch die Temperatur im Spülbehälter dienen. Eine Kontrolleinrichtung kann mit Hilfe dieses den Wärmeenergiegehalt des Füllreservoirs charakterisierenden Parameters vorzugsweise den Arbeitsablauf, insbesondere die Einschalt- und/oder die Ausschaltzustände, der Wärmepumpe kontrollieren, insbesondere steuern und/oder regeln. Zusätzlich oder unabhängig hiervon kann die Kontrolleinrichtung die thermodynamischen Vorgänge im Füllreservoir und/oder im Spülbehälter in gezielter Weise beeinflussen. So kann sie z.B. vorgeben, zu welchen Zeiten welche Frischwassermenge in das Füllreservoir eingefüllt und/oder welche Wassermenge aus dem Füllreservoir entnommen wird.

Energetisch vorteilhaft kann es insbesondere sein, wenn während des vorgegebenen Aufheizzeitabschnitts des Reinigungsgangs und während des vorgegebenen Aufheizzeitabschnitts des Klarspülgangs des jeweilig durchzuführenden Spülgangs ausschließlich die Wärmepumpe zum Erwärmen von Spülflüssigkeit im Spülbehälter vorgesehen ist.

Zu einer Verkürzung der jeweiligen Aufheizzeitdauer oder zur Erreichung einer jeweilig geforderten Wirktemperatur während des jeweiligen wasserführenden Teilspülgangs mit aufzuheizender Spülflüssigkeit wie z.B. des Reinigungs- oder Klarspülgangs kann es ggf. zweckmäßig sein, wenn zusätzlich, d.h. parallel zur Wärmepumpe eine elektrische Heizung, insbesondere Wasserheizung, vorgesehen ist, die durch eine Kontrolleinrichtung zusätzlich zur Wärmepumpe zum Erwärmen von Spülflüssigkeit im Spülbehälter auf eine geforderte Mindesttemperatur in Betrieb nehmbar ist, oder die durch eine Kontrolleinrichtung erst nach der Aufheizzeitdauer der Wärmepumpe nach deren Ausschalten zum Nacherwärmen von Spülflüssigkeit auf eine geforderte Mindesttemperatur im Spülbehälter in Betrieb nehmbar ist. Die zusätzliche Heizung kann hinsichtlich ihrer elektrischen Leistungsaufnahme und Wärmeabgabe kleiner dimensioniert sein als im Fall einer herkömmlichen Geschirrspülmaschine, die keine Wärmepumpe sondern nur eine konventionelle Wasserheizung aufweist.

Die Erfindung betrifft auch ein erfindungsgemäßes Verfahren:
Verfahren zum Waschen von Spülgut im Spülbehälter einer Haushalts-Geschirrspülmaschine, die insbesondere nach mindestens einem der vorhergehenden Ansprüche ausgebildet ist, in ein oder mehreren wasserführenden Teilspülgängen und zum anschließenden Trocknen des Spülguts in mindestens einem nachfolgenden Trocknungsgang eines durchzuführenden Spülgangs,
- wobei eine für den jeweilig durchzuführenden Teilspülgang im Spülbehälter geforderte Wassermenge teilweise oder ganz aus zumindest einem außen am Spülbehälter angebrachten Füllreservoir, dessen Einlauf mit einer einlaufseitigen Frischwasser- Zuführvorrichtung zur Befüllung mit Frischwasser aus einem Frischwassernetz verbunden ist, und dessen Auslauf mit einer auslaufseitigen Frischwasser- Abführvorrichtung zur Entnahme einer für den jeweilig durchzuführenden Teilspülgang jeweils geforderten Frischwassermenge aus dem Füllreservoir und zu deren Zuführung in den Spülbehälter verbunden ist, entnommen und dem Spülbehälter zugeführt wird,
- wobei für zumindest einen der Teilspülgänge, für dessen Wassermenge im Innenraum des Spülbehälters eine Erwärmung auf eine Mindesttemperatur gefordert ist, Wärmeenergie mittels des Verdampfers einer Wärmepumpe aus dem im Füllreservoir gespeicherten Frischwasser entzogen und Wärmeenergie mittels des Verflüssigers der Wärmepumpe in den Innenraum des Spülbehälters eingespeist wird,
- und wobei durch ein zwischen dem Innenraum des Spülbehälters und dem Innenraum des Füllreservoirs vorgesehenes ein- oder mehrlagiges Isolationsmaterialsystem ein Wärmestrom aus dem Spülbehälter verringert wird.

Sonstige Weiterbildungen der Erfindung sind in den Unteransprüchen wiedergegeben.

Die vorstehend erläuterten und/oder in den Unteransprüchen wiedergegebenen vorteilhaften Aus- und Weiterbildungen der Erfindung können dabei - außer z.B. in den Fällen eindeutiger Abhängigkeiten oder unvereinbarer Alternativen - einzeln oder auch in beliebiger Kombination zur Anwendung kommen.

Die Erfindung und ihre vorteilhaften Aus- und Weiterbildungen sowie deren Vorteile werden nachfolgend anhand von Ausführungsbeispiele darstellenden Zeichnungen näher erläutert. Es zeigen, jeweils in einer schematischen Prinzipskizze:
- Figur 1: in schematischer Frontansicht ein erstes vorteilhaftes Ausführungsbeispiel einer erfindungsgemäß ausgebildeten Geschirrspülmaschine mit einem Frischwasser- Füllreservoir als Wärmespeicher, an den einer Wärmepumpe angekoppelt ist,
- Figur 2: Zeitdiagramme für verschiedene Komponenten der Geschirrspülmaschine nach Figur 1 zur Veranschaulichung des Verlaufs des Spülgangs eines durchzuführenden Geschirrspülprogramms,
- Figuren 3, 4: zwei vorteilhafte Abwandlungen der Geschirrspülmaschine von Figur 1,
- Figur 5: Zeitdiagramme für verschiedene Komponenten der Geschirrspülmaschine nach Figur 4 zur Veranschaulichung des Verlaufs des Spülgangs eines durchzuführenden Geschirrspülprogramms,
- Figuren 6 - 9: weitere vorteilhafte Modifikationen der Geschirrspülmaschine nach Figur 1,
- Figur 10: ein Diagramm zur Charakterisierung des Wärmedurchgangsverhaltens des thermischen Isolationsmaterialsystems zwischen dem Spülbehälter und einem außen an diesem angebrachten Füllreservoir, und
- Figur 11: das Füllreservoir der Geschirrspülmaschine von Figur 1 in Seitenansicht.

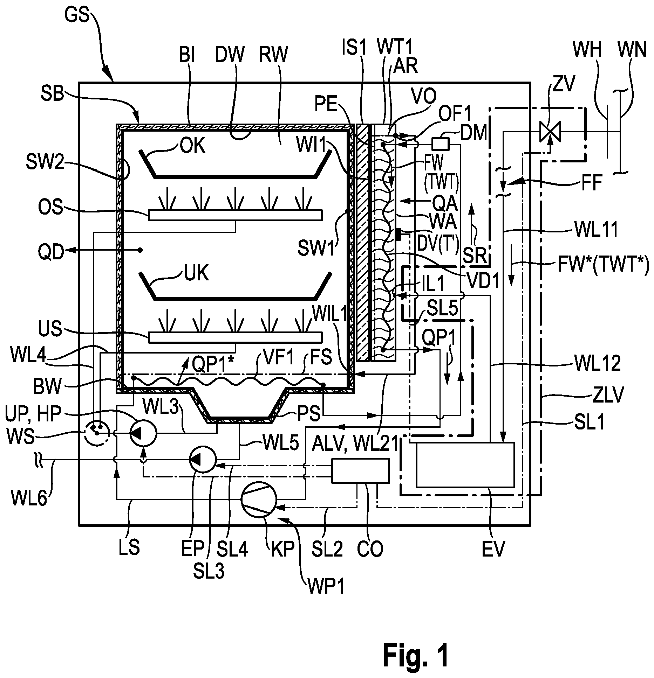

In den Figuren 1 - 11 sind Elemente mit gleicher Funktion und Wirkungsweise jeweils mit denselben Bezugszeichen versehen. Dabei sind nur diejenigen Bestandteile einer Haushalts- Geschirrspülmaschine mit Bezugszeichen versehen und erläutert, welche für das Verständnis der Erfindung erforderlich sind.

Figur 1 zeigt in schematischer Frontdarstellung bei geöffneter Fronttür ein erstes Ausführungsbeispiel einer Haushalts- Geschirrspülmaschine GS, die nach dem erfindungsgemäßen Prinzip ausgebildet ist. Ihre frontseitige Tür ist hier der Einfachheit der Darstellung halber weggelassen. Die Geschirrspülmaschine GS weist einen Spülbehälter SB auf. Dieser ist vorzugsweise aus Metall, insbesondere Edelstahl hergestellt. Er ist hier kastenförmig ausgebildet und umfasst eine erste Seitenwand SW1 und eine zweite in Breitenrichtung gegenüberliegende Seitenwand SW2, eine Deckenwand DW und eine dieser in Höhenrichtung gegenüberliegende Bodenwand BW, sowie in Tiefenrichtung gesehen eine Rückwand RW. Die Bodenwand BW weist einen Pumpensumpf bzw. einen Sammelbereich PS auf, in dem sich Spülflüssigkeit, die von ein oder mehreren Sprüheinrichtungen OS, US im Innenraum des Spülbehälters SB versprüht wird, zusammenlaufen bzw. sammeln kann. Der Pumpensumpf bzw. Pumpentopf PS ist vorzugsweise als schachtartige Wanne ausgebildet, die gegenüber dem übrigen etwa horizontalen Bereich der Bodenwand BW tiefer liegt. Vom Pumpensumpf PS führt eine erste Verbindungsleitung WL5 zu einer Entleerungs- bzw. Abwasserpumpe EP, mittels der sich bei Bedarf Spülflüssigkeit aus dem Spülbehälter SB über eine Abwasserleitung WL6 abpumpen lässt. Vom Pumpensumpf PS führt eine zweite Verbindungsleitung WL3 zu einer Umwälz- bzw. Zirkulationspumpe UP. Mit deren Hilfe lässt sich Spülflüssigkeit aus dem Spülbehälter SB ansaugen und über ein oder mehrere Leitungsrohre WL4 an ein oder mehrere Sprüheinrichtungen OS, US verteilen.

Ggf. ist dafür in Strömungsrichtung betrachtet nach der Umwälzpumpe UP eine Wasserweiche WS vorgesehen. Diese ist in der Figur 1 strichpunktiert mit einem Schaltersymbol angedeutet. Sie ermöglicht es, den Ausgang der Umwälzpumpe UP mit dem Eingang des Leitungsrohrs WL4 zu einer unteren Sprüheinrichtung US und mit dem Eingang des Leitungsrohrs WL4 zu einer oberen Sprüheinrichtung OS - je nach Spülgangablauf - selektiv oder gemeinsam fluidisch zu verbinden. Die untere Sprüheinrichtung US und die obere Sprüheinrichtung OS sind vorzugsweise durch rotierend gelagerte Sprüharme gebildet. Sie versprühen während des Betriebs der Umwälzpumpe Spülflüssigkeit im Innenraum des Spülbehälters SB. Ggf. kann ausgehend von der Wasserweiche WS zumindest ein weiteres Leitungsrohr zu einer weiteren Sprüheinrichtung wie z.B. zu einer Dachbrause oder einer sonstigen Flüssigkeitsausstoßeinrichtung wie z.B. zu einer Düse oder dergleichen vorgesehen sein.

Im Innenraum des Spülbehälters SB ist mindestens ein Aufnahmekorb für zu reinigendes Spülgut wie z.B. Geschirr, Gläser und/oder Besteck untergebracht, der in Tiefenrichtung (hier senkrecht zur Zeichenebene von Figur 1) aus dem Spülbehälter zur Entladung oder Beladung herausfahrbar und zur Reinigung in den Spülbehälter hineinbewegbar ausgebildet ist. Hier im Ausführungsbeispiel von Figur 1 ist ein unterer Geschirrkorb UK der unteren Sprüheinrichtung US und ein oberer Geschirrkorb OK der oberen Sprüheinrichtung OS zugeordnet. Ggf. kann oberhalb des oberen Geschirrkorbs OK eine heraus- und hineinschiebbare Besteckschublade vorgesehen sein, der z.B. eine Dachbrause an der Deckenwand DW zur Besprühung mit Spülflüssigkeit zugeordnet ist. Eine solche Besteckschublade und Dachbrause sind hier der Übersichtlichkeit halber weggelassen worden.

Zur Entdröhnung des Spülbehälters sind ein oder mehrere Wandungen des Spülbehälters SB, insbesondere die Seitenwände SW1, SW2 und die Bodenwand BW, jeweils außenseitig mit einer Belagschicht BI, insbesondere Bitumenmatte, versehen.

Außen auf der Belagschicht BI der ersten Seitenwand SW1 ist ein thermisches Wärmedämmelement IS1 kontaktierend aufgebracht. Außen auf diesem ist flächig kontaktierend ein Füllreservoir bzw. Füllbehälter WT1 vorgesehen. Zwischen der dem Spülbehälter SB zugewandten Innenwand WI1 des Füllreservoirs WT1 und der mit der Belagschicht BI versehenen Seitenwand SW1 ist das Wärmedämmelement IS1 zusätzlich eingefügt. Es ist somit zwischen dem Innenraum des Spülbehälters SB und dem Innenraum des Füllreservoirs WT1 ein mehrlagiges thermisches Isolationsmaterialsystem vorhanden.

Diese thermische Isolationsmaterialsystem weist insgesamt betrachtet vorzugsweise einen Wärmedurchgangswiderstand R_{T} von mindestens 0,02 (K m²)/W, insbesondere zwischen 0,1 (K m²)/W und 1 (K m²)/W, auf. Dadurch ist zum einen eine ausreichende thermische Barriere oder Bremse für die während eines Teilspülgangs mit aufzuheizender Spülflüssigkeit in den Innenraum des Spülbehälters eingebrachte Wärmeenergie bereitgestellt, d.h. diese bleibt für die Zeitdauer des Teilspülgangs so im Innenraum des Spülbehälters erhalten, dass ein für diesen Teilspülgang gefordertes Profil des zeitlichen Temperaturverlaufs im Innenraum des Spülbehälters eingehalten werden kann. Dieses Profil entspricht vorzugsweise etwa dem zeitlichen Temperaturverlauf desselben Teilspülgangs bei einer konventionell konstruierten Geschirrspülmaschine (ohne Wärmepumpe). Zum anderen reicht die schwache thermische Kopplungswirkung des Isolationsmaterialsystems aus, beim spülgangabschließenden Trocknungsgang die Wandung des Spülbehälters, an der außen das Füllreservoir angebracht ist, für eine gewünschte Kondensationstrocknung ausreichend gegenüber der Luft und/oder dem Spülgut im Spülbehälter abzukühlen, wenn das Füllreservoir zuvor beim dem Trocknungsgang unmittelbar vorausgehenden Teilspülgang, wie z.B. Klarspülgang, durch den Wärmepumpenbetrieb gekühlt wird. Dies gilt erst recht, wenn die Wärmepumpe beim Trocknungsgang weiter betrieben wird, d.h. eingeschaltet ist.

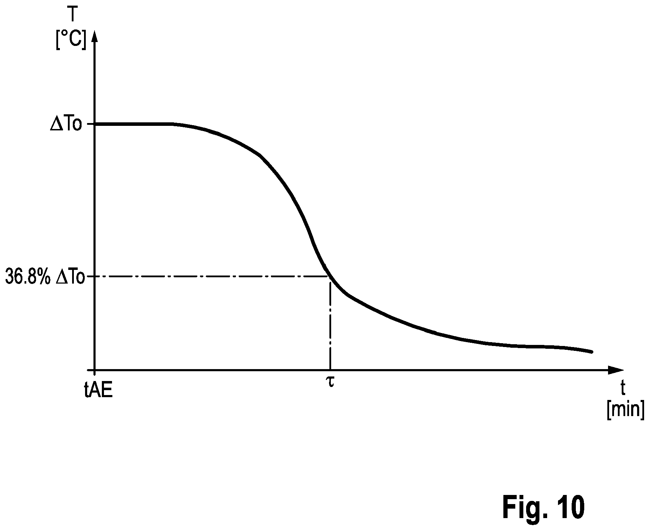

Für die Energiebilanz eines Spülgangs ist es vorzugsweise günstig, wenn das Füllreservoir mit dem Spülbehälter derart in thermischer Wirkverbindung steht, insbesondere wenn der Innenraum des Spülbehälters und der Innenraum des Füllreservoirs durch ein diese voneinander trennendes Isolationsmaterialsystem derart thermisch schwach aneinander gekoppelt sind, und das Flüssigkeits- Gesamtfüllvolumen des Füllreservoirs derart gewählt ist, dass sich aus dem Produkt des Wärmewiderstands Rth (Einheit: K/W) des Isolationsmaterialsystems zwischen dem Innenraum des Spülbehälters und dem Innenraum des Füllreservoirs sowie der Wärmekapazität Cth (Einheit: (W sec)/K) der im Füllreservoir gespeicherten Wassermenge eine thermische Zeitkonstante τ (Einheit: min (Minuten)) zwischen 5 min (Minuten) und 60 min, insbesondere zwischen 10 min und 30 min, für den Transfer von Wärme aus dem Spülbehälter in das Füllreservoir ergibt. Die Zeitkonstante τ gibt ein einfaches Maß bzw. eine Richtgröße dafür an, nach welcher Zeit sich eine in den Spülbehälter eingebrachte Wärmemenge über das thermische Isolationsmaterialsystem in das Füllreservoir (durch Wärmetransport) selbst entlädt. Nach der Zeitdauer τ ist nach einer ersten Abschätzung die Differenz zwischen der Temperatur im Spülbehälter und der Temperatur im Füllreservoir auf etwa 37% ihres Anfangswerts, der am Ende eines Aufheizzeitabschnitts für einen wasserführenden Teilspülgang vorliegt, gesunken. Dieses Wärmedurchgangsverhaltens des thermischen Isolationsmaterialsystems zwischen dem Spülbehälter und einem außen an diesem angebrachten Füllreservoir veranschaulicht die Figur 10. Der anfängliche Temperaturunterschied ΔT₀ zwischen der Temperatur im Spülbehälter und der Temperatur im Füllreservoir sinkt annäherungsweise nach der exponentiellen Funktion ΔT = ΔT₀ e^{(-t/τ)}. Zum Zeitpunkt τ ist nur noch ein Anteil von 36,8% des ursprünglichen Temperaturunterschieds ΔT₀ vorhanden.

Der Behälter des Füllreservoirs WT1 ist als Hohlraumkörper flach kasten- oder quaderförmig ausgebildet. Dieser kann insbesondere aus Kunststoff hergestellt sein. Er weist vorzugsweise ein Fassungsvermögen bzw. maximales Füllvolumen zwischen 2 l und 10 l auf. Der seinem maximalen Füllvolumen zugeordnete Pegelstand ist in der Figur 1 strichpunktiert eingezeichnet und mit VO bezeichnet. Das Füllreservoir deckt mindestens 50%, insbesondere zwischen 70% und 100%, der Gesamtfläche der ihm jeweils zugeordneten Wandung SW1, hier im Ausführungsbeispiel von Figur 1 bevorzugt im Wesentlichen die Gesamtfläche der ihm zugeordneten Wandung SW1 außen ab. Das Wärmedämmelement IS1 bedeckt zweckmäßigerweise zumindest etwa dieselbe Außenfläche der mit der Belagschicht BI versehenen Seitenwand SW1 des Spülbehälters. In der Frontansicht von Figur 1 ist im unteren Bereich der Seitenwand SW1 des Spülbehälters ein Wassereinlass, d.h. eine Einlassöffnung WIL1 für Frischwasser aus dem Füllreservoir WT1 vorgesehen. Dort ist zweckmäßigerweise eine Freisparung im Füllreservoir WT1 vorgesehen. Im Ausführungsbeispiel von Figur 1 hängt das Füllreservoir WT1 oberhalb dieses Wassereinlasses WIL1 und erstreckt sich bis etwa zur Deckenwand DW des Spülbehälters.

An den Einlass IL1 des Füllreservoirs WT1 ist eine Frischwasser- Zuführeinrichtung ZLV angeschlossen. Der Wassereinlass IL1 ist dabei vorzugsweise im unteren Bereich, insbesondere im Bereich des Grundes des Füllreservoirs vorgesehen. Die Zuführeinrichtung ZLV umfasst eine, vorzugsweise geräteseitige, Zuführleitung WL11, die insbesondere an einen Wasserhahn WH eines hausseitigen Frischwassernetzes WH anschließbar ist. In der Zuführleitung WL11 ist ein Einlassventil ZV oder ein sonstiges Durchlasssteuermittel vorgesehen, mit der sich der Einlauf bzw. die Zufuhr von Frischwasser FW* aus dem Frischwassernetz WH in die Geschirrspülmaschine GS hinein regulieren lässt. In der Zuführleitung WL11 kann insbesondere eine freie Fließstrecke FF vorgesehen sein, die ein Rücksaugen von Spülflüssigkeit aus dem Spülbehälter in das Frischwassernetz zuverlässig verhindert. Alternativ kann das Einlassventil ZV in der oder im Bereich der Einlassöffnung IL1 des Füllreservoirs vorgesehen sein. Bei geöffnetem Einlassventil ZV gelangt Frischwasser FW* über die Zuführleitung WL11 zu seiner Entkalkung bzw. Enthärtung in eine Enthärtungsanlage EV. Von dort strömt es über eine Zuführleitung WL12 zum Einlass IL1 des Füllreservoirs bzw. Füllbehälters und in dieses hinein.

Das Füllreservoir WT1 weist einen Auslass OF1 auf, an den eine Abführvorrichtung ALV angeschlossen ist. Der Wasserauslass OF1 ist dabei vorzugsweise im oberen Bereich des Füllreservoirs WT1 vorgesehen. Seine Unterkante bzw. sein unterer Rand liegt in etwa auf demselben Niveau bzw. in derselben Höhe wie der Soll -Füllstandpegel oder etwas oberhalb des Soll-Füllstandpegels VO, der vom Frischwasser bei einer Vollbefüllung des im Füllreservoir bereitgestellten Soll-Füllvolumens erreicht wird. Die Abführvorrichtung ALV weist hier im Ausführungsbeispiel eine Abführleitung WL21 auf, die den Auslass OF1 des Füllreservoirs WT1 mit dem Wassereinlass WIL1 des Spülbehälters SB1 verbindet.

Es ist eine Wärmepumpe WP1 vorgesehen, deren Verdampfer VD1 mit dem Füllreservoir WT1 zum Entzug von Wärme aus dem dort zwischengespeicherten Frischwasser FW thermisch gekoppelt ist und deren Verflüssiger VF1 zur Einspeisung von Wärme in den Innenraum des Spülbehälters SB dient. Die Wärmepumpe WP1 umfasst dabei ein Zirkulationsleitungssystem LS für ein fluidisches Kältemittel. In Strömungsrichtung SR des Kältemittels betrachtet ist nach dem Verdampfer VD1 und vor dem Verflüssiger VF1 ein Kompressor oder ein sonstiges Druckerzeugungsmittel KP in der Zirkulationsleitung LS vorgesehen. In Strömungsrichtung SR des Kältemittels betrachtet ist/sind vor dem Verdampfer VD1 ein Druckminderungsmittel DM, wie z.B. ein Expansionsventil und/oder ein Kapillarröhrchen, zum Entspannen des Kältemittels in der Zirkulationsleitung LS vorhanden.

Der Verflüssiger VF1 ist vorzugsweise im Bereich des Bodens BW im Innenraum des Spülbehälters, insbesondere im Pumpensumpf PS, verlegt. Wenn der Spülbehälter mit der für den jeweilig durchzuführenden Teilspülgang geforderten Spülbadmenge WMi mit i= VG, RG, ZG, KG befüllt worden ist, liegt der Verflüssiger VF1 vorzugsweise im Wasser bzw. der jeweiligen Spülbadmenge, so dass ein günstiger Wärmeübergang vom Verflüssiger auf die Spülbadmenge sichergestellt ist.

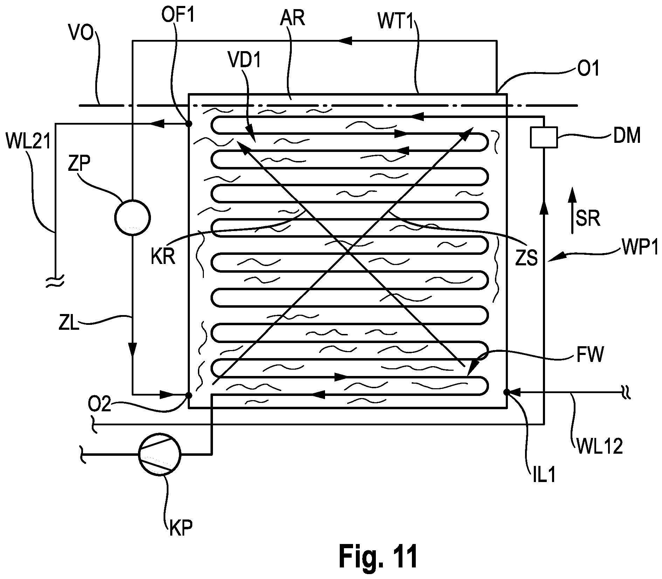

Der Verdampfer VD1 liegt insbesondere innerhalb des zur Befüllung mit flüssigem Frischwasser FW vorgesehenen Füllraums des Füllreservoirs, d.h. er taucht in das im Füllbehälter gespeicherte Frischwasser FW ein. Vorzugsweise erstrecken sich die Röhrchen des Verdampfers VD1 im Wesentlichen über die gesamte Breite und Höhe der vom Füllreservoir umgrenzten Fläche der Seitenwand SW1. Dies ist in der Figur 11 veranschaulicht, die das Füllreservoir WT1 in einer Seitenansicht, d.h. von der Seite her betrachtet bei Blickrichtung senkrecht zur Seitenwand SW1 zeigt. Der Verdampfer VD1 entzieht der im Füllreservoir WT1 eingefüllten Frischwassermenge Wärmeenergie QP1. Diese kann die sensible Wärme und/oder latente Wärme der Frischwassermenge beinhalten, die im Füllbehälter gespeichert ist.

Das Füllreservoir WT1 ist als offener Wasserspeicher und nicht als geschlossener Wasserspeichertank ausgebildet. Der offene Wasserspeicher ist insbesondere dadurch gekennzeichnet, dass er pro Spülgang ein oder mehrmals mit vorzugsweise entkalktem Frischwasser FW* der Einlauftemperatur TWT* über die Frischwasser- Zuführvorrichtung ZLV befüllt wird, und dass aus ihm ein oder mehrmals eine für den jeweils durchzuführenden Teilspülgang eines Spülgangs geforderte Frischwassermenge FW entnommen und über die Abführvorrichtung ALV dem Spülbehälter SB zur dortigen Nutzung für den jeweils durchzuführenden Teilspülgang zugeführt wird.

Besonders vorteilhaft kann es sein, wenn das Füllreservoir wie hier im Ausführungsbeispiel von Figur 1 als Überlaufspeicher ausgebildet ist. Wird also dem Füllreservoir WT1 neues, entkalktes Frischwasser FW* über die Frischwasser-Zuführvorrichtung ZLV durch seine untere Einlassöffnung IL1 zugeführt, so steigt der Wasserpegel des Mischwassers, das aus der bereits im Füllreservoir vorhandenen Wassermenge und der neu zugeführten Frischwassermenge gebildet ist, über die Unterkante der oberen Auslassöffnung OF1 an, so dass Wasser von selbst aus der oberen Auslassöffnung OF1 über die Abführleitung WL21 der Abführvorrichtung ALV in den Spülbehälter SB hineinläuft. Es kommt also zu einem "Überlaufen" des Füllreservoirs, indem die in das Füllreservoir hineinlaufende Frischwassermenge eine entsprechende, d.h. etwa gleich große Mischwassermenge aus dem Füllreservoir über dessen obere Auslauföffnung OF1 herausdrückt. Dabei ist eine Pumpe oder ein Ventil in der Abführvorrichtung ALV zur Entnahme von Wasser aus dem Füllreservoir nicht erforderlich. Außerdem bleibt das vorgesehene Füllvolumen des Füllreservoirs während des gesamten Spülgangs stets vollständig mit Wasser befüllt. Dadurch steht das Füllreservoir WT1 über die Gesamtzeitdauer des gesamten Spülgangs SG hinweg betrachtet in jedem wasserführenden Teilspülgang wie z.B. VG, RG, ZG, KG und/oder auch während des abschließenden Trocknungsgangs TG mit jeweils seinem gesamten vorgesehenen Speichervolumen entweder als Frischwasser- Befüllungsmittel für den Spülbehälter, als Wärmereservoir für die Wärmepumpe, als Auffang- bzw. Sammelmittel von Verlustwärme aus dem Spülbehälter, und/oder ggf. für den spülgangabschließenden Trocknungsgang als Wärmetauscher mit Kühlfunktion zur Trocknungsunterstützung bereit, d.h. er ist stets voll funktionstüchtig.

Ggf. können die obere Auslauföffnung OF1 und/oder Abführleitung WL21 durch anders ausgebildete Überlaufmittel ersetzt sein, die es jeweils erlauben, dass durch das Einfüllen einer bestimmten Frischwassermenge in das Füllreservoir hinein von dieser eine adäquate, d.h. gleich große Wassermenge aus dem Füllreservoir herausgedrückt wird und in den Spülbehälter hineinläuft.

Alternativ hierzu kann ggf. in der Abführleitung WL21 oder am Ausgang, d.h. in der Auslassöffnung OF1 des Füllreservoirs ein Ablassventil vorgesehen sein. Dieses Ablassventil ist vorzugsweise über eine Steuerleitung von der Kontrolleinrichtung CO aus öffen- oder schließbar. Zur Entnahme einer bestimmten Wassermenge ΔWMi mit i= VG, RG, ZG, KG aus dem Füllreservoir WT1 wird dieses Ablassventil mittels eines Steuersignals über die Steuerleitung geöffnet, ansonsten bleibt es geschlossen. (Diese Ausführungsvariante ist der zeichnerischen Übersichtlichkeit halber in der Figur 1 weggelassen worden.) Insbesondere kann es zweckmäßig sein, wenn das Einlassventil EV und das Ablassventil von der Kontrolleinrichtung CO aus über ihre Ansteuerleitungen gleichzeitig geöffnet und geschlossen werden. Dadurch ist sichergestellt, dass das Füllreservoir WT1 über den gesamten Spülgang SG hinweg betrachtet immer bis zur vorgesehenen Füllstandshöhe VO, die dem für flüssiges Wasser maximal vorgesehenen Füllvolumen im Füllreservoir entspricht, voll ist.

Z.B. bei Erstbetriebnahme der Geschirrspülmaschine kann das vorhandene, für die Befüllung mit flüssigem Frischwasser vorgesehene Soll- Füllvolumen des Füllreservoirs WT1 vollständig mit durch die Enthärtungsanlage EV hindurchgeflossenem Frischwasser FW über die Zuführvorrichtung ZLV vollgefüllt werden. Bevor der Spülgang eines durchzuführenden Geschirrspülprogramms gestartet wird, insbesondere bevor die Wärmepumpe WP1 für einen Teilspülgang mit im Spülbehälter zu erwärmender Spülflüssigkeit in Betrieb genommen wird, ist verallgemeinert ausgedrückt zweckmäßigerweise das für flüssiges Frischwasser vorgesehene Soll- Füllvolumen des Füllreservoirs mit enthärtetem Frischwasser FW* aus der Zuführvorrichtung ZLV vollgefüllt. Der Wasserstand erreicht dabei im Füllbehälter WT1 den dem Soll-Füllvolumen für flüssiges Wasser zugeordneten Soll- Füllstandpegel. Das Soll-Füllvolumen entspricht vorzugsweise im Wesentlichen dem gesamten Innenvolumen des Füllreservoirs, das von dessen Behälterwandungen umgrenzt ist. Dann liegt der zugehörige Soll-Füllstandpegel etwa im Bereich der Deckenwandung des Füllreservoirs, d.h. im vollgefüllten Zustand ist das Füllreservoir von seinem Boden bis in den Bereich seiner Decke mit Wasser vollgefüllt. Vorteilhafterweise erstreckt sich das Füllreservoir WT1 außen auf der ggf. mit einer Belagschicht wie z.B. BI versehenen Seitenwandung wie z.B. SW1 des Spülbehälters im Wesentlichen von deren unteren Ende bis zu deren oberen Ende.

Besonders günstig kann es sein, wenn der maximale Soll- Füllstandpegel VO wie hier im Ausführungsbeispiel von Figur 1 vorteilhafterweise mit einem Freiraumabstand etwas unterhalb der Oberkante des Füllreservoirs WT1 festgelegt ist, so dass ein Freiraumvolumen AR vorhanden ist. Dieses ist zweckmäßigerweise so bemessen, dass es den Volumenzuwachs des Wassers bei Eis-/Eiswasserbildung aufnehmen kann. Oberhalb des maximal vorgesehenen Soll- Füllstandpegels VO ist im Füllbehälter WT1 somit ein zusätzlicher Freiraum AR vorgesehen, in den sich Eiswasser/Eis ausdehnen kann, das beim Betrieb der Wärmepumpe WP1 aus dem im Füllreservoir WT1 zwischengespeicherten Frischwasser FW durch den Entzug von Wärme QP1 (sensible und latente Wärme) mittels des Verdampfers VD1 ggf. erzeugt wird. Verallgemeinert ausgedrückt weist das Füllreservoir zusätzlich zum Soll- Füllvolumen, das für das, vorzugsweise mit einer Einlauftemperatur TWT* von etwa 15° C, in das Füllreservoir einlaufende, enthärtete, flüssige Frischwasser FW* vorgesehen ist, zweckmäßigerweise noch eine Raumreserve oder einen Leerraum für den Volumenzuwachs auf, um den das ursprüngliche Volumen einer gegebenen Gewichtsmenge an flüssigem Wasser bei der Phasenumwandlung zu Eiswasser/Eis zunimmt. Diese Raumreserve kann auch auf andere Art wie z.B. dadurch bereitgestellt sein, dass der Füllbehälter eine flexible bzw. elastische und damit nachgiebige Ummantelung aufweist, die sich bei Eisbildung unter der dabei wirksam werdenden Schubkraft des Eises aufweitet.

Die Geschirrspülmaschine GS weist eine, insbesondere elektronische, Kontrolleinrichtung CO auf, die ein oder mehrere Komponenten der Geschirrspülmaschine zur Durchführung von ein oder mehreren Geschirrspülprogrammen steuert und/oder regelt. Sie setzt die verschiedenen Phasen bzw. Teilprogrammschritte eines jeweilig durchzuführenden Geschirrspülprogramms in ein oder mehrere wasserführende Teilspülgänge und einen abschließenden Trocknungsgang eines Spülgangs um. Sie kann vorzugsweise als Ablaufsteuerung ausgebildet sein, die Steuerungsvorgänge ausübt, ggf. bei Bedarf aber auch Regelungsvorgänge wahrnehmen kann.

Hier im Ausführungsbeispiel von Figur 1 steht die Kontrolleinrichtung CO insbesondere über (in der Figur 1 strichpunktiert eingezeichnete) Signal- bzw. Steuerleitungen und/oder Datenleitungen mit folgenden Komponenten in Wirkverbindung:
Die Kontrolleinrichtung CO ist zur Betätigung des einlaufseitigen Einlassventils ZV der Zuführvorrichtung ZLV mit diesem über eine Signalleitung SL1 verbunden. Sie kann über die Signalleitung SL1 ein oder mehrere Steuersignale an das Einlassventil ZV senden, um insbesondere die zeitliche Abfolge von dessen Öffnungs- und/oder Schließzustände festzulegen. Darüber hinaus steuert und/oder regelt sie die Wärmepumpe WP1, insbesondere deren Kompressor KP, über mindestens eine Signalleitung SL2. Sie schickt ein oder mehrere Steuersignale über die Signalleitung SL2, um dem Kompressor vorzugsweise eine zeitliche Abfolge von Einschalt- und Ausschaltzuständen, und/oder mindestens einen sonstigen Betriebsparameter wie z.B. die Drehzahl des Kompressors KP vorzugeben. Ggf. kann die Kontrolleinrichtung CO zusätzlich oder unabhängig hiervon über eine in der Figur 1 nicht eingezeichnete Signalleitung Befehle an die Druckminderungsmittel DM übermitteln und so die Temperatur des Verdampfers VD1 beeinflussen. Weiterhin führt von der Kontrolleinrichtung CO eine Signalleitung SL3 zur Umwälzpumpe UP, um mittels ein oder mehrerer Steuersignale deren Betriebsablauf zu kontrollieren, insbesondere die Einschalt- und Ausschaltzeitpunkte der Umwälzpumpe vorzugeben und/oder die Drehzahl der Umwälzpumpe zu steuern und/oder zu regeln. Entsprechend erhält die Entleerungspumpe EP von der Kontrolleinrichtung CO über eine Signalleitung SL4 für die Kontrolle ihres Betriebsablaufs ein oder mehrere Steuersignale.

Darüber hinaus kann - wie hier im Ausführungsbeispiel von Figur 1 - mindestens ein Detektionsmittel DV zum Erfassen mindestens eines Parameters, der den jeweiligen Wärmeenergiegehalt des Füllreservoirs kennzeichnet, vorgesehen sein. Als Parameter kann insbesondere die Temperatur TWT im Innenraum des Füllreservoirs herangezogen werden. Ein zur jeweilig vorliegenden Temperatur TWT korrespondierendes Meßsignal T' kann vom Detektionsmittel DV, hier insbesondere von einem Temperatursensor, über eine (in der Figur strichpunktiert eingezeichneten) Meßleitung bzw. Datenleitung SL5 zur Kontrolleinrichtung CO übermittelt werden. Die Kontrolleinrichtung CO kann mit Hilfe dieses den Wärmeenergiegehalt des Füllreservoirs charakterisierenden Parameters vorzugsweise den Arbeitsablauf, insbesondere die Einschalt- und/oder die Ausschaltzustände, der Wärmepumpe WP1 kontrollieren, insbesondere steuern und/oder regeln. Zusätzlich oder unabhängig hiervon kann die Kontrolleinrichtung die thermodynamischen Vorgänge im Füllreservoir und/oder im Spülbehälter in gezielter Weise beeinflussen. So kann sie - z.B. durch Senden eines Steuer- oder Regelsignals über die Signalleitung SL1 an das Einlassventil ZV - vorgeben, welche Frischwassermenge für den jeweiligen wasserführenden Teilspülgang aus dem Füllreservoir entnommen und welche Frischwassermenge in das Füllreservoir nachgefüllt werden soll. Zusätzlich oder unabhängig zur Temperatur TWT der Frischwassermenge im Füllreservoir WT1 kann als Parameter, der den Wärmeenergiegehalt des Füllreservoirs - hier indirekt - kennzeichnet, die Temperatur TSB im Spülbehälter SB zur indirekten Kennzeichnung des Wärmenergiegehalts des Füllreservoirs dienen. Die Temperatur TSB kann zweckmäßigerweise mittels eines Temperatursensors im Spülbehälter ermittelt werden und ein dazu korrespondierendes Meßsignal an die Kontrolleinrichtung CO über eine Signalleitung übermittelt werden. Ein solcher dem Spülbehälter SB zugeordneter Temperatursensor sowie die zugehörige Signalleitung sind in der Figur 1 der zeichnerischen Übersichtlichkeit halber weggelassen worden.

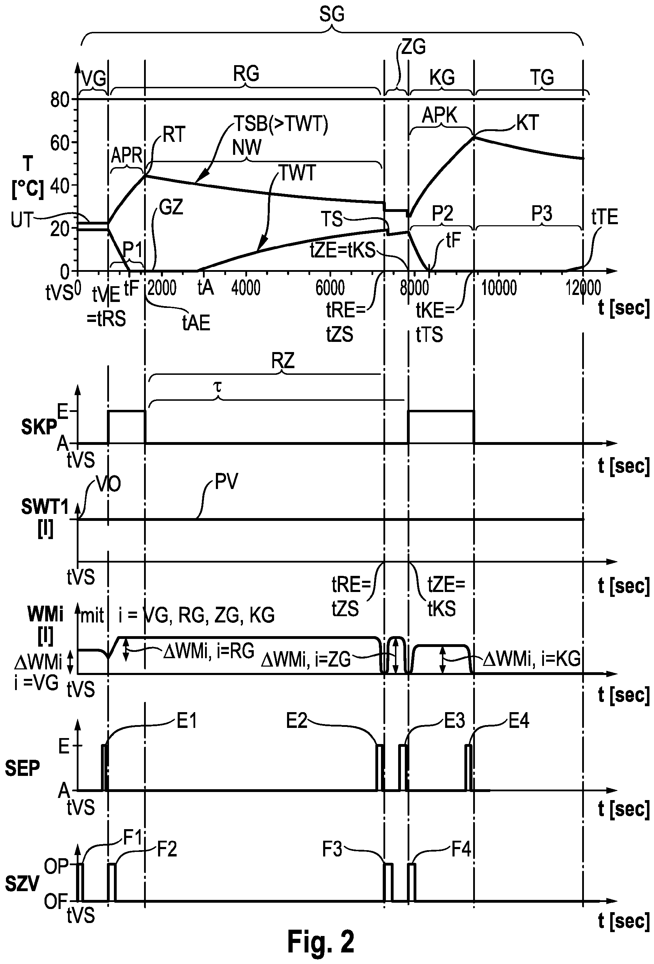

Der Spülgang eines durchzuführenden Geschirrspülprogramms umfasst vorzugsweise ein oder mehrere wasserführende Teilspülgänge zum Spülen des jeweilig im Spülbehälter zu waschenden Spülguts und einen abschließenden Trocknungsgang zum Trocknen des zuvor in den ein oder mehreren wasserführenden Teilspülgängen nass gemachten Spülguts. Bei zumindest einem wasserführenden Teilspülgang erfolgt eine Aufheizung von Spülflüssigkeit im Spülbehälter auf eine geforderte Mindesttemperatur. Insbesondere kann der jeweilige Spülgang wie z.B. SG die in zeitlicher Reihenfolge aufeinanderfolgenden wasserführenden Teilspülgänge Vorspülgang VG, Reinigungsgang RG, Zwischenspülgang ZG und Klarspülgang KG umfassen (siehe Figur 2). Für den Vorspülgang VG wird vorzugsweise bloßes, enthärtetes Wasser als Spülflüssigkeit zum Beaufschlagen des zu reinigenden Spülguts im Spülbehälter verwendet. Für den Reinigungsgang RG wird mit Reinigungsmittel versetztes, enthärtetes Wasser als Spülflüssigkeit im Spülbehälter eingesetzt. Für den Zwischenspülgang ZG genügt sauberes, enthärtetes Wasser als Spülflüssigkeit im Spülbehälter. Für den Klarspülgang KG wird enthärtetes Wasser mit Klarspülmittel, d.h. mit einem Entspannungsmittel zur Herabsetzung der Oberflächenspannung des Wassers versetzt und im Spülbehälter als Spülflüssigkeit verwendet. Ggf. können ein oder mehrere dieser Teilspülgänge, wie z.B. der Zwischenspülgang ZG oder Vorspülgang VG, entfallen oder auch mehrfach durchgeführt werden. Während des jeweiligen wasserführenden Teilspülgangs wie z.B. VG, RG, ZG, KG ist die Umwälzpumpe UP von der Kontrolleinrichtung CO mittels ein oder mehrerer Steuer- oder Regelsignale über die Signalleitung SL3 zumindest zeitweise in Betrieb gesetzt, so dass die jeweils in den Spülbehälter eingebrachte Spülflüssigkeitsmenge von den ein oder mehreren Sprüheinrichtungen wie z.B. OS, US im Innenraum des Spülbehälter SB versprüht wird. Während eines Endabschnitts des jeweiligen wasserführenden Teilspülgangs wird die Umwälzpumpe UP durch die Kontrolleinrichtung CO zweckmäßigerweise deaktiviert und die Entleerungspumpe EP durch die Kontrolleinrichtung CO aktiviert. Es ist aber auch möglich, dass sich der Betrieb der Umwälzpumpe UP und der Betrieb der Entleerungspumpe EP teilweise oder vollständig zeitlich überschneiden.

Für den Reinigungsgang RG sowie den Klarspülgang KG ist die Aufheizung der jeweilig in den Spülbehälter eingebrachten Spülflüssigkeit jeweils auf eine spezifisch zugeordnete Mindesttemperatur RT, KT gefordert, was die Bereitstellung einer dafür ausreichenden thermischen Wärmeenergiemenge durch ein Heizmittel nötig macht. Dabei dient die Aufheizung der Spülflüssigkeit beim Klarspülgang KG vorzugsweise auch dazu, das Spülgut und die Luft im Innenraum des Spülbehälters soweit zu erwärmen, dass im nachfolgenden spülgangabschließenden Trocknungsgang am Spülgut verbliebene Wassertröpfchen durch dessen Eigenwärme verdampfen und von der erwärmten Luft im Spülbehälter aufgenommen werden, und dass ein ausreichend hoher Unterschied zwischen den Temperaturen der jeweiligen Wandung des Spülbehälters und der nach dem Klarspülgang feuchtebeladenen Luft bewirkt ist, so dass Feuchtigkeit aus der Luft an der gegenüber dieser und dem Spülgut kühleren Wandung des Spülbehälters kondensiert. Bei einer konventionellen Geschirrspülmaschine ist für den jeweiligen Aufheizvorgang üblicherweise eine Wasserheizung im Flüssigkeitszirkulationskreislauf des Spülbehälters in Betrieb genommen, die nach dem Prinzip der elektrischen Widerstandsheizung arbeitet.

Zur elektrischen Energieeinsparung ist nach dem erfindungsgemäßen Prinzip nun die Wärmepumpe WP1 als Heizmittel vorgesehen. Nach einer vorteilhaften Ausführungsvariante ist nur, d.h. ausschließlich die Wärmepumpe WP1 als Heizmittel zum Aufheizen von Spülflüssigkeit im Spülbehälter vorgesehen. Sie dient der Erwärmung der Spülflüssigkeit im Spülbehälter während des Reinigungsgangs RG und während des Klarspülgangs KG eines beispielhaft durchzuführenden Spülgangs SG. Die Figur 2 zeigt für diesen Spülgang SG zeitlich passend untereinander jeweils über die Zeit t (in sec) dargestellt den Temperaturverlauf TSB im Spülbehälter SB und den diesem zugeordneten Temperaturverlauf TWT im Füllreservoir WT1, den Einschalt-/Ausschaltverlauf SKP des Kompressors KP, den Verlauf PV des Füllstandpegels an Speicherwasser FW im Füllreservoir WT1, den zeitlichen Verlauf SWT1 des Füllstands an Wasser im Füllreservoir WT1, die Spülflüssigkeitsmengen WMi mit i=VG, RG, ZG, KG für die verschiedenen Teilspülgänge VG, RG, ZG, KG im Spülbehälter, den Einschalt-/Ausschaltverlauf SEP der Entleerungspumpe EP, und den Einschalt-/Ausschaltverlauf SZV des Einlassventils ZV. Der Einschaltzustand der Entleerungspumpe ist mit E, deren Ausschaltzustand mit A bezeichnet. Entsprechend ist der Aktivbetriebszustand des Kompressors KP der Wärmepumpe mit E und dessen Ausschaltzustand mit A angegeben. Der Öffnungszustand des Einlassventils ZV ist mit OP und dessen Schließzustand mit OF symbolisiert.

Zu Beginn, d.h. zum Startzeitpunkt tVS des neu durchzuführenden Spülgangs SG ist das Füllreservoir WT1 bis zu seinem maximalen Soll- Füllstandpegel VO mit Frischwasser FW vollgefüllt. Beispielsweise sind in ihm 6 l Wasser vorhanden. Diese Befüllung ist dabei zweckmäßigerweise bereits während des letzten wasserführenden Teilspülgangs und/oder Trocknungsgangs des zeitlich vorausgehenden, früheren Spülgangs vorgenommen worden. Dadurch kann die Verweilzeit zwischen dem vorausgehenden Spülgang und dem neu durchzuführenden, nachfolgenden Spülgang SG insbesondere ausreichen, dass sich das im Füllreservoir gespeicherte Frischwasser FW durch Aufnahme von Umgebungswärme bis etwa auf Raumtemperatur UT wie z.B. 23 °C am Standort der Geschirrspülmaschine vorerwärmt hat. Für den Vorspülgang VG wird zum Startzeitpunkt tVS während einer anfänglichen Füllsequenz eine spezifisch für das Vorspülen im Spülbehälter geforderte Wassermenge WMi mit I=VG, wie z.B. zwischen 2,0 l und 3,5 l, aus dem Füllreservoir WT1 (mit z.B. ca. 23°C Umgebungstemperatur UT) in den zum Startzeitpunkt tVS noch leeren Geschirrspülerbehälter bzw. Spülbehälter SB über die Abführeinrichtung ALV entnommen, insbesondere abgelassen. Sofort nach dieser Entnahme oder bevorzugt zeitlich überlappend, insbesondere etwa zeitgleich, zu dieser Entnahme wird das Füllreservoir mit einer Nachfüllmenge an Frischwasser FW* aus der Zuführvorrichtung ZLV nachbefüllt, die vorzugsweise der aus dem Füllreservoir mittels der Abführvorrichtung ALV entnommenen Wassermenge WMi mit i=VG entspricht. Die um die entnommene Wassermenge WMi mit i=VG reduzierte Restwassermenge, die etwa auf Umgebungstemperatur UT vorerwärmt ist, wird also sofort durch eine neu zulaufende Ergänzungsmenge an Frischwasser FW* mit einer Einlauftemperatur TWT*, wie z.B. von etwa 15 ° C, ergänzt bzw. erneuert. Wenn wie hier im Ausführungsbeispiel von Figur 2 im Wesentlichen zeitgleich, d.h. gleichzeitig bzw. synchron zur Entnahme einer dem zunächst leeren Spülbehälter SB zuzuführenden Wassermenge ΔWMi mit i=VG, z.B. von etwa 3,2 l, aus dem Füllreservoir WT1 eine entsprechende, d.h. gleich große Menge an Frischwasser FW* über die Zuführeinrichtung ZLV dem Füllreservoir zugeführt wird, so bleibt die Gesamtfüllmenge an Frischwasser im Füllreservoir etwa konstant, d.h. die Füllmenge an Wasser FW im Füllreservoir weist während des Zeitabschnitts tVE - tVS des Vorspülgangs VG einen etwa konstanten Soll-Füllstandpegel VO auf. Für die Zuführung dieser Nachfüllmenge an Frischwasser FW* in das Füllreservoir wird das Einlassventil ZV mittels eines von der Kontrolleinrichtung CO über die Signalleitung SL1 geschickten Steuersignals für eine Füllphase geöffnet, welche im untersten Zeitdiagramm SZV der Figur 2 durch einen Balken F1 ab dem Zeitpunkt tVS angedeutet ist, der den Öffnungszustand OP des Einlassventils ZV für eine anfängliche Füllsequenz bzw. Befüllungszeitdauer markiert. Die Einlauftemperatur TWT* ist aufgrund der am Standort der Geschirrspülmaschine und im hausseitigen Frischwassernetz WN vorgegebenen Bedingungen üblicherweise niedriger als die Umgebungstemperatur UT und niedriger als die Temperatur TWT (> TWT*) des schon beim letzten, vorausgehenden Spülgang in das Füllreservoir eingefüllten Speicherwassers, das ja nach einer ausreichend langen Verweilzeit im Füllreservoir die Umgebungstemperatur angenommen hat. Es stellt sich eine Mischtemperatur, im vorliegenden Beispiel von z.B. ca. 19°C, ein, die zwischen der Temperatur TWT* wie z.B. von 15°C des über die Zuführvorrichtung ZLV in das Füllreservoir einlaufenden Frischwassermenge FW* und der sich auf etwa Umgebungstemperatur UT = TWT befindenden Restwassermenge im Füllreservoir liegt. Die Temperatur TWT der im Füllreservoir zwischengespeicherten Frischwassermenge FW, die sich aus der Restmenge des schon vor Beginn des Spülgangs SG im Füllreservoir vorhandenen Wassers und der Nachfüllmenge des dem Füllreservoir neu zugeführten Frischwassers FW* zusammensetzt ist somit zu Beginn tVS und auch während des Vorspülgangs VG bis zu dessen Endzeitpunkt tVE etwas niedriger als die Temperatur TSB der in den Spülbehälter SB eingelassenen Wassermenge WMi mit i=VG. Während des Vorspülens VG wird das Füllreservoir WT1 geringfügig durch die Umgebungswärme und durch die Abwärme aus dem Spülbehälter SB aufgeheizt. Dieser Zeitabschnitt mit leicht ansteigendem Abschnitt des Temperaturverlaufs TWT im Innenraum des Füllreservoirs WT1 liegt in der Figur 2 zwischen den Zeitpunkten tVE und tVS. Während der Zeitdauer bzw. Phase tVE - tVS des Vorspülgangs VG ist die Umwälzpumpe UP durch mindestens ein Steuer- oder Regelsignal, das von der Kontrolleinrichtung CO über die Signalleitung SL3 an sie übermittelt wird, zumindest zeitweise, insbesondere mit sich abwechselnden Einschalt- und Ausschaltphasen oder durchgehend, aktiviert, so dass die im Spülbehälter SB vorhandene Spülflüssigkeit WMi mit i=VG über die ein oder mehreren Sprüheinrichtungen OS, US des Flüssigkeits-Umwälzkreislaufes der Geschirrspülmaschine in den Innenraum des Spülbehälters SB versprüht wird.

Am Ende des Vorspülgangs VG wird ggf. eine Teilmenge, wie z.B. zwischen 0,5 und 1 l, oder die Gesamtmenge wie z.B. 3,2 l der im Spülbehälter für das Vorspülen VG vorhandenen Wassermenge WMi mit i=VG mittels mindestens einer abschließenden Abpumpsequenz E1 der dazu vom Ausschaltzustand A in den Einschaltzustand E gebrachten Entleerungspumpe EP über die Abwasserleitung WL6 aus dem Spülbehälter insbesondere in ein hausseitiges Abwasserrohr abgepumpt. Die Entleerungspumpe EP wird dazu durch die Kontrolleinrichtung CO mittels eines Steuersignals über die Signalleitung SL4 vom Ausschaltzustand A in den Einschaltzustand E gebracht. Entsprechend dazu wird die Entleerungspumpe EP nach dem Abschluss der Abpumpsequenz E1 zum Zeitpunkt tVE mittels eines Steuersignals über die Signalleitung SL4 wieder in ihren Ausschaltzustand gebracht. Damit ist der Vorspülgang VG zum Zeitpunkt tVE beendet. Während dieser finalen Abpumpphase E1 des Vorspülgangs VG, während der die Entleerungspumpe EP aktiv ist, ist die Umwälzpumpe UP mittels eines von der Kontrolleinrichtung CO über die Signalleitung SL3 übermittelten Steuersignals zweckmäßigerweise ausgeschaltet. Ggf. kann aber auch ein zeitlich teilweiser oder vollständig überlappender Betrieb der Umwälzpumpe UP und der Entleerungspumpe EP zum Ende des Vorspülgangs VG hin günstig sein.

Es schließt sich zum Zeitpunkt tRS = tVE der Reinigungsgang RG an. Für diesen ist eine spezifische Wassermenge WMi mit i=RG im Spülbehälter gefordert wie z. B. zwischen 3 l und 4 l, bevorzugt etwa 3,5 l, die auf eine gewünschte Ziel- bzw. Soll- Temperatur, d.h. Endtemperatur RT, insbesondere zwischen 40 und 50°C, bevorzugt von etwa 45 °C, während eines anfänglichen Aufheizzeitabschnitts APR = tAE - tRS gebracht werden soll. Es wird aus dem Füllreservoir WT1 mittels der Abführvorrichtung ALV eine Teilwassermenge ΔWMi mit i=RG entnommen und dem Spülbehälter SB zugeführt, damit dort eine für den Reinigungsgang RG gewünschte Gesamtwassermenge WMi mit i=RG vorhanden ist. Hier im Ausführungsbeispiel wird vorzugsweise etwa zeitgleich zu diesem Entnahmevorgang eine etwa gleich große Menge an Frischwasser FW* der Einlauftemperatur TWT* dem Füllreservoir WT1 mittels der Zuführvorrichtung ZLV zugeführt. Dazu wird dessen Einlassventil ZV durch die Kontrolleinrichtung CO mittels eines Steuersignals über die Signalleitung SL1 ab dem Zeitpunkt tRS für eine anfängliche Füllsequenzdauer in den geöffneten Zustand OP gebracht, was in der Figur 2 im Ablaufdiagramm SZV durch den Balken F2 angedeutet ist. Der Wasserfüllstand bleibt dadurch im Füllreservoir etwa konstant bei VO (siehe das Diagramm SWT1 in der Figur 2), d.h. das für flüssiges Wasser vorgesehene Soll- Füllvolumen im Füllreservoir ist mit Wasser voll gefüllt. Nach diesem Nachfüllvorgang stellt sich eine Mischtemperatur, hier von etwa 18°C, für die Mischwassermenge im Füllreservoir ein, die sich aus der mit der Einlauftemperatur TWT*, hier von etwa 15°C, neu zugeführten Nachfüllmenge an Frischwasser FW* und der im Füllreservoir WT1 nach der Entnahme der Teilwassermenge ΔWMi mit i=RG verbliebenen, aufgrund der Aufnahme von Umgebungswärme eine gegenüber der Einlauftemperatur TWT* höhere Temperatur TWT aufweisenden - bestenfalls bis auf Raumtemperatur UT vorerwärmten - Restwassermenge zusammensetzt.

Hier im Ausführungsbeispiel wird vorteilhafterweise zum Startzeitpunkt tRS des Reinigungsgangs RG, insbesondere spätestens nach dem Ende des Nachfüllvorgangs für das Füllreservoir WT1, der Kompressor KP der Wärmepumpe WP1 durch die Kontrolleinrichtung CO mittels eines Steuersignals über die Signalleitung SL2 eingeschaltet, d.h. in Einschaltbetrieb E genommen und für die Zeitdauer tAE - tRS des Aufheizzeitabschnitts APR betrieben, sowie zum Zeitpunkt tAE wieder in den Ausschaltzustand A gebracht. Während der Zeitdauer tAE - tRS des Aufheizzeitabschnitts APR ist die Wärmepumpe WP1 somit erstmals im Aktivbetrieb, um die Spülflüssigkeit im Spülbehälter SB auf die gewünschte Wirktemperatur bzw. Endtemperatur RT, hier vorzugsweise zwischen 40 und 45 ° C, bevorzugt auf etwa 45°C, aufzuheizen. Dies Phase ist in der Figur 2 mit P1 bezeichnet. Während dieses Aufheizzeitabschnitts APR kann der Kompressor KP nach einer ersten vorteilhaften Ausführungsvariante vorzugsweise permanent, d.h. fortlaufend eingeschaltet sein. Nach einer zweiten vorteilhaften Ausführungsvariante kann es zur Regulierung der Temperaturen am Verdampfer VD1 und am Verflüssiger VF1 der Wärmepumpe WP1 günstig sein, wenn der Kompressor KP mittels ein oder mehrerer Steuer- oder Regelsignale der Kontrolleinrichtung CO derart geschaltet, insbesondere getaktet wird, dass er während des Aufheizzeitabschnitts APR sich zeitlich abwechselnde Ausschalt- und Einschaltzeitphasen aufweist. In der Figur 2 ist im Zustandsverlauf SKP des Kompressors KP dessen Aktivbetrieb vereinfacht durch den konstanten Einschaltzustand E während des Aufheizzeitabschnitts APR gekennzeichnet.

Während des Reinigungsgangs RG ist die Umwälzpumpe UP zumindest zeitweise aktiviert. Dazu sendet die Kontrolleinrichtung CO an die Umwälzpumpe UP ein oder mehrere Steuer- oder Regelsignale über die Signalleitung SL3. Erst während eines Endabschnitts des Reinigungsgangs RG wird die Umwälzpumpe UP zweckmäßigerweise ausgeschaltet und die Entleerungspumpe EP zum teilweisen oder vollständigen Abpumpen der im Spülbehälter SB jeweilig vorhandenen Spülflüssigkeitsmenge eingeschaltet. Ggf. kann aber auch ein zeitlich teilweiser oder vollständig überlappender Betrieb der Umwälzpumpe UP und der Entleerungspumpe EP zum Ende des Reinigungsgangs hin günstig sein.

Durch diese erste Betriebsphase P1 der Wärmepumpe WP1 während des Aufheizzeitabschnitts APR wird mittels des Verdampfers VD1 Wärmeenergie QP1 aus dem im Füllreservoir WT1 gespeicherten Frischwasser FW entzogen und diese zusammen mit der für den Kompressorbetrieb aufgewandten elektrischen Energie mittels des Verflüssigers VF1 als Wärmeenergie QP1* in den Spülbehälter SB "gepumpt". Durch den Wärmeentzug mittels des Verdampfers VD1 bei laufender Wärmepumpe WP1 kühlt sich das im Füllreservoir gespeicherte Wasser FW ab, da ihm sensible und/oder auch latente Wärme entzogen wird. Diese Abkühlungsphase ist in der Figur 2 mit P1 bezeichnet. Das Speicherwasser FW im Füllreservoir kann schließlich bei vollständigem Entzug der in ihm enthaltenen latenten Wärme auch gefrieren. Das Füllreservoir bildet somit einen Eisspeicher. Hier im Ausführungsbeispiel von Figur 2 ist das Speicherwasser FW im Füllreservoir durch den Verdampfer VD1 etwa ab dem Zeitpunkt tF auf eine Temperatur TWT von etwa 0°C oder sogar darunter abgekühlt, so dass sich Eiswasser/Eis ausbildet.

Besonders energieeffizient, d.h. elektrische Energie einsparend, ist es, wenn der Aufheizvorgang für die im Spülbehälter für den Reinigungsgang RG vorgesehene Wassermenge WMi mit i=RG auf die geforderte Wirktemperatur RT allein, d.h. ausschließlich mittels der Wärmepumpe WP1 bewirkt wird. Diesen Fall veranschaulicht das Ausführungsbeispiel von Figur 2.

Zur Erreichung der jeweilig geforderten Endtemperatur RT innerhalb der vorgegebenen Aufheizzeitdauer APR= tAE - tRS kann es abweichend vom obigen Ausführungsbeispiel ggf. zweckmäßig sein, wenn zusätzlich zur Wärmepumpe WP1 eine elektrische Heizung, insbesondere Wasserheizung oder Luftheizung, vorgesehen ist, die durch die Kontrolleinrichtung CO ergänzend zur Wärmepumpe WP1 zum Aufheizen des Innenraums des Spülbehälters beim Reinigungsgang RG, insbesondere der für den Reinigungsgang RG in den Spülbehälter eingebrachten Spülflüssigkeitsmenge WMi mit i=RG, auf die geforderte Endtemperatur bzw. Wirktemperatur RT in Betrieb genommen wird. Zur Unterstützung der Aufheizung von Luft und/oder Spülflüssigkeit im Spülbehälter für den Reinigungsgang RG auf die gewünschte Endtemperatur bzw. Wirktemperatur RT kann es insbesondere vorteilhaft sein, wenn die zusätzliche elektrische Heizung teilweise oder vollständig parallel, d.h. zeitlich überlappend zur Wärmepumpe betrieben wird. Die Zusatzheizung kann dabei insbesondere auch getaktet werden. Zusätzlich oder unabhängig hiervon kann es ggf. zweckmäßig sein, wenn die Zusatzheizung durch die Kontrolleinrichtung CO erst nach einer Aufheizzeitdauer der Wärmepumpe WP1, d.h. nach deren Ausschalten, in Betrieb genommen wird, um die durch die Wärmepumpe bereits vorgeheizte Spülflüssigkeit im Spülbehälter auf die geforderte Endtemperatur RT in einer separaten Phase nachzuerwärmen. In beiden vorstehenden, vorteilhaften Ausführungsvarianten kann die zusätzliche Heizung hinsichtlich ihrer elektrischen Leistungsaufnahme und Wärmeabgabe kleiner dimensioniert werden als im Fall einer herkömmlichen Geschirrspülmaschine, die keine Wärmepumpe sondern allein eine konventionelle Wasserheizung aufweist. Dies kann trotz des zeitlich gleichzeitigen Betriebs oder trotz der zeitlich aufeinanderfolgenden Betriebsphasen von Wärmepumpe und konventioneller Heizung eine Einsparung an elektrischer Energie gegenüber einer herkömmlichen Geschirrspülmaschine (ohne Wärmepumpe und mit konventioneller Heizung) mit sich bringen.

Nach dem Aufheizzeitabschnitt bzw. nach der Aufheizzeitdauer APR des Reinigungsgangs RG wird im Ausführungsbeispiel von Figur 2 die Wärmepumpe WP1 ausgeschaltet, wenn der Innenraum des Spülbehälters SB und damit einhergehend die dort vorhandene Spülflüssigkeit die Zieltemperatur RT erreicht hat. Nach dem Zeitpunkt tAE ist der Kompressor KP durch ein Steuersignal, das ihm über die Signalleitung SL2 von der Kontrolleinrichtung CO übermittelt wird, in den Ausschaltzustand A gebracht. Für den Reinigungsgang RG ist vorzugsweise eine Ziel- bzw. Solltemperatur RT von mindestens 40 °C, insbesondere zwischen 44° C und 50° C gewählt, damit dem Wasser zugesetztes Reinigungsmittel einwandfrei zur chemischen Beseitigung von Verschmutzungen am Spülgut wirken kann.

Nach diesem Aufheizzeitabschnitt APR mit Umwälzbetrieb der Umwälzpumpe UP wird diese während einer Nachwaschphase NW etwa für eine Restzeitdauer RZ = tRE - tAE des Reinigungsgangs RG weiter betrieben, so dass die unter Zuhilfenahme der Wärmepumpe aufgeheizte Spülflüssigkeit über die ein oder mehreren Sprühvorrichtungen wie z.B. OS, US im Innenraum des Spülbehälters versprüht wird.

Alternativ ist es auch möglich, dass die Umwälzpumpe UP während des Aufheizzeitabschnitts APR ausgeschaltet oder mit einer reduzierten Drehzahl (im Vergleich zu ihrer Arbeitsbetriebsdrehzahl für den Sprühbetrieb der ein oder mehreren Sprüheinrichtungen) betrieben wird. Dadurch liegt die im Spülbehälter SB vorhandene Wassermenge zum überwiegenden Teil oder vollständig an einem Sammelort wie z.B. im Pumpensumpf PS räumlich begrenzt vor, und wird nicht im gesamten Innenraum des Spülbehälters versprüht, was ihre Aufheizung auf eine gewünschte Endtemperatur RT im Vergleich zum Fall verbessert bzw. begünstigt, insbesondere schneller oder energiesparender macht, dass ab dem Startzeitpunkt tRS des Reinigungsgangs sofort die Umwälzpumpe UP mit ihrer vorgesehenen Betriebsdrehzahl arbeitet und die Spülflüssigkeit über die ein oder mehreren Sprüheinrichtungen im gesamten Innenraum des Spülbehälters versprüht wird. Denn durch die Aufheizung der im Spülbehälter oder deren Flüssigkeitskreislauf lediglich lokal vorhandenen Wassermenge sind Wärmeverluste über die Wandungen des Spülbehälters verringert. Erst nach Abschluss des Aufheizzeitabschnitts wird bei diesem Ausführungsbeispiel die Umwälzpumpe für die Nachwaschphase NW eingeschaltet und mit der für den Sprühbetrieb der Sprüheinrichtungen erforderlichen Betriebsdrehzahl betrieben.

Nach dem Aufheizzeitabschnitt APR mit dem ersten Wärmepumpenbetrieb P1, bei dem die Spülflüssigkeitsmenge WMi mit i=RG im Spülbehälter unter Beteiligung des Verflüssigers VF1 der Wärmepumpe WP1 bis auf die gewünschte Endtemperatur RT aufgeheizt worden ist, wird der Kompressor KP der Wärmepumpe WP1 durch ein von der Kontrolleinrichtung über die Signalleitung SL2 übermitteltes Steuersignal ausgeschaltet, d.h. außer Betrieb genommen. Es folgt für die restliche Zeitdauer RZ = tRE - tAE des Reinigungsgangs RG eine Nachwaschphase NW, in der die derart aufgewärmte Spülflüssigkeitsmenge WMi mit i=RG im Spülbehälter SB mittels der eingeschalteten Umwälzpumpe UP den ein oder mehreren Sprüheinrichtungen OS, US zugeführt und über diese im Innenraum des Spülbehälters versprüht wird. Während dieser Nachwaschphase NW sind die Wärmepumpe und/oder eine sonstige Heizung, insbesondere Wasserheizung, ausgeschaltet. Dabei kommt es zu einer langsamen Abkühlung der Spülflüssigkeit im Spülbehälter, weil Wärmeenergie aus dem Spülbehälter, insbesondere über dessen Wandungen wie z.B. SW1 entweicht. In der Figur 2 fällt deshalb die Temperatur TSB im Spülbehälter ausgehend von der am Endzeitpunkt tAE des Aufheizens des Reinigungsgang RG maximal auftretenden Temperatur RT wie hier von etwa 45° C kontinuierlich bis auf einen der gegenüber niedrigeren Temperaturwert, wie hier auf etwa 30°C, am Endzeitpunkt tRE des Reinigungsgangs RG ab.

Das Wärmedämmelement IS1 zwischen der außen an der Seitenwand SW1 des Spülbehälters aufgebrachten Belagsschicht, insbesondere Bitumenschicht BI und dem auf dieser kontaktierend aufliegenden, dem Spülbehälter zugewandten Wand WI1 des Füllreservoirs WT1 ist zweckmäßigerweise derart ausgebildet, dass es als thermische Barriere bzw. Sperre oder Bremse für die während des Aufheizzeitabschnitts APR mittels des Verflüssigers VF1 der Wärmepumpe WP1 in den Spülbehälter SB eingebrachte Wärmeenergie QP1* wirkt. Verallgemeinert ausgedrückt ist zwischen dem Innenraum des Spülbehälters SB und dem Innenraum des Füllreservoirs WT1 durch die Wandung wie z.B. SW1 des Spülbehälters, auf der außen das Füllreservoir angebracht ist, durch die außen auf dieser Wandung des Spülbehälters aufgebrachten Belagschicht, insbesondere Bitumenschicht BI, durch das auf dieser Belagschicht aufliegende Wärmedämmelement IS1 sowie durch die dem Spülbehälter zugewandte Wand des Behälters des Füllreservoirs ein mehrlagiges, derart schwach thermisch koppelndes Isolationsmaterialsystem zwischen dem Innenraum des Spülbehälters und dem Innenraum des Füllreservoirs gebildet, dass während des laufenden Betriebs der Wärmepumpe WP1 (bezogen auf einen gewünschten Aufheizzeitabschnitt) mehr Wärmeenergie QP1* in den Spülbehälter SB insgesamt hineingepumpt werden kann als Wärmeenergie QD durch Wärmetransport aus dem Spülbehälter insgesamt verloren geht.

Zum anderen stellt dieses mehrlagige Isolationsmaterialsystem bzw. Wärmedämmsystem dennoch eine schwache thermische Kopplung zwischen dem Innenraum des Spülbehälters SB und dem Innenraum des Füllreservoirs WT1 derart her, dass Verlustwärme QD, die durch Transport von Wärme aus dem Innenraum des Spülbehälters durch das Isolationsmaterialsystem hindurch bedingt ist, durch das im Füllreservoir WT1 gespeicherte Frischwasser aufgefangen und durch die Wärmepumpe WP1 bei deren erneuten, insbesondere nachfolgenden zweiten Inbetriebnahme wieder in den Spülbehälter zurückgepumpt werden kann. Es lässt nur einen zeitlich verzögerten, d.h. gedrosselten bzw. reduzierten Durchgang von Wärme aus dem Spülbehälter zurück in das Füllreservoir zu. Das Füllreservoir dient also zusätzlich als Auffang- bzw. Sammelmittel für Verlustwärme QD, die über die jeweilige Wandung wie z.B. SW1 des Spülbehälters SB, an der das Füllreservoir WT1 außen angebracht ist, durch Wärmetransport entweicht. Es ist somit in vorteilhafter Weise eine Wärmeregenerierung durch einen Wärmezirkulationskreislauf ermöglicht, der das Füllreservoir als Wärmequelle, die Wärmepumpe als Transportmittel für die aus dem Füllreservoir abgepumpte Wärme, den Spülbehälter als Wärmesenke, und das ein- oder mehrlagige Isolationsmaterialsystem zwischen dem Innenraum des Spülbehälters und dem Innenraum des Füllreservoirs als thermisches Kopplungsmittel mit Retardations-, d.h. Abbremsungsfunktion für den Wärmetransport vom Innenraum des Spülbehälters in den Innenraum des Füllreservoirs hinein umfasst.

Je größer dabei der Unterschied zwischen der im Spülbehälter vorliegenden Temperatur TSB und der im Füllreservoir vorliegenden Temperatur TWT, insbesondere am Ende tAE des Aufheizzeitabschnitts APR ist, desto größer ist der Wärmeentladestrom QD durch das Isolationsmaterialsystem (vom Inneren des Spülbehälters nach außen in das Füllreservoir betachtet) während der Nachwaschphase NW. Je größer der Unterschied zwischen der im Füllreservoir am Ende des Aufheizzeitabschnitts APR vorliegenden Temperatur TWT des Füllreservoirs und der dieser gegenüber höheren Umgebungstemperatur UT ist, desto größer ist der Wärmestrom aus der Umgebung in das Füllreservoir hinein zu dessen thermischen Wiederaufladung.

In der Nachwaschphase NW des Reinigungsgangs RG wird der Spülflüssigkeitsmenge im Spülbehälter durch die Ausschaltung der Wärmepumpe WP1 also keine Wärmeenergie QP1* mehr zugeführt, sondern von der zuvor während der ersten Betriebsphase P1 der Wärmepumpe WP1 in den Spülbehälter hineingepumpten Wärmeenergie QP1* entweicht während der Nachwaschphase NW ein Verlustanteil aus dem Innenraum des Spülbehälters SB durch das Isolationsmaterialsystem, das (von innen nach außen betrachtet) durch die Spülbehälter- Seitenwand SW1, die außen auf dieser aufliegenden Belagschicht BI, das auf der Belagschicht Bl aufgebrachte, thermisch schwach koppelnde Wärmedämmelement IS1 und die dem Spülbehälter zugewandte, das Wärmedämmelement IS1 kontaktierende Wand WI1 des Füllreservoirs WT1 gebildet ist, hindurch in das Speicherwasser FW des Füllreservoirs WT1. Dieser Wärmestrom QD, der aus dem Innenraum des Füllreservoirs WT1 das Isolationsmaterialsystem durchdringt, wärmt das Speicherwasser FW, das im Füllreservoir zuvor beim Betrieb der Wärmepumpe WP1 während des Aufheizzeitabschnitts APR stark, insbesondere unter 4° C, abgekühlt wird, wieder auf. Insbesondere wird Eiswasser/Festeis, das sich etwaig im Füllreservoir WT1 durch den Entzug von Wärmenergie mittels des Verdampfers VD1 im Laufe des Aufheizzeitabschnitts APR beim Wärmepumpenbetrieb gebildet hat, aufgetaut, d. h. zu flüssigem Wasser regeneriert.

Zusätzlich kann das Speicherwasser FW im Füllreservoir WT1 nach dem Abschalten der Wärmepumpe WP1 am Ende des Aufheizzeitabschnitts APR insbesondere auch durch Umgebungswärme aufgewärmt werden, da die dann vorliegende Temperatur TWT von etwa 4° C oder weniger des Speicherwassers FW im Füllreservoir niedriger, vorzugsweise zwischen 10° C und 20° C niedriger als die Umgebungstemperatur UT von üblicherweise etwa 23° C am Aufstellort der Geschirrspülmaschine wie z.B. in einer Küche ist. Durch diesen Temperaturunterschied wird ein Wärmestrom QA aus der Umgebung in das Füllreservoir hinein bewirkt. Hier im Ausführungsbeispiel von Figur 2 weist das Speicherwasser FW im Füllreservoir WT1 am Ende tRE des Reinigungsgangs RG vorzugsweise eine Temperatur von etwa 15° C-20° C, insbesondere ca. 19° C, auf. Im Ausführungsbeispiel von Figur 2 setzt das Auftauen des Eiswassers/Festeises ab dem Zeitpunkt tA ein, der hier vorzugsweise etwa 1000 sec nach dem Ende tAE des Aufheizzeitabschnitts APR liegt.

Dadurch, dass die Temperatur TWT des Speicherwassers FW im Füllreservoir WT1 während der Nachwaschphase NW stets niedriger als die Umgebungstemperatur UT ist, findet an derjenigen Wand des Spülbehälters, an der das Füllreservoir außen angebracht ist, kaum oder kein Wärmetransport vom Spülbehälter an die Umgebung statt. Dies ist besonders vorteilhaft, da sich dadurch die pro Spülgang eingesetzte elektrische Energie weiter erniedrigen lässt.

Werden in analoger Weise zur Seitenwand SW1, die außen mit dem Füllreservoir WT1 bestückt ist, mehrere Wandungen des Spülbehälters außen mit einem oder mehreren Füllreservoirs versehen und - wie das Füllreservoir WT1 - jeweils als thermische Energiequelle herangezogen, der durch mindestens einen Verdampfer mindestens einer Wärmepumpe Wärmeenergie entzogen wird, so können ausgehend vom während des ersten Wärmepumpenbetriebs wie z.B. P1 aufgeheizten Spülbehälter Wärmeverluste an die Umgebung weiter verringert werden. Besonders vorteilhaft ist es, wenn jedes Füllreservoir als Eisspeicher betrieben wird, da dann die im Speicherwasser enthaltene sensible Wärmeenergie und latente Wärmeenergie durch den jeweilig zugeordneten Verdampfer mindestens einer Wärmepumpe entzogen und zur Aufheizung des Innenraums des Spülbehälters, insbesondere von Behandlungswasser bzw. Spülflüssigkeit im Innenraum des Spülbehälters genutzt werden kann.

Zusätzlich oder unabhängig hiervon kann es ggf. für eine Regenerierung, d.h. zur Erwärmung des im Füllreservoir des ersten Wärmepumpenbetriebs beim Aufheizzeitabschnitt APR auf eine Temperatur TWT unter 4°C, insbesondere auf etwa 0° C abgekühlten, oder zur Aufschmelzung bzw. Auftauen des im Füllreservoir des ersten Wärmepumpenbetriebs beim Aufheizzeitabschnitt APR gar zu Eis erstarrten Speicherwassers FW günstig sein, wenn die Kontrolleinrichtung CO mittels eines Steuersignals über die Steuerleitung AL1 das Einlassventil ZV öffnet und neues Frischwasser aus dem Hauswassernetz WN mit einer Einlauftemperatur TWT*, insbesondere von etwa 15°C - 20°C, in das Füllreservoir zulaufen lässt, solange diese höher als die Temperatur TWT im Füllreservoir WT1 ist. Damit das Füllreservoir dieses über die Zuführeinrichtung ZLV neu zulaufende Frischwasser FW* aufnehmen kann, ist es zweckmäßig, wenn das Füllreservoir mit einem entsprechend großen Füllvolumen bzw. Aufnahmevolumen ausgestattet ist. Vorteilhaft kann es dabei sein, während der Nachwaschphase NW Frischwasser FW der Einlauftemperatur TWT* mehrfach, d.h. in mehreren Zuführphasen mit jeweils dazwischenliegenden Wartephasen dem Füllreservoir zuzuführen, insbesondere solange die Temperatur TWT des flüssigen und/oder gefrorenen Wassers im Füllreservoir WT1 niedriger als die Einlauftemperatur TWT*(> TWT) ist.

Prozesstechnisch besonders günstig ist es, wenn - wie im Ausführungsbeispiel von Figur 2 - der durch das Füllreservoir nach dem ersten Wärmepumpenbetrieb P1 gebildete Eisspeicher vorzugsweise alleine durch die Verlustwärme QP1 aus dem Spülbehälter und ggf. ergänzend durch die Umgebungswärme QA regeneriert wird. Bereits dadurch kann das Eiswasser/Festeis, das nach dem ersten Wärmepumpenbetrieb im Füllreservoir WT1 durch den Entzug von Wärmeenergie mittels des Verdampfers VD1 gebildet sein kann, aufgetaut und auf eine Temperatur TWT gebracht werden, mit der ein für einen nachfolgenden zweiten Wärmepumpenbetrieb ausreichend hoher Wärmeenergiegehalt des Speicherwasser korrespondiert. Eine Regenerierung des Füllreservoirs durch Zufuhr von Frischwasser findet hierbei nicht statt.

Während eines Endabschnitts vor dem Endzeitpunkt tRE des Reinigungsgangs RG wird mittels der Entleerungspumpe EP die im Spülbehälter SB vorhandene Flüssigkeitsmenge WMi mit i=RG, vorzugsweise vollständig, in mindestens einer Abpumpsequenz abgepumpt. Dazu übermittelt die Kontrolleinrichtung CO über die Steuerleitung SL4 ein Steuersignal an die Entleerungspumpe EP, um die Abpumpsequenz E2 einzuleiten (siehe Zeitdiagramm SEP in der Figur 2). Vor der Abpumpsequenz E2 oder teilweise zeitlich überlappend mit ihr erhält die Umwälzpumpe UP über die Signalleitung SL3 von der Kontrolleinrichtung CO die Anweisung, ihren Umwälzbetrieb zu beenden, so dass das Versprühen von Spülflüssigkeit über die ein oder mehreren Sprüheinrichtungen OS, US gestoppt wird. Sobald zum Zeitpunkt tRE die schmutzige Reinigungsflüssigkeit WMi mit i=RG aus dem Spülbehälter SB mittels der Entleerungspumpe EP abgepumpt ist, wird das Einlassventil EZ mittels eines Steuersignals über die Signalleitung SL1 durch die Kontrolleinrichtung CO für eine bestimmte Einlaufzeitdauer derart geöffnet, dass eine gewünschte Frischwassermenge in das Füllreservoir hineinströmen kann, die eine entsprechend große Wassermenge ΔWMi mit i=ZG aus dem Füllreservoir zum Überlaufen bzw. Auslaufen durch die Auslassöffnung OF1 in die Abführleitung WL21 hinein bringt. Über diese kann der zuvor am Ende des Reinigungsgangs RG geleerte Spülbehälter mit einer Wassermenge WMi mit i=ZG gefüllt werden, die für den sich zeitlich an den Reinigungsgang anschließenden Zwischenspülgang ZG im Spülbehälter gewünscht ist. Hier im Ausführungsbeispiel ist die dem Spülbehälter aus dem Füllreservoir WT1 zugeführte Wassermenge ΔWMi mit i = ZG z.B. zwischen 2 l und 4 l gewählt. Zum Beenden des Füllvorgangs für das Füllreservoir und damit wegen des Überlaufcharakters des Füllreservoirs einhergehend zum Beenden des Füllvorgangs für den Spülbehälter wird das Einlassventil ZV durch die Kontrolleinrichtung CO wieder geschlossen. Dieser Füllvorgang ist in der Figur 2 durch den Balken F3 angedeutet. Der Zwischenspülgang ZG ist für die festgelegte Zeitdauer zwischen den Zeitpunkten tRE (=tZS) und tZE vorgesehen. Währenddessen wird die Wassermenge WMi mit i=ZG mittels der in Betrieb gesetzten Umwälzpumpe über die ein oder mehreren Sprüheinrichtungen im Innenraum des Spülbehälters versprüht. Vorzugsweise wird dem Spülbehälter SB eine Wassermenge zwischen 2 l und 4 l, insbesondere etwa 2,5 l, aus dem Füllreservoir zugeführt. Mit dieser wird der Zwischenspülgang ZG durchgeführt. Wenn zum Startzeitpunkt tRE = tZS des Zwischenspülgangs ZG Frischwasser FW* der Einlauftemperatur TWT* in das Füllreservoir WT1 durch Öffnen des Einlassventils ZV hineinläuft, so kühlt es hier im Ausführungsbeispiel von Figur 2 das im Füllreservoir vorhandene Wasser FW etwas, insbesondere zwischen 1° C und 5° C ab, da seine Einlauftemperatur TWT*, insbesondere von etwa 15° C bis 18° C kleiner als die Temperatur TWT (> TWT*), insbesondere von etwa 19°C bis 22 °C, des im Füllreservoir am Ende des Reinigungsgangs RG vorhandenen Speicherwassers FW ist. Das Mischwasser, das durch den Zulauf von Frischwasser FW* mit der Einlauftemperatur TWT* in das vorhandene Speicherwasser FW der Temperatur TWT hinein erzeugt wird, weist im Ausführungsbeispiel eine Mischtemperatur vorzugsweise von etwa 18° - 21°C auf. Mit Fortschreiten des Zwischenspülgangs ZG erwärmt es sich bis zum Endzeitpunkt tZE bezogen auf seine Anfangstemperatur zum Startzeitpunkt tZS leicht, weil es Verlustwärme aus dem Spülbehälter und /oder Wärme aus der Umgebung aufnimmt. Seine Temperatur TWT liegt hier im Ausführungsbeispiel von Figur 2 auf das Ende des Zwischenspülgangs zu vorzugsweise zwischen 20° C und 25°C.

Während der Dauer tZE - tZS des Zwischenspülgangs ZG ist die Wärmepumpe WP1 ausgeschaltet, d.h. die im Spülbehälter befindliche Spülflüssigkeitsmenge WMi mit i = ZG wird nicht aktiv beheizt. Sie nimmt während des Zeitdauer tZE - tZS des Zwischenspülgangs lediglich passiv durch Wärmetransport (ohne aktiver Heizung) thermische Wärmeenergie auf, die in den zuvor beim Reinigungsgang RG aufgeheizten Spülbehälter-Wandungen, der zuvor beim Reinigungsgang im Spülbehälter aufgeheizten Luft, sowie dem zuvor beim Reinigungsgang aufgeheizten Spülgut steckt. Die Temperatur TSB im Innenraum des Spülbehälters liegt während des Zwischenspülgangs ZG vorzugsweise zwischen 30° C und 38° C. Auf das Ende des Zwischenspülgangs zu sendet die Kontrolleinrichtung CO über die Signalleitung SL4 an die Entleerungspumpe EP eine Anweisung zum teilweisen oder vollständigen Entleeren der gebrauchten Spülflüssigkeit WMi mit i = ZG aus dem Spülbehälter. Der Entleerungsvorgang ist im Diagramm SEP der Figur 2 durch den Balken E3 veranschaulicht. Es wird eine Füllmenge von hier etwa 2,5 l Wasser aus dem Spülbehälter mittels der Entleerungspumpe abgepumpt.

Zum Startzeitpunkt tKE des dem Zwischenspülgang ZG nachfolgenden Klarspülgangs KG wird aus dem Füllreservoir WT1 eine Wassermenge ΔWMi mit i=KG eingelassen, die die im Spülbehälter nach dem Zwischenspülgang ZG bei teilweisem Abpumpen verbliebene Wassermenge auf eine gewünschte Soll- Wassermenge WMi mit i=KG ergänzt, oder die gewünschte Soll-Wassermenge vollständig zuführt, falls wie hier im Ausführungsbeispiel von Figur 2 der Spülbehälter am Ende des Zwischenspülgangs ZG mittels der Entleerungspumpe EP vollständig entleert wurde. Wenn das Füllreservoir vorzugsweise als Überlaufspeicher ausgebildet ist, dann wird der Füllvorgang für den Spülbehälter dadurch ausgelöst, dass dem Füllreservoir WT1 eine Frischwassermenge FW* zugeführt wird, die der gewünschten, dem Spülbehälter zuzuführenden Wassermenge ΔWMi mit i=KG entspricht. Dazu wird das Einlassventil ZV durch eine entsprechende Signalisierung über die Signalleitung SL1 von der Kontrolleinrichtung CO für eine bestimmte Füllzeitdauer geöffnet und anschließend wieder geschlossen. Durch das Einströmen des Frischwassers FW* in das bereits bis zum Pegel VO volle Füllreservoir steigt dessen Füllstand über die Unterkante der Auslassöffnung OF1, die im oberen Bereich des Füllreservoirs etwas höher als der Pegel VO vorgesehen ist, so dass aus der Auslassöffnung OF1 des Füllreservoirs Wasser FW überläuft und in den Spülbehälter hinein strömt. Dabei entspricht die aus der Auslassöffnung OF1 des Füllreservoirs über die Abführleitung WL21 und den Einlass WI1L1 in den Spülbehälter hineinlaufende Wassermenge im Wesentlichen der in das Füllreservoir eingefüllten Frischwassermenge. Zur Aufheizung der Spülflüssigkeitsmenge WMi mit i=KG im Spülbehälter auf eine geforderte Solltemperatur KT, die vorzugweise höher als die Zielreinigungstemperatur RT gewählt ist, insbesondere mindestens 55° C, bevorzugt wie hier etwa 60° C gewählt ist, wird die Wärmepumpe WP1 ab dem Startzeitpunkt tKS für einen Aufheizzeitabschnitt APK, der bis zum Endzeitpunkt tKE des Klarspülgangs reicht, von der Kontrolleinrichtung CO in Betrieb genommen, d.h. eingeschaltet. Dies wird von der Kontrolleinrichtung CO durch ein Steuer- oder Regelsignal über die Steuerleitung SL2 an den Kompressor KP der Wärmepumpe WP1 veranlasst. Die Wärmepumpe WP1 wird hier also ein zweites Mal in Betrieb genommen. Dieser zweite Wärmepumpenbetrieb ist in der Figur 2 mit P2 bezeichnet. Im Diagramm SKP der Figur 2 ist das Einschalten des Kompressors KP durch den Wechsel zum Startzeitpunkt tKS des Klarspülgangs KS vom "Aus"-Zustand A in den "Ein"-Zustand E eingezeichnet. Der Kompressor wird im Ausführungsbeispiel von Figur 2 zum Endzeitpunkt tKE des Klarspülgangs KG wieder außer Betrieb gesetzt, d.h. er wechselt vom Zustand "Ein" E auf "Aus" A. Während des zweiten Wärmepumpenbetriebs P2 entzieht der Verdampfer VD1 dem Speicherwasser FW im Füllreservoir sensible und/oder latente Wärme QP1, welche vom Kompressor unter Aufwendung elektrischer Energie zum Verflüssiger VF1 gepumpt wird und dort von diesem als Wärmeenergie QP1 in den Spülbehälter abgegeben wird. Es kommt - wie hier im Ausführungsbeispiel - während des aktiven Betriebs der Wärmepumpe WP1 im Zeitraum tKE - tKS des Klarspülens KG ab dem Zeitpunkt tF insbesondere zum Gefrieren, d.h. zur Eisbildung des Speicherwassers FW im Füllreservoir, wenn dieses durch den Verdampfer VD1 vorzugsweise unter eine Temperatur von 0° C abgekühlt wird. Zweckmäßigerweise wird - wie hier im Ausführungsbeispiel - die Aufheizung der Spülflüssigkeit im Spülbehälter auf die gewünschte Solltemperatur KT allein mittels der Wärmepumpe erreicht. Ggf. kann es wie bereits oben zum Reinigungsgang erläutert zweckmäßig sein, wenn parallel zur Wärmepumpe eine konventionelle Wasserheizung, die als Widerstandsheizung ausgebildet ist, eingeschaltet wird, um die Zieltemperatur KT innerhalb der festgelegten Aufheizzeitabschnitts APK zu erreichen. In Abwandlung hiervon kann es ggf. zweckmäßig sein, die Spülflüssigkeit im Spülbehälter mittels der Wärmepumpe WP1 nur während eines ersten Zeitabschnitts des Aufheizzeitabschnitts APK aktiv aufzuheizen, diese dann auszuschalten und für den restlichen, d.h. zweiten Zeitabschnitt zeitlich nachgeschaltet erst die konventionelle Heizung, insbesondere Wasserheizung, einzuschalten. Durch diese sequentielle Aufteilung der Aufheizung kann insbesondere eine elektrische Überlastung der Geschirrspülmaschine vermieden werden. Auf das Ende tKE des Klarspülgangs KG zu wird schließlich das auf die gewünschte Soll-Klarspültemperatur KT gebrachte Klarspülwasser aus dem Spülbehälter SB mittels der Entleerungspumpe EP abgepumpt, was im Diagramm SEP von Figur 2 durch einen Balken E4 vereinfacht dargestellt ist. Ein entsprechendes Abpumpsignal wird der Entleerungspumpe EP über die Steuerleitung SL4 von der Kontrolleinrichtung übermittelt.

Am Ende tKE des Klarspülgangs KG liegt das Speicherwasser FW im Füllreservoir stark abgekühlt, insbesondere unter 4° C vor, oder ist wie hier im Ausführungsbeispiel vorzugsweise zu Eiswasser geworden, oder ganz zu Festeis durchgefroren. Dadurch steht jetzt das Füllreservoir als Kühlfläche an der Wand SW1 des Spülbehälters bereit, um im anschließenden Trocknungsgang TG, der während der Phase vom Zeitpunkt tKE=tTS bis tTE dauert, einen möglichst großen Temperaturunterschied, insbesondere von mindestens 10° C, bevorzugt zwischen 15° C und 60°C zwischen der Temperatur TSB der feuchtwarmen Luft im Spülbehälter und der Temperatur an der Innenwandfläche der Seitenwand SW1 des Spülbehälters zu erzeugen, an der außen das Füllreservoir kontaktierend an dem auf der Belagschicht BI aufliegenden Wärmedämmelement IS1 angebracht ist. Je größer der Unterschied zwischen den Temperatur TWT im Füllreservoir und der Temperatur TSB im Spülbehälter ist, desto mehr ist eine wirkungsvolle Kondensationstrocknung im Spülbehälter begünstigt. Denn das Wärmedämmelement IS1, das zwischen der auf der Seitenwand SW1 aufgebrachten Belagschicht BI und der dem Spülbehälter zugewandten Wand WI1 des Füllreservoirs als Zwischenmaterialschicht eingefügt ist, wird dann von einem umso größeren Wärmestrom QD durchquert. Insbesondere kann ein für eine gewünschte Kondensationstrocknung ausreichend großer Temperaturunterschied umso länger zwischen der Temperatur TSB der feuchtwarmen Luft im Spülbehälter und der Temperatur an der Innenwandfläche der Seitenwand SW1 des Spülbehälters während der vorgegebenen Zeitdauer tTE - tTS des Trocknungsgangs TG aufrechterhalten werden. Denn das Füllreservoir bleibt auf etwa 0° C solange, bis alles Eis aufgetaut worden ist, weil die Zufuhr QD von Wärme aus dem Spülbehälter zum Aufschmelzen des Eises, d.h. der Phasenumwandlung von Eis in flüssiges Wasser im Füllreservoir verbraucht wird. Auf diese Weise wird die Trocknung gegenüber einer konventionellen Geschirrspülmaschine mit einem außen an einer Seitenwand angebrachten Wassertank (ohne Wärmepumpenankopplung) verbessert, der zur Unterstützung der Kondensationstrocknung im Spülbehälter lediglich mit Frischwasser von etwa 15° C Einlauftemperatur aus einer Hauswasserleitung befüllt wird.

Eine weitere Trocknungsverbesserung kann sich insbesondere dadurch ergeben, dass die Wärmepumpe WP1 während der Gesamtzeitdauer tTE - tTS des spülgangabschließenden Trocknungsgangs TG im Anschluss an den Klarspülgang KG weiter betrieben wird. Dies ist in der Figur 2 durch die Phase P3 gekennzeichnet. Im Diagramm SKP ist für den Kompressor KP der Einschaltbetrieb E strichpunktiert eingezeichnet.. Durch die mittels des Verdampfers VD1 der Wärmepumpe WP1 aktiv betriebene Kühlung des Speicherwassers FW im Füllreservoir WT1 kann dieses länger, insbesondere über die Gesamtzeitdauer des Trocknungsgangs TG hinweg, auf einer niedrigen Temperatur, insbesondere bei 0° C oder darunter, kühl gehalten werden und gleichzeitig kann mittels des Verflüssigers VF1 die Luft im Spülbehälter erwärmt und getrocknet werden, so dass der Unterschied zwischen der Temperatur der Innenwandfläche der Seitenwand SW1 und der Temperatur TWT der feuchtwarmen Luft und des Spülguts im Spülbehälter über einen längeren Zeitraum, insbesondere über die Gesamtzeitdauer des Trocknungsgangs stets für eine ausreichende Kondensationstrocknung ausreicht. Insbesondere kann mittels der eingeschalteten Wärmepumpe über die Gesamtdauer des Trocknungsgangs stets ein Temperaturunterschied von mindestens 10°, bevorzugt zwischen 15° und 60° C, zwischen der Temperatur der Innenwandfläche der Seitenwand SW1 und der Temperatur TWT der feuchtwarmen Luft und des Spülguts im Spülbehälter bereitgestellt werden. Da durch den während des Trocknungsgangs TG laufenden Betrieb der Wärmepumpe WP1 mittels des Verflüssigers bzw. Kondensors VF1 im Innenraum des Spülbehälters dort die Luft zusätzlich aufgeheizt wird, kann diese verbessert Feuchtigkeit vom Spülgut aufnehmen, so dass eine verbesserte Trocknung des Spülguts bewirkt wird. Insbesondere kann es genügen, wenn die Wärmepumpe lediglich für eine Anfangszeitdauer des Trocknungsgangs aktiv betrieben wird.

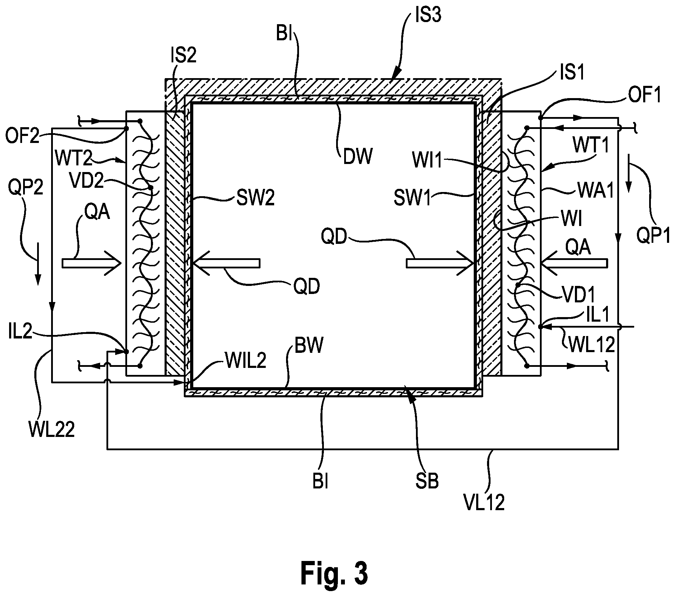

Figur 3 zeigt eine vorteilhafte Abwandlung der Geschirrspülmaschine von Figur 1. Analog zur Bestückung der ersten Seitenwand SW1 mit dem ersten, als Überlaufspeicher ausgebildeten Füllreservoir WT1 ist jetzt zusätzlich die zweite Seitenwand SW2 des Spülbehälters SB, die der ersten Seitenwand SW1 gegenüberliegt, mit einem zweiten Füllreservoir WT2 als Überlaufspeicher in entsprechender Weise bestückt. Außen auf die zweite Seitenwand SW2 ist eine Belagschicht, insbesondere Bitumenschicht BI zur Entdröhnung aufgebracht. Darüber liegt flächig kontaktierend ein Wärmedämmelement IS2, das - insbesondere hinsichtlich seiner Materialparameter - dem ersten Wärmedämmelement IS1 entspricht. Das zweite Füllreservoir WT2 ist außen auf die Belagschicht BI flächig kontakierend aufgesetzt. Ggf. können auch die Deckenwand und/oder die Bodenwand BW des Spülbehälters außen mit einer Belagschicht BI zur Entdröhnung und außen mit einer zusätzlichen Wärmedämmschicht IS3 versehen sein. Dadurch ist der Innenraum des Spülbehälters verbessert thermisch isoliert, so dass unerwünschte Wärmeverluste weitgehend vermieden sind. Im Innenraum des zweiten Füllreservoirs WT2 ist ebenfalls ein Verdampfer VD2 untergebracht. Er liegt bei Vollbefüllung des zweiten Füllreservoirs WT2 mit Wasser vorzugsweise vollständig im Wasser. Der Einlass IL2 des zweiten Füllreservoirs WT2 kann vorzugsweise mit einer eigenen Frischwasser- Zuführvorrichtung eingangsseitig in analoger Weise wie das erste Füllreservoir verbunden sein. Der Verdampfer VD2 kann vorzugweise Komponente einer zweiten Wärmepumpe sein, die analog zur ersten Wärmepumpe WP1 ausgebildet ist. In diesem Fall sind also identische Füllreservoirs an den beiden Seitenwänden des Spülbehälters mit jeweils eigener Frischwasserzuführeinrichtung und Wasser-Abführeinrichtung sowie getrennt zugeordneten und angekoppelten Wärmepumpen vorgesehen. Dies entspricht einer Doppelung der Füllreservoir-/Wärmepumpenanordnung WT1/WP1 mit zugehöriger Frischwasser-Zuführeinrichtung ZLV und Wasser-Abführeinrichtung ALV von Figur 1.

In vorteilhafter Abwandlung hiervon ist zur Einsparung von Bauteilen hier im Ausführungsbeispiel von Figur 3 der Überlauf OF1 des ersten Füllreservoirs WT1 mit dem Einlass IL2 des zweiten Füllreservoirs WT2 über eine Flüssigkeits- Verbindungsleitung VL12 verbunden, so dass die Befüllung des zweiten Füllreservoirs WT2 mit Frischwasser parallel zur Befüllung des ersten Füllreservoirs WT1 mit Frischwasser FW* mittels des Zulaufventils ZV einhergeht. Der Spülbehälter SB wird über die an den Überlauf OF2 des zweiten Füllreservoirs WT2 angeschlossene Abführleitung WL22, die zum Einlass WIL2 des Spülbehälters SB führt, mit einer für den jeweiligen wasserführenden Teilspülgang geforderten Flüssigkeitsmenge ΔWMi mit i=VG, RG, ZG, KG befüllt. Insbesondere kann es zweckmäßig sein, wenn der zweite Verdampfer VD2 Bestandteil der Wärmepumpe WP1 mit dem ersten Verdampfer VD1 ist. So können der erste Verdampfer VD1 beispielsweise durch einen ersten Abschnitt und der zweite Verdampfer VD2 beispielsweise durch einen zweiten Abschnitt eines gemeinsamen Verdampfers ein und desselben Wärmepumpenkreislaufs gebildet sein.

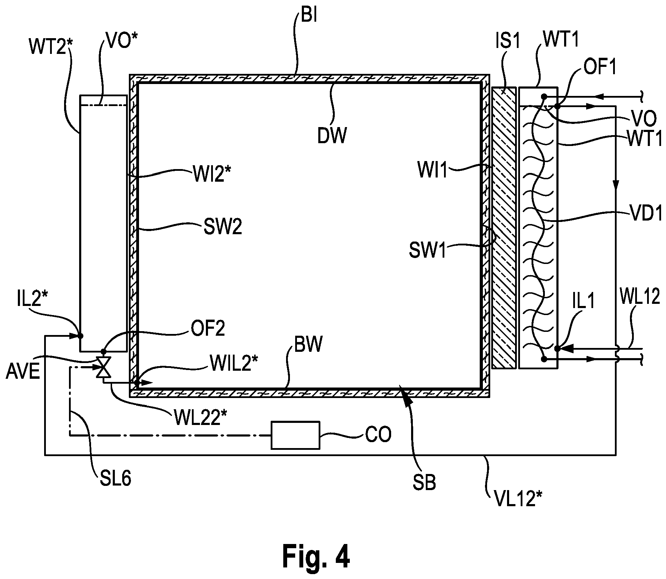

Ggf. kann es vorteilhaft sein, wenn auf der zweiten Seitenwand SW2 des Spülbehälters SB, die der mit dem Füllreservoir bzw. Füllbehälter WT1 bestückten ersten Seitenwand SW1 des Spülbehälters SB gegenüberliegt, ein zweiter Wasserspeichertank WT2* außen angebracht ist. Der zweite Füllbehälter WT2* bedeckt die zweite Seitenwand SW2 zweckmäßigerweise möglichst großflächig. An dieses zweite Füllreservoir WT2* ist keine Wärmepumpe angekoppelt, d.h. es ist ohne Verdampferankopplung. Sein Einlass IL2* ist über eine Verbindungsleitung VL12* mit dem Auslass OF1 des ersten Füllreservoirs WT1 flüssigkeitsleitend verbunden, d.h. fluidisch in Reihe geschaltet. Diese gegenüber dem Ausführungsbeispiel der Figuren 1, 2 sowie dem Ausführungsbeispiel der Figur 3 abgewandelte Konstruktion einer erfindungsgemäß ausgebildeten Geschirrspülmaschine ist in der Figur 4 in einer Frontansicht des Spülbehälters schematisch dargestellt. Der zweite Wasserspeichertank WT2* liegt hier thermisch kontaktierend direkt auf der äußeren Belagschicht, insbesondere Bitumenschicht BI, der zweiten Seitenwand SW2 auf. Im Unterschied zur ersten Seitenwand SW1 ist zwischen dem Wasserspeichertank WT2* und der Belagschicht BI der zweiten Seitenwand SW2 also kein Wärmedämmelement wie IS1 vorgesehen. Abweichend vom ersten Füllreservoir WT1 ist der Auslass OF2 des zweiten Füllreservoirs WT2* an dessen Behältergrund vorgesehen, d.h. das zweite Füllreservoir WT2* wird nicht als Überlaufspeicher wie das erste Füllreservoir WT1, sondern als Auslaufspeicher betrieben. Dazu ist am Auslass OF2 oder in der von diesem zum Einlass WIL2 des Spülbehälters führenden Flüssigkeitsleitung WL22* ein Ventil AVE vorgesehen. Dieses ist über eine Steuerleitung SL6 von der Kontrolleinrichtung CO öffen- und schließbar. Während der wasserführenden Teilspülgänge VG, RG, ZG, KG des Spülgangs SG ist das Ablaufventil AVE auf "Offen" geschaltet, so dass das zweite Füllreservoir WT2* kein zulaufendes Wasser speichert, sondern es lässt das vom ersten Füllreservoir WT1 über die Verbindungsleitung VL12* zulaufende Wasser FW einfach in den Spülbehälter SB durchlaufen. Für den spülgangabschließenden Trocknungsgang TG wird hingegen das Ablaufventil AVE geschlossen und das zweite Füllreservoir WT2* mit Wasser aus dem ersten Füllreservoir WT1, insbesondere vollständig, gefüllt. Wenn das erste Füllreservoir WT1 wie im Ausführungsbeispiel von Figur 1 und auch hier im Ausführungsbeispiel von Figur 4 als Überlaufspeicher ausgebildet ist, wird dazu das Zulaufventil ZV in der Frischwasser-Zuführleitung WL11 geöffnet, so dass Wasser aus dem vollen ersten Füllreservoir WT1 in die Überlauföffnung OF1 gedrückt wird und über die Verbindungsleitung VL12* in das zweite Füllreservoir WT2* strömt. Da das erste Füllreservoir WT1 aus ein oder mehreren, dem Trocknungsgang TG vorausgehenden Teilspülgängen, wie z.B. dem Klarspülgang KG, mit Wärmepumpenbetrieb tief gekühltes Wasser oder Eiswasser/Festeis enthält, wird das zugeführte Frischwasser von seiner Einlauftemperatur wie z.B. von üblicherweise 15° C herabgekühlt. Das aus dem Überlauf OF1 des ersten Füllreservoirs ausströmende Wasser weist also eine Temperatur auf, die deutlich niedriger als die Einlauftemperatur TWT* des zulaufenden Frischwassers FW* ist. Damit enthält auch das zweite Füllreservoir WT2* kaltes Wasser, insbesondere herabgekühlt auf 0° C - 10°C. Da es ohne Wärmedämmelement direkt außen auf der Belagschicht BI der zweiten Seitenwand SW2 kontaktierend aufliegt, stellt es eine besonders effektive Kühlung für die Seitenwand SW2 bereit, so dass die gewünschte Kondensationstrocknung im Spülbehälter verbessert unterstützt ist als im ersten Ausführungsbeispiel von Figur 1.

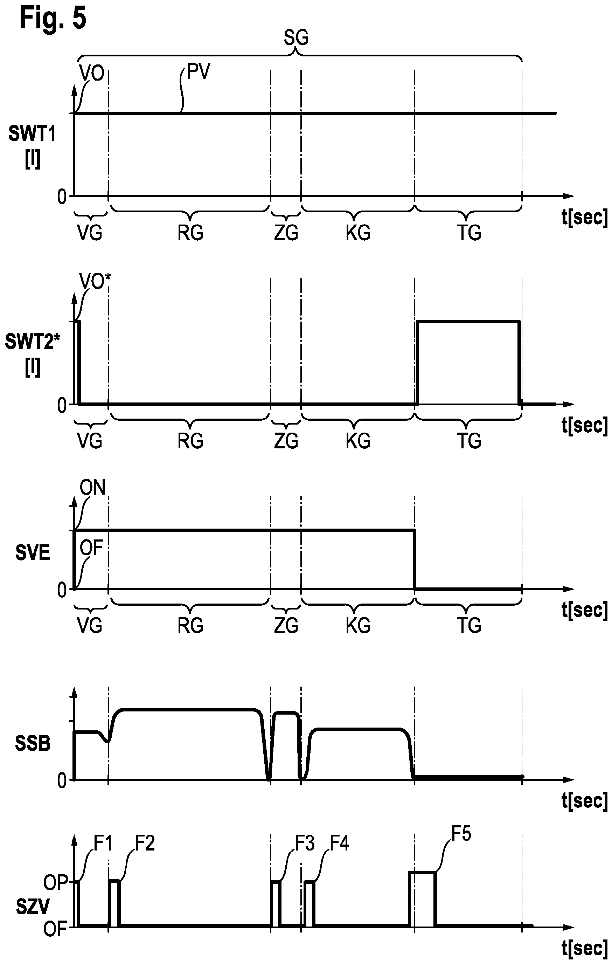

Die Zeitdiagramme von Figur 5 erläutern den zugehörigen, gegenüber der Figur 2 veränderten Ablauf des Spülgangs SG eines Geschirrspülprogramms der modifizierten Geschirrspülmaschine von Figur 4. Die Funktion und Wirkungsweise sowie die Befüllungsweise des ersten Füllreservoirs WT1 entsprechen dem des Ausführungsbeispiels von Figur 1. Das Zeitdiagramm SWT1 entspricht dem von Figur 2 und zeigt den zeitlichen Verlauf PV des Füllstandpegels des Speicherwassers FW im ersten Füllreservoir WT1. Der Füllstandpegel ist über die Gesamtzeitdauer des Spülgangs SG konstant beim Soll- Vollfüllstand VO. In der Figur 5 veranschaulicht das Zeitdiagramm SWT2* den zeitlichen Verlauf des Füllzustands des zweiten Füllreservoirs WT2* von Figur 4. Dieses ist während der wasserführenden Teilspülgänge Vorspülen VG, Reinigen RG, Zwischenspülen ZG und Klarspülen KG leer und nur während des Trocknungsgangs TG vollständig bis zum maximalen Füllstandpegel VO* vollgefüllt. Das Diagramm SVE veranschaulicht den zeitlichen Ablauf der Schaltzustände des Ablaufventils AVE. Es ist während der Teilspülgänge VG, RG, ZG,KG geöffnet, d.h. im Zustand "Auf" ON, während es während des Trocknungsgangs TG in seinem Schließzustand OF ist. Das Diagramm SSB entspricht dem Diagramm WMi von Figur 2 und dient der Orientierung, welche Flüssigkeitsmengen im zeitlichen Verlauf des Spülgangs SG im Spülbehälter vorhanden sind oder abgepumpt werden. Das Diagramm SZV veranschaulicht schließlich die Offenzustände OP und Schließzustände OF des Frischwasser- Einlaufventils ZV. Im Unterschied zu Figur 2 ist das Einlaufventil ZV jetzt auch noch beim Wechsel vom Klarspülgang KG zum Trocknungsgang TG für eine Füllphase F5 geöffnet, um das zweite Füllreservoir WT2* mit gekühltem Wasser aus dem ersten Füllreservoir WT1 vollzufüllen. Günstig kann es - entsprechend zu den vorstehenden Erläuterungen des Ausführungsbeispiels der Figuren 1 und 2 - sein, wenn während des Trocknungsgangs TG die Wärmepumpe WP1 aktiv geschaltet wird, so das eine aktive Kühlung des Speicherwassers im ersten Füllreservoir durch den dortigen Verdampfer VD1 stattfindet.

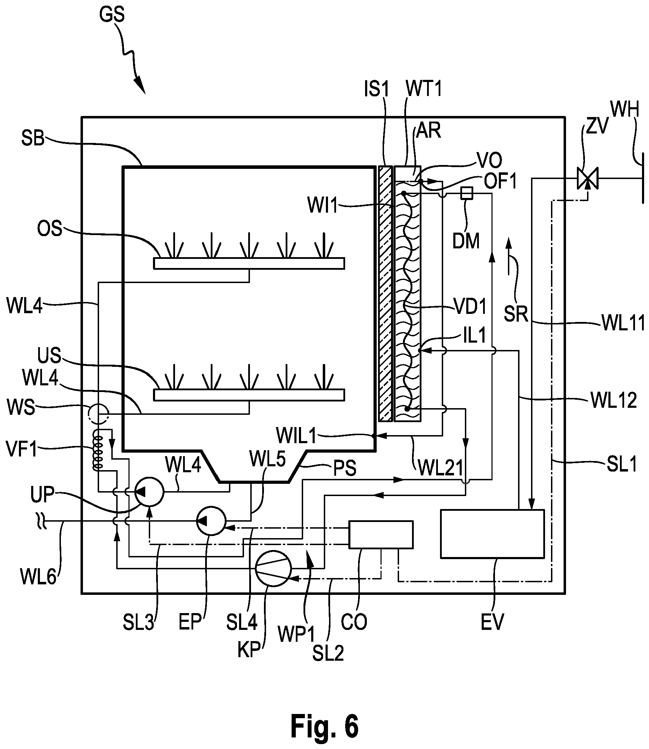

Figur 6 zeigt eine weitere vorteilhafte Abwandlung einer erfindungsgemäß ausgebildeten Geschirrspülmaschine. Im Unterschied zu Figur 1 ist jetzt der Verflüssiger VF1 der Wärmepumpe WP1 im Abgangsrohr bzw. Druckrohr WL4 der Umwälzpumpe UP untergebracht (in Strömungsrichtung des gepumpten bzw. umgewälzten Wassers betrachtet). Vorzugsweise ist er in ein Verbindungsrohr zwischen der Umwälzpumpe UP und der Wasserweiche WS eingefügt. Ggf. ist es auch möglich, den Verflüssiger VF1 in der Umwälzpumpe UP selbst unterzubringen und diese somit als Heizpumpe auszubilden.

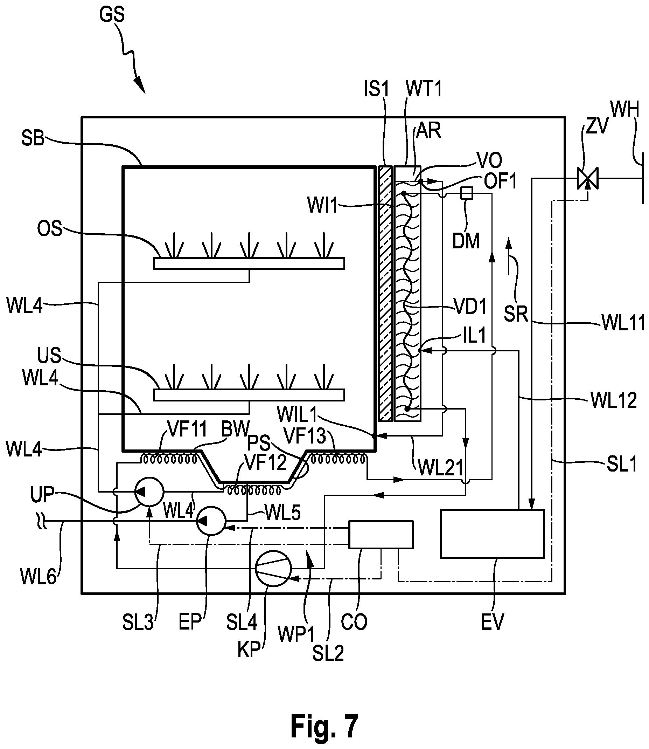

In vorteilhafter Abwandlung zu Figur 1 sind beim Ausführungsbeispiel von Figur 7 ein oder mehrere Verflüssigerabschnitte wie z.B. VF11, VF12, VF13 der Wärmepumpe WP1 an der Unterseite des Bodens BW des Spülbehälters wärmeleitend angebracht. Diese Variante ist vorteilhaft, wenn während des Trocknungsgangs die Wärmepumpe WP1 aktiv betrieben wird, da dann die Luft im Spülbehälter durch den Verflüssiger bzw. Kondensor zusätzlich aufgeheizt werden kann.

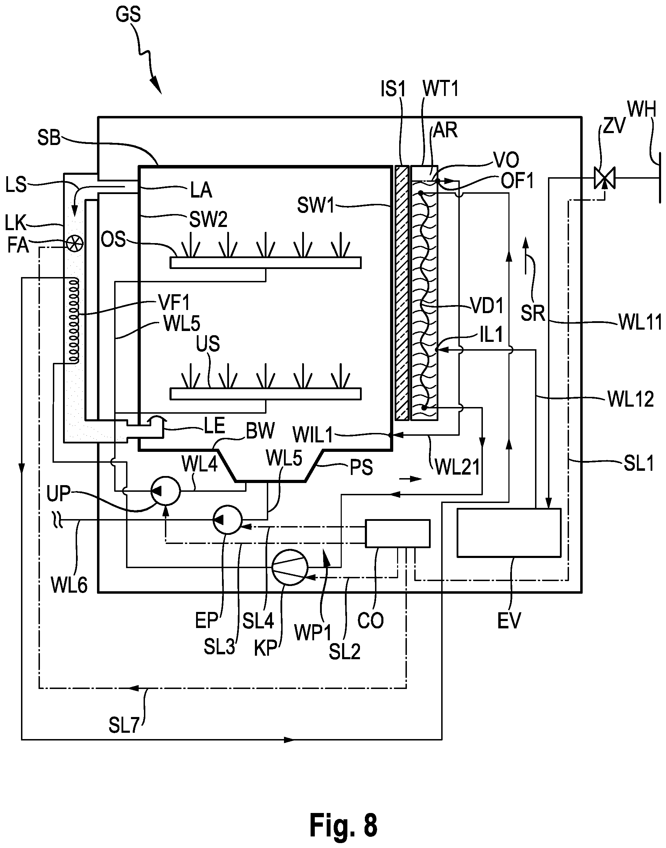

Figur 8 veranschaulicht eine weitere vorteilhafte Abwandlung der Geschirrspülmaschine von Figur 1. Der Verflüssiger VF1 der Wärmepumpe WP1 ist jetzt in einem eigens vorgesehenen Luftkanal LK untergebracht. Der Luftkanal LK verbindet einen Luftauslass LA des Spülbehälters mit einem Lufteinlass LE des Spülbehälters. Er ist außerhalb des Spülbehälters SB angeordnet und erstreckt sich überwiegend an der dem Füllreservoir WT1 gegenüberliegenden zweiten Seitenwand SW2 des Spülbehälters. Vorteilhaft kann der Luftauslass LA im mittleren oder noch besser oberen Bereich der Seitenwand SW2 vorgesehen sein. Der Lufteinlass LE ist z.B. im Bereich des Bodens BW des Spülbehälters SB vorgesehen. Im Luftkanal LK ist ein Gebläse bzw. ein Lüfter FA untergebracht. Mit seiner Hilfe lässt sich eine erzwungene Luftströmung LS vom Luftauslass LA in Richtung Lufteinlass LE erzeugen. In Luftströmungsrichtung LS betrachtet ist der Verflüssiger VF1 vorzugsweise nach dem Gebläse FA im Luftkanal LK angeordnet. In derjenige Phase wie z.B. RG oder KG eines Spülgangs, während der mittels des Verflüssigers VF1 bei Betrieb der Wärmepumpe WP1 die jeweilig in den Spülbehälter eingebrachte Spülflüssigkeitsmenge aufgeheizt werden soll, wird das Gebläse FA über eine Steuerleitung SL7 von der Kontrolleinrichtung CO eingeschaltet. Durch die dadurch am Verflüssiger VF1 vorbeiströmende Luft, die ja durch das Gebläse aus dem Innenraum des Spülbehälters über den Luftauslass LA angesaugt wird und nach dem Vorbeiströmen am Verflüssiger VF1 anschließend über den Lufteinlass LE zurück in den Spülbehälter geblasen wird, kann die Luft im Innenraum des Spülbehälters und damit die darin jeweilig vorhandene Spülflüssigkeitsmenge ebenfalls wirkungsvoll aufgeheizt werden. Diese Variante ist vorteilhaft, wenn während des Trocknungsgangs die Wärmepumpe WP1 aktiv betrieben wird, da dann die Luft im Spülbehälter durch den Verflüssiger bzw. Kondensor zusätzlich aufgeheizt werden kann.

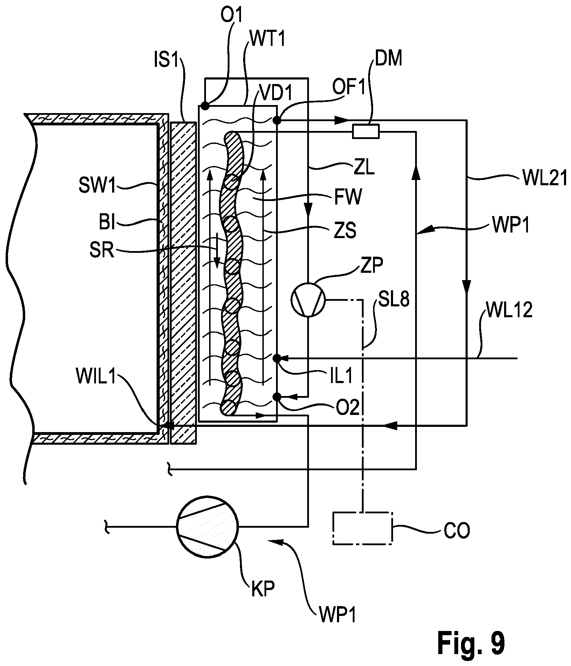

Für einen möglichst wirkungsvollen Entzug von Wärme aus dem Speicherwasser des jeweiligen Füllreservoirs wie z.B. WT1 kann es insbesondere vorteilhaft sein, wenn die bei Betrieb der Wärmepumpe wie z.B. WP1 durch deren Kompressor wie z.B. KP erzeugte Strömung des Kühlmittels eine Richtungskomponente entgegen einer Richtungskomponente der natürlichen oder erzwungenen Konvektionsströmung wie z.B. ZS des Speicherwassers wie z.B. FW im Füllreservoir wie z.B. WT1 aufweist. In der Figur 9 wird dem Speicherwasser FW im Füllreservoir WT1 durch eine Pumpe oder ein rotierend angetriebenes Flügelrad ZP eine Zwangsströmung ZS aufgeprägt. Natürlich sind auch andere Wasserbewegungsmittel, insbesondere Strömungserzeugungsmittel möglich. Die Zirkulationspumpe ZP kann über eine in der Figur 9 strichpunktiert angedeutete Steuerleitung SL8 von der Kontrolleinrichtung CO gesteuert und/oder geregelt werden. Es wird über eine Zirkulationsleitung ZL Wasser vorzugsweise am oberen Ende des Füllreservoirs WT1 durch eine erste Öffnung O1 aus dem Füllreservoir abgesaugt bzw. abgepumpt und am unteren Ende des Füllreservoirs WT1 durch eine zweite Öffnung O2 im Füllreservoir wieder in dieses hineingepumpt. Vorzugsweise liegen sich dabei die beiden Öffnungen O1, O2 schräg, insbesondere etwa diagonal gegenüber (siehe Figur 11). Dann entsteht im Füllreservoir eine Wasserströmung ZS mit einer Strömungskomponente in vertikaler Richtung von unten nach oben. Wenn der Verdampfer VD1 beispielsweise überwiegend nur Leitungsabschnitte in vertikaler Richtung aufweist, in denen jeweils das Kühlmittel in Schwerkraftrichtung, d.h. von oben nach unten strömt, so verläuft die Strömungsrichtung SR des Kühlmittels im Verdampfer VD1 entgegen der vertikalen Richtungskomponente der im Füllreservoir mittels der Pumpe ZP von unten nach oben erzwungenen Wasserströmung ZS. Dadurch ist der Wärmetransfer vom Speicherwasser FW auf das Kühlmittel im Verdampfer VD1 mit einem hohen Wirkungsgrad ermöglicht. Für einen solchen Wärmetausch, verallgemeinert ausgedrückt "Wärmetausch im Gegenstromprinzip", eignet sich insbesondere ein Rohr-Plattenverdampfer mit vertikaler Rohrführung, wie er beispielhaft in der schematischen Frontansicht von Figur 9 gezeigt ist. Bei diesem sind die vertikalen Leitungsabschnitte endseitig jeweils durch einen, gegenüber diesen wesentlich kürzeren Querleitungsabschnitt durchverbunden.

Insbesondere kann es zweckmäßig sein, den Frischwasser- Einlass IL1 dort in der Wand des Füllreservoirs WT1 vorzusehen, wo die Eisbildung am Verdampfer VD1 beim Wärmepumpenbetrieb am spätesten einsetzt. Der Einlass IL1 ist also möglichst weit weg von demjenigen Abschnitt des Verdampfers VD1 vorgesehen, in den das Kältemittel der Wärmepumpe WP1 (in Strömungsrichtung SR des Kältemittels im Kreislauf der Wärmepumpe betrachtet) eintritt. Eine entsprechende Anordnung kann auch für den Auslauf OF1 des Füllreservoirs zweckmäßig sein. Dadurch ist ein unerwünschtes Zusetzen bzw. Verstopfen des Frischwasser- Einlasses IL1 und/oder Auslasses OF1 mit Eis weitgehend vermieden, so dass auch nach dem jeweiligen Wärmepumpenbetrieb noch Frischwasser FW* in das Füllreservoir hineinströmen und/oder aus diesem in die Abführleitung WL21, die zum Spülbehälter führt, hineinströmen kann. Im Ausführungsbeispiel von Figur 9 ist der Frischwasser- Einlass IL1 im unteren Bereich des Füllreservoirs WT1 vorgesehen. Während des Wärmepumpenbetriebs gefriert das Wasser von oben her, weil ja das Kühlmittel in den Verdampfer VD1 von oben her durch das Druckminderungsmittel DM, insbesondere Expansionsventil oder Kapillarröhrchen, in die Verdampferschlangen eingespritzt wird und dort der Verdampfer VD1 am kältesten wird. Durch die Anströmung dieses oberen Abschnitts des Verdampfers VD1 mit wärmeren Speicherwasser und/oder Frischwasser von unten her kann die Eisbildung am oberen Abschnitt des Verdampfers hinausgezögert werden. Deshalb kann wie hier im Ausführungsbeispiel von Figur 9 der Auslass OF1 im oberen Bereich des Füllreservoirs angeordnet bleiben. Es kann eine gleichmäßigere Abkühlung der Gesamtmenge an Speicherwasser im Füllreservoir durch die Wasserbewegung im Füllreservoir sichergestellt werden. Dies führt zu eine besseren Ausnutzung der thermischen Wärme, die im Speicherwasser enthalten ist, durch die Wärmepumpe, so dass deren COP verbessert ist.

Insbesondere kann es zusätzlich oder unabhängig hiervon zweckmäßig sein, wenn der Wassereinlass IL1 des Füllreservoirs WT1 im unteren Bereich, insbesondere am Grund des Füllreservoirs, der Wasserauslass OF1 hingegen im oberen Bereich des Füllreservoirs, insbesondere schräg, bevorzugt etwa diagonal versetzt zum Wassereinlass IL1, vorgesehen ist. Durch die Anströmung dieses oberen Abschnitts des Verdampfers VD1 mit einlaufenden Frischwasser FW* der Einlauftemperatur TWT* von unten her kann die Eisbildung am oberen Abschnitt des Verdampfers VD1, in dem das Kältemittel des Leitungskreislauf der Wärmepumpe zuerst ankommt, hinausgezögert und/oder der Wassereinlass IL1 länger eisfrei gehalten werden. Dadurch lässt sich der Wirkungsgrad der Wärmepumpe WP1 steigern.

Verallgemeinert ausgedrückt kann die im Speicherwasser FW des Füllreservoirs WT1 enthaltene sensible und latente Wärme durch den Verdampfer dadurch verbessert entzogen werden, dass das Speicherwasser FW im Füllreservoir WT1 zu einer Bewegung, insbesondere in der Nähe der Verdampferschlangen, gezwungen wird. Dazu sind verschiedene Strömungserzeugungsmittel vorsehbar. Dies kann z.B. ein rotierend antreibbares Flügelrad im Füllreservoir sein oder ganz einfach einlaufendes Frischwasser FW* sein. Auch natürliche Konvektion kann eine entsprechende Wasserströmung im Füllreservoir erzeugen. Wird Frischwasser FW* in das Füllreservoir mittels des Zuführventils ZV eingefüllt, so kommt es zu einer Diagonalrichtung der Wasserströmung von einem unteren Eckbereich des Füllreservoirs, in dem in der Wand des Füllreservoirs der Einlass IL1 vorgesehen ist, zu einem schräg gegenüberliegenden oberen Eckbereich, in dem in der Wand des Füllreservoirs der Auslass OF1 vorgesehen ist. Durch Zufüllung von Frischwasser FW* kann somit die frühzeitige Eisbildung am Verdampfer VD1 ebenfalls hinausgezögert werden. Dies veranschaulicht die Figur 11 anhand einer Seitenansicht des Füllreservoirs WT1. In ihm ist der Verdampfer VD1 in Abwandlung zu Figur 9 als Rohr-Platten-Verdampfer mit überwiegend horizontaler Rohrführung ausgeführt. Durch den mit der Umwälzpumpe ZP ausgestatteten Zirkulationskreislauf ZL kann das Speicherwasser FW zu einer Wasserströmung mit etwa diagonaler Strömungsrichtung ZS z.B. vom linken unteren Einlass O2 z.B. zum rechten oberen Auslass O1 bei Bedarf gezwungen werden. Zusätzlich oder unabhängig hiervon (um 90° rotiert dazu im Gegenuhrzeigersinn betrachtet) kann das Frischwasser FW* durch Öffnen des Einlassventils ZV durch die Einlassöffnung IL1 in der rechten unteren Ecke in das Füllreservoir einströmen und Speicherwasser das Füllreservoir durch die Auslassöffnung OF1 in der linken oberen Ecke verlassen, wodurch ebenfalls eine Wasserströmung in diagonaler Richtung KR erzeugt wird. Sowohl die Wasserströmung ZS als auch die Wasserströmung KR weisen jeweils eine Richtungskomponente auf, die der Strömungsrichtung SR des Kühlmittels in den horizontalen Verdampferabschnitten entgegengesetzt ist. Durch dieses Gegenstromprinzip lässt sich der Wirkungsgrad des Verdampfers und damit der COP der Wärmepumpe verbessern. Eine erzwungene Strömung im Füllreservoir wird vorzugsweise dann erzeugt, wenn es - z.B. aufgrund der Dichteanomalie von Wasser bei etwa 4° C - zum Erliegen der freien Konvektion im Füllreservoir kommt.

Verallgemeinert betrachtet ist es insbesondere vorteilhaft, wenn der Frischwassereinlass wie z.B. IL1 des Füllreservoirs wie z.B. WT1 (und/oder auch dessen Wasserauslass wie z.B. OF1) an einem Ort in dessen Behälterwand vorgesehen ist, der möglichst weit entfernt von der Eintrittsstelle des Kühlmittels in den Verdampfer wie z.B. VD1 liegt. Dadurch kann der Frischwassereinlass (und/oder Wasserauslass) während des Betriebs der Wärmepumpe wie z.B. WP1 weitgehend eisfrei gehalten werden. Eine Zufuhr von Frischwasser in das Füllreservoir wie z.B. für einen nachfolgenden Teilspülgang ist deshalb auch nach dem Ende des Wärmepumpenbetriebs ohne längeres Zuwarten möglich, wie dies ansonsten zum Auftauen einer den Einlass verschließenden Eismasse erforderlich wäre. Zudem kann der Verdampfer wie z.B. VD1 aus der eisfrei bleibenden Einlassöffnung IL1 mit Frischwasser FW* beströmt werden, das eine höhere Einlauftemperatur TWT* als die Temperatur des Verdampfers hat. Dadurch kann durch ein- oder mehrmalige Zufuhr von Frischwasser TWT* durch den Einlass wie z.B. IL1 in das Füllreservoir wie z.B. WT1 hinein das Speicherwasser in der Region um den Verdampfer aufgetaut werden oder dort eine frühzeitige Vereisung vermieden werden. Die Gesamtmenge an Speicherwasser im Füllreservoir kann somit homogener mittels des Verdampfers abgekühlt werden, so dass der COP der Wärmepumpe verbessert ist.

Zweckmäßig kann es insbesondere sein, wenn mindestens ein Detektionsmittel DV (siehe die Figur 1), wie z.B. ein Temperatursensor, zum Erfassen mindestens eines Parameters, wie z.B. der Temperatur TWT, der den jeweiligen Wärmeenergiegehalt des Füllreservoirs WT1 kennzeichnet, vorgesehen ist. Die Kontrolleinrichtung CO kann dann mit Hilfe dieses Parameters den Arbeitsablauf, insbesondere die Einschalt- und/oder die Ausschaltzustände, der Wärmepumpe WP1, und/oder einer sonstigen Komponente des Füllreservoirs WT1, wie z.B. die Zirkulationspumpe ZP im Zirkulationskreislauf ZV des Füllreservoirs WT1, die Frischwasser- Zuführvorrichtung ZLV und/oder die Abführvorrichtung ALV kontrollieren, insbesondere steuern und/oder regeln.

Zur Erhöhung der thermischen Speicherwärme des Füllreservoirs kann es ggf. zweckmäßig sein, wenn die Abwasserleitung WL6, über die die Entleerungspumpe EP benutztes Spülwasser aus dem Spülbehälter herauspumpt und in ein hausseitiges (in der Figur 1 weggelassene) Abwasserrohr abführt, mit einem Teilabschnitt durch das Füllreservoir WT1 hindurchgeführt ist oder mit diesem in sonstiger Weise in thermischen Kontakt gebracht ist. Dadurch kann die im abgepumpten, gebrauchten Spülwasser enthaltene Restwärme auf das Speicherwasser FW im Füllreservoir WT1 übertragen und somit thermisch aufgeladen werden. Dies verbessert ebenfalls die elektrische Energiebilanz der Geschirrspülmaschine. In der Figur 1 ist diese Weiterbildungsvariante der zeichnerischen Übersichtlichkeit halber weggelassen worden.

Günstig kann es ggf. sein, wenn im Inneren des Füllvolumens des Füllreservoirs WT1 mindestens ein PCM-Element bzw. -Bauteil PE untergebracht ist, dessen Phasenwechseltemperatur zweckmäßigerweise höher als die von Wasser und niedriger als die Umgebungstemperatur, insbesondere zwischen 3 °C und 10° C, gewählt ist. In der Figur 1 ist ein solches PCM-Element PE im Füllreservoir WT1 strichpunktiert eingezeichnet. Es liegt an der dem Spülbehälter SB zugewandten Wand WI des Füllreservoirs WT1 innenseitig an. Das PCM-Element ist bei Vollbefüllung des Füllreservoirs mit Wasser von diesem vorzugsweise rundum umgeben. Dadurch lässt sich besonders günstig die Wärmespeicherfähigkeit des Füllreservoirs erhöhen. Als PCM-Material können insbesondere Paraffine gewählt sein. Es ist zweckmäßigerweise in eine rundum dichte Hülle eingeschlossen, so dass es bei Überschreiten seiner Phasenwechseltemperatur, d.h. im flüssigen Zustand nicht auslaufen kann.

Es kann insbesondere bereits ausreichend sein, wenn das Füllreservoir WT1 nur an seiner dem Spülbehälter SB zugewandten Wandung WI1 außenseitig und/oder innenseitig zumindest eine thermische Isolations- Schicht bzw. -Lage, insbesondere aus PCM aufweist. An seinen übrigen Wandungen kann eine thermische Isolierung, insbesondere PCM- Material, ggf. weggelassen sein. Dies spart Isolationsmaterial ein und kann konstruktiv und montagetechnisch günstig sein. Es ist somit auf einfache Weise zwischen dem Innenraum des Spülbehälters und dem Innenraum des Füllreservoirs ein erfindungsgemäßes schwach thermisch koppelndes Isolationssystem bereitgestellt. Das separate Wärmedämmelement IS1 kann dann entfallen.

Ggf. kann es auch vorteilhaft sein, wenn das Füllreservoir selbst mit einer vollständigen Hülle aus PCM, d.h. rundum innenwandseitig und/oder außenwandseitig mit PCM ("phase change material") als Isolationsmaterial versehen ist, dessen Phasenwechseltemperatur höher als die des im Füllreservoir zwischengespeicherten Frischwassers beim Wärmepumpenbetrieb ist, insbesondere zwischen 3°C und 10°C liegt. Seine Phasenwechseltemperatur ist vorzugsweise niedriger als die Temperatur im Spülbehälter am Ende des jeweiligen Aufheizzeitabschnitts des jeweiligen Teilspülgangs mit aufzuheizender Spülflüssigkeit wie z.B. des Reinigungsgangs oder Klarspülgangs, bevorzugt niedriger als die Umgebungstemperatur gewählt, so dass in ihm Verlustwärme aus dem Spülbehälter als latente Wärme, insbesondere auch Umgebungswärme, gespeichert werden kann. Übliche PCM- Werkstoffe weisen relativ schlechte wärmeleitende Eigenschaften auf, d.h. sie wirken thermisch isolierend. Auf diese Weise kann das Füllreservoir durch innenwandseitig und/oder außenwandseitig angebrachtes PCM innen und/oder außen thermisch isoliert werden. Dadurch, dass der Phasenwechsel des PCM's auf einem höheren Temperaturniveau als der Phasenwechsel des Wassers erfolgt, bleibt die Temperatur der Wandung des Füllreservoirs an der dem Spülbehälter abgewandten Außenseite des Füllreservoirs durch Abgabe von latenter Wärme annähernd konstant bei der Schmelztemperatur des Phasenwechselmaterials während der Zeitdauer, in der die Wärmepumpe in Betrieb ist und das Frischwasser im Füllreservoir zu Eiswasser und/oder Festeis macht. Wenn die Wärmepumpe ausgeschaltet ist, nimmt das PCM Wärme Verlustwärme aus dem Spülbehälter und/oder Wärme aus der Umgebung auf und schmilzt auf, wodurch es zumindest auf einer Schmelztemperatur ist, die höher als die von Wasser im Füllreservoir ist. In einer Küche ist üblicherweise mit einer Temperatur von etwa 15 °C - 24°C zu rechnen, so dass das PCM- Material zweckmäßigerweise eine Schmelztemperatur aufweist, die höher als die von Eiswasser/Festeis ist und niedriger als die Umgebungstemperatur. Wegen dieser Reduzierung des Temperaturgefälles zwischen der Temperatur der Umgebungsluft und der Temperatur der dem Spülbehälter abgewandten Außenwand des Füllreservoirs gegenüber dem Fall, dass die dem Spülbehälter abgewandte Außenwand des Füllreservoirs ohne PCM ist, kann weniger Wasser aus der Umgebungsluft an der dem Spülbehälter abgewandten Außenseite des Füllreservoirs kondensieren. Dadurch sind Verunreinigungen oder Beschädigungen des Bodens und/oder angrenzender Küchenmöbelteile am Aufstellungsort der Geschirrspülmaschine weitgehend vermieden. Wenn das Frischwasser im Füllreservoir nach Abschluss des letzten Wärmepumpenbetriebs wie z.B. beim Klarspülgang stark abgekühlt ist, insbesondere auf weniger als 4° C, bevorzugt unter 0° C und zu Eiswasser/Festeis geworden ist, so verzögert das dann ebenfalls unter seine Phasenwechseltemperatur abgekühlte und erstarrte PCM die Erwärmung des Kaltwassers oder Eiswassers/Festeises im Füllreservoir durch die aus dem Spülbehälter entweichende Verlustwärme im Vergleich zu einem Füllreservoir ohne PCM während des spülgangabschließenden Trocknungsgangs.

Günstig kann es ggf. auch sein, wenn für das Wärmedämmelement IS1 (siehe z.B. das Ausführungsbeispiel von Figur 1) zwischen dem Spülbehälter SB und dem außen angebrachten Füllreservoir WT1 ein PCM-Material verwendet ist, d.h. verallgemeinert ausgedrückt ist bei dieser vorteilhaften Variante zwischen der dem Spülbehälter zugewandten Wandung des Füllreservoirs und der dem Füllreservoir zugewandten Wandung des Spülbehälters zumindest eine Lage oder Schicht aus PCM eingefügt. Für das PCM ist die Schmelztemperatur vorteilhaft höher als die von Wasser und niedriger als die Temperatur im Spülbehälter am Ende der Aufheizzeitdauer des jeweiligen Teilspülgangs mit aufzuheizendem Spülwasser gewählt. Insbesondere ist die Phasenwechseltemperatur des PCM niedriger als die Umgebungstemperatur gewählt, um auch Umgebungswärme sammeln zu können. Dies ist wie bereits oben erläutert günstig für den Trocknungsgang, da die Wandung des Spülbehälters, an der das Füllreservoir angebracht ist, länger ausreichend kühl für eine an ihr gewünschte Kondensation von Feuchtigkeit aus der feucht-warmen Luft im Spülbehälter beim Trocknungsgang gehalten werden kann. Eine eigenständige thermische Isolierung, insbesondere eine PCM-Ummantelung, des Füllreservoirs (wie im vorausgehenden Ausführungsbeispiel) kann dann ggf. entfallen.

Ein besonderer Vorteil der erfindungsgemäß ausgebildeten Geschirrspülmaschine mit dem außen am Spülbehälter angebrachten Füllreservoir, das in Doppelfunktion als Befüllungsmittel für das Füllen des Spülbehälters mit einer für den jeweiligen wasserführenden Teilspülgang geforderten Spülflüssigkeitsmenge und gleichzeitig als Wärmequelle für die Wärmepumpe dient, ist ganz allgemein betrachtet, dass die Außentemperatur des Füllreservoirs WT1 ständig, d.h. vorzugsweise während aller Teilspülgänge VG, RG, ZG, KG und dem abschließenden Trocknungsgang TG des Spülgangs unterhalb der Umgebungstemperatur UT liegt. Dadurch ist sichergestellt, dass dort an der jeweilig mit einem Füllreservoir wie z.B. WT1 bestückten Wandung wie z. B. SW1 des Spülbehälters ein Wärmestrom vom wärmeren Spülbehälter in das demgegenüber kältere Füllreservoir hinein erfolgt und ein Wärmetransport vom Innenraum des Spülbehälters an die Umgebung weitgehend vermieden ist. Zusätzlich ist vorteilhaft, dass insbesondere auch aus der Umgebung thermische Energie in das dergegenüber kältere Füllreservoir abgezogen und somit zur teilweisen Erwärmung des Füllreservoirs WT1 genutzt werden kann.

Vorteilhaft ist das Füllreservoir wie z.B. WT1 als offener Speicher ausgebildet, d.h. ihm wird während des jeweiligen Spülgangs SG, insbesondere pro wasserführenden Teilspülgang, zumindest einmal gespeichertes Frischwasser FW über die Abführvorrichtung wie z.B. ALV entnommen und zumindest einmal neues Frischwasser wie z.B. FW* über die Zuführvorrichtung wie z.B. ZLV zugeführt. Durch diesen teilweisen oder vollständigen Wasseraustausch bzw. Wasserwechsel pro Spülgang, insbesondere pro jedem Teilspülgang, ist eine Verkeimung des Füllreservoirs mit Mikroorganismen weitgehend vermieden, wie dies ansonsten bei einem abgeschlossenen, mit Wasser einmalig vollgefüllten Wärmespeichertank möglich ist. Auch die Gefahr von unangenehmen Gerüchen ist bei einem offenen Speicher unkritisch. Zudem ist durch den teilweisen oder vollständigen Wasseraustausch oder Wasserwechsel in vorteilhafter Weise eine thermische Regenerierung des Füllreservoirs effizient möglich. Durch die ein oder mehrmalige Entnahme und Zufuhr von Frischwasser pro Spülgang, vorzugsweise durch mindestens einen Entnahme- und mindestens einen Zuführvorgang pro wasserführenden Teilspülgang, insbesondere am Ende des jeweiligen wasserführenden Teilspülgangs oder in der Übergangsphase von einem wasserführenden Teilspülgang zum nächsten wasserführenden Teilspülgang eines Spülgangs, wird zudem eine Fließdynamik bzw. Wasserbewegung im Füllreservoir erzeugt, d.h. eine Konvektion erzwungen, wodurch es zu einer Durchmischung der neu aus der Zuführeinrichtung zufließenden Frischwassermenge und der im Füllreservoir etwaig bereits vorhandenen Wassermenge kommt. Es stellt sich somit eine Mischtemperatur für dieses Wassergemisch im Füllreservoir ein, welche zwischen der Einlauftemperatur TWT* des neu zulaufenden Frischwassers FW* und der aktuellen Temperatur TWT des im Füllreservoir vorhandenen Wassers FW liegt. Erfolgt ein Betrieb der Wärmepumpe für eine gewünschte Aufheizzeitdauer eines Teilspülgangs und wird dadurch mittels des Verdampfers der im Füllreservoir enthaltenden Wassermenge Wärmeenergie entzogen, so wird die Wassermenge im Füllreservoir abgekühlt und insbesondere zur Nutzung der im Wasser gespeicherten latenten Wärmeenergie Eis erzeugt. Wird nun nach einer weiteren Ausführungsvariante ggf. Frischwasser in das Füllreservoir mittels der Zuführvorrichtung zumindest einmal während der Zeitdauer des mittels des Verdampfers bewirkten Wärmeentzugs eingelassen, so kann das Gefrieren der im Füllreservoir vorhandenen Wassermenge verzögert, oder falls sich bereits Eiswasser/Festeis gebildet hat, dieses aufgetaut, d.h. regeneriert werden. Durch die Zufuhr von Frischwasser kann also das Füllreservoir mit thermischer Energie neu aufgeladen bzw. aufgefrischt werden. Dazu stellt das Füllreservoir zweckmäßigerweise ein entsprechendes Nachfüllvolumen bereit. Für den Entzug einer bestimmten gewünschten thermischen Wärmeenergiemenge durch die Wärmepumpe kann durch die Zufuhr von Frischwasser das Speichervolumen des offenen Füllreservoirs für Wasser kleiner dimensioniert werden als dies bei einem geschlossenen Wassertank der Fall wäre. Darüber hinaus wird das aus dem Füllreservoir jeweilig abgelassene Wasser als Spülflüssigkeit im Spülbehälter für den jeweiligen wasserführenden Teilspülgang eines durchzuführenden Spülgangs verwendet, so dass strenge Anforderung an einen maximal erlaubten Wasserverbrauch pro Spülgang erfüllt werden können.

Zusammenfassend betrachtet ist an einer oder mehreren Seitenwänden des Spülbehälters eines Geschirrspülers ein Füllreservoir bzw. Wärmetauscher angebracht, welcher mit Frischwasser gefüllt ist. Zwischen dem Füllreservoir und der Behälterwand ist eine thermische Isolierschicht vorhanden, welche eine geringe Menge an Wärmestrom zwischen dem Spülbehälter und dem Füllreservoir zulässt. Das Wasser des Füllreservoirs wird zur Nutzung als Spülflüssigkeit während ein oder mehrerer Teilspülgänge eines Spülgangs in den Spülbehälter ein-, insbesondere abgelassen. Am oder im Füllreservoir ist der Verdampfer einer Wärmepumpe angebracht, welcher die Wärmeenergie aus dem Speicherwasser des Füllreservoirs in den Spülbehälter, insbesondere dessen Spülflüssigkeits- Umwälzkreislauf pumpt. Dazu ist zweckmäßigerweise der Kondensor bzw. Verflüssiger der Wärmepumpe in den Wasserkreislauf der Spülflottenumwälzung der Geschirrspülmaschine integriert. Alternativ kann der Kondensor der Wärmepumpe am Boden des Spülbehälters angebracht sein. Der Kondensor kann zur Trocknungsverbesserung verwendet werden, d.h. die Wärmepumpe kann auch beim Trocknungsgang eines Spülgangs weiter betrieben werden. Bei eingeschalteter Wärmepumpe beim Trocknungsgang wird zweckmäßigerweise mittels eines entsprechend mit dem Innenraum des Spülbehälters thermisch gekoppelten Kondensors die Luft im Spülbehälter erhitzt und getrocknet. Dazu kann es vorteilhaft sein, wenn der Kondensor in einen Luftkreislauf integriert ist, der mit dem Innenraum des Spülbehälters verbunden ist. Diese Anordnung kann zusätzlich in der Trocknungsphase zur Trocknungsverbesserung verwendet werden.

Eine elektrische Energieeinsparung pro Spülgang ist nun dadurch möglich, dass das Füllreservoir, das zum Befüllen des Spülbehälters mit einlaufseitigem Frischwasser vorgesehen ist, zusätzlich als Wärmequelle für eine Wärmepumpe dient. Dabei ist das Füllreservoir vorteilhaft als offener Behälter ausgebildet, dem pro Spülgang, insbesondere pro wasserführenden Teilspülgang, zumindest einmal Frischwasser zugeführt wird und zumindest einmal Wasser zur Befüllung des Spülbehälters entnommen wird. Das Füllreservoir ist also vereinfacht ausgedrückt in den Spülzyklus eines ablaufenden Geschirrspülprogramms, vorzugsweise durch Wasserentnahmen zur Befüllung des Spülbehälters mit gewünschten Wassermengen für die wasserführende Teilspülgänge eines Spülgangs und durch damit in Zusammenhang stehende Nachbefüllungen mit Frischwasser, integriert. Durch den damit einhergehenden dynamischen Wasseraustausch im Füllreservoir während eines Spülgangs ist die Gefahr einer Verkeimung des Füllreservoirs vermieden. Darüber hinaus kann die thermische Verlustwärme bzw. Abstrahlenergie aus dem Spülbehälter, insbesondere während der Nachwaschphase des Reinigungsgangs, im Füllreservoir aufgefangen und gespeichert werden.

Zusätzliche Verbesserungspotentiale können insbesondere durch folgende vorteilhafte Ausführungsvarianten ermöglicht sein:
- Die Isolierung zwischen dem Füllreservoir und der ihm zugeordneten Spülbehälterwand wird als schaltbare Wärmedämmung ausgeführt, d.h. in der Trocknungsphase wird die Kondensationswärme bei leitend geschalteter Isolation gut abgeführt.
- Im oder am Füllreservoir kann zusätzlich ein PCM (z.B. mit einer Schmelztemp. bei ca. 3°C) vorgesehen sein, dessen Schmelztemperatur höher als die von Wasser ist, um die Speicherenergie im Füllreservoir zu erhöhen. Dadurch kann ggf. vermieden werden, dass das Wasser im Füllreservoir durchgefroren werden muss, um eine geforderte Menge an sensibler und latenter Wärme aus dem Füllreservoir entziehen zu können. Dabei kann das Füllreservoir vorzugsweise ständig mit Wasser gefüllt sein, d.h. auslaufendes Wasser wird sofort mit einlaufendem Wasser gefüllt. Eine Verbesserung des COP Wertes der Wärmepumpe ist dabei zu erwarten, da die Temperaturdeltas zwischen Kondensator bzw. Kondensor und Verdampfer geringer als bei einem geschlossenen Wassertank als Wärmespeicher sind.

- Durch einen größeren Anteil der Aufheizenergie zugunsten der Wärmepumpe in den Aufheizphasen eines Spülgangs wird der Energievorteil größer gegenüber einer Geschirrspülmaschine mit einer konventionellen Wasserheizung. Der Anteil der Zusatzheizung (insbesondere Heizpumpe) an der pro Aufheizphase insgesamt bereitzustellenden thermischen Wärmemenge kann reduziert werden. Ggf. kann eine Zusatzheizung ganz entfallen und ausschließlich die Wärmepumpe zum Aufheizen der Spülflüssigkeit im Spülbehälter dienen.
- In der Trocknungsphase kann die Wärmepumpe zusätzlich zur Trocknung benützt werden. Der Kondensator bzw. Verflüssiger z.B. angebracht am Behälterboden erwärmt den Innenraum, wodurch der Verdunstungsprozess von Flüssigkeit, insbesondere am Spülgut, im Spülbehälter gefördert wird. Die kalten Seitenwände des Spülbehälters, abgekühlt durch den Verdampfer fördern dabei den Kondensationsprozess.
- Ein Flottenspeicher, in welchem das warme Wasser z.B. der Klarspülflotte nach Beendigung des Klarspülgangs gespeichert wird, kann beim Einsatz der Wärmepumpe in der Trocknungsphase zusätzlich als Energiespeicher für die Wärmepumpe benützt werden.
- Mehrere Wände des Spülbehälters können mit dem Füllreservoir ausgestattet werden, an das der Verdampfer der Wärmepumpe thermisch angekoppelt ist. Dadurch ist ein höheres Energiepotential vorhanden und die Trocknung wird durch zusätzliche Kondensationsflächen erhöht. Der Energieverlust an die Umgebung durch konvektiven Wärmetransfer und durch Wärmestrahlung wird negativ, da die Wände eine Temperatur unterhalb der Umgebungstemperatur haben.
- Der Abwasserschlauch der Geschirrspülmaschine kann vorteilhafter Weise durch das Füllreservoir hindurchgeführt sein. Dadurch wird das Speicherwasser im Füllreservoir zusätzlich durch aus dem Spülbehälter mittels der Entleerungspumpe abgepumptes, noch warmes Abwasser erwärmt.

Vorteile dazu sind insbesondere:
- Wärmeverluste aus dem Spülbehälter nach außen werden im Füllreservoir gespeichert und durch die Wärmepumpe wieder in den Spülbehälter zurück gepumpt.
- Zusätzlich kann das Speicherwasser im Füllreservoir durch Wärme aus der Umgebung aufgeheizt werden.
- Es liegt ein offenes Füllreservoir als Energiespeicher vor, da das Wasser aus dem Füllreservoir nicht nur als Wärmequelle für die Wärmepumpe herangezogen wird, sondern im Spülerwasserkreislauf während eines Spülgangs integriert ist.
- Wasserwechsel sind im Füllreservoir pro Spülgang vorhanden, wodurch die Gefahr der Verkeimung stark reduziert oder ganz vermieden ist (gegenüber einem geschlossenem System).
- Durch die Anordnung des Füllreservoirs an der Seitenwand und nicht am Bodenraum des Spülbehälters ist eine Bauraumersparnis in der Bodengruppe der Geschirrspülmaschine sichergestellt.
- Energiereduzierung durch Einsatz der Wärmepumpe

## Patentansprüche

1. Haushalts- Geschirrspülmaschine (GS) zum Waschen von Spülgut in ein oder mehreren wasserführenden Teilspülgängen (z.B. VG, RG, ZG, KG) und zum anschließenden Trocknen des Spülguts in mindestens einem nachfolgenden Trocknungsgang (TG) eines durchzuführenden Spülgangs (SG)
- mit einem Spülbehälter (SB) zur Aufnahme des Spülguts,
- mit zumindest einem außen am Spülbehälter (SB) angebrachten Füllreservoir (WT1), dessen Einlauf (IL1) mit einer einlaufseitigen Frischwasser- Zuführvorrichtung (ZLV) zur Befüllung mit Frischwasser (FW*) aus einem Frischwassernetz (WN) verbunden ist, und dessen Auslauf (OF1) mit einer auslaufseitigen Frischwasser- Abführvorrichtung (ALV) zur Entnahme einer für den jeweilig durchzuführenden Teilspülgang (z.B. VG, RG, ZG, KG) jeweils geforderten Frischwassermenge (ΔWMi mit i=VG, RG, ZG, KG) aus dem Füllreservoir (WT1) und zu deren Zuführung in den Spülbehälter (SB) verbunden ist,
- mit zumindest einer Wärmepumpe (WP1), deren Kreislauf einen Kompressor (CO), Druckminderungsmittel (DM), einen Verdampfer (VD1) und einen Verflüssiger (VF1) umfasst, wobei der Verdampfer (VD1) mit dem Füllreservoir (WT1) zum Entzug von Wärmeenergie (QP1) aus dort gespeichertem Frischwasser (FW) thermisch gekoppelt ist und der Verflüssiger (VF1) zur Einspeisung von Wärmeenergie (QP1*) in den Innenraum des Spülbehälters (SB) vorgesehen ist, und
- mit einem zwischen dem Innenraum des Spülbehälters (SB) und dem Innenraum des Füllreservoirs (WT1) ein- oder mehrlagigen Isolationsmaterialsystem (SW1, BI, IS1, WI1) zur Verringerung eines Wärmestroms (QD) aus dem Spülbehälter (SB).

2. Haushalts- Geschirrspülmaschine nach Anspruch 1, **dadurch gekennzeichnet, dass** das Füllreservoir (WT1) außen an einer Wandung, insbesondere Seitenwandung (SW1), des Spülbehälters (SB) anliegt, insbesondere dort flächig kontaktierend fest angebracht ist.

3. Haushalts- Geschirrspülmaschine nach mindestens einem der vorhergehenden Ansprüche, **dadurch gekennzeichnet, dass** das thermische Isolationsmaterialsystem (SW1, BI, IS1, WI1) zumindest ein, insbesondere flächiges, Wärmedämmungselement (IS1) umfasst, das als Festkörper, insbesondere als Dämmvlies oder Schaummaterial, ausgebildet ist.

4. Haushalts- Geschirrspülmaschine nach Anspruch 3, **dadurch gekennzeichnet, dass** das flächige Wärmedämmungselement (IS1) außen auf der äußeren Wandung (SW1) des Spülbehälters (SB) oder außen auf einer auf der Wandung aufgebrachten Belagschicht (BI), insbesondere Bitumenschicht, aufliegt und darüber das Füllreservoir (WT1) flächig kontaktierend aufsitzt.

5. Haushalts- Geschirrspülmaschine nach mindestens einem der vorhergehenden Ansprüche, **dadurch gekennzeichnet, dass** das Füllreservoir (WT1) mindestens 50%, insbesondere zwischen 70% und 100%, der Gesamtfläche der ihm jeweils zugeordneten Wandung (SW1), bevorzugt im Wesentlichen die Gesamtfläche der ihm zugeordneten Wandung (SW1), des Spülbehälters (SB) außen abdeckt.

6. Haushalts- Geschirrspülmaschine nach mindestens einem der vorhergehenden Ansprüche, **dadurch gekennzeichnet, dass** mehrere, insbesondere die beiden einander gegenüberliegenden Seitenwandungen (SW1, SW2), bevorzugt alle Wandungen, des Spülbehälters (SB) jeweils durch mindestens ein Füllreservoir (WT1, WT2) von außen abgedeckt sind.

7. Haushalts- Geschirrspülmaschine nach mindestens einem der vorhergehenden Ansprüche, **dadurch gekennzeichnet, dass** das Füllreservoir (WT1) auf seiner dem Spülbehälter (SB) zugewandten Wandungsseite (WI1) thermisch stärker isoliert ist als auf seiner dem Spülbehälter (SB) abgewandten, insbesondere der Umgebung zugewandten Wandungsseite (WA).

8. Haushalts- Geschirrspülmaschine nach mindestens einem der vorhergehenden Ansprüche, **dadurch gekennzeichnet, dass** das thermische Isolationsmaterialsystem (SW1, BI, IS1, WI1) insgesamt betrachtet einen Wärmedurchgangswiderstand Rₜₕ von mindestens 0,02 (K m²)/W, insbesondere zwischen 0,1 (K m²)/W und 1 (K m²)/W, aufweist.

9. Haushalts- Geschirrspülmaschine nach mindestens einem der vorhergehenden Ansprüche, **dadurch gekennzeichnet, dass** das Füllreservoir (WT1) innen und/oder außen mit PCM- Material (PE) versehen ist, dessen Phasenwechseltemperatur höher als die Phasenwechseltemperatur des im Füllreservoir (WT1) zwischengespeicherten Frischwassers (FW) ist, und insbesondere zwischen 3°C und 10°C liegt.

10. Haushalts- Geschirrspülmaschine nach mindestens einem der vorhergehenden Ansprüche, **dadurch gekennzeichnet, dass** die Wärmepumpe (WP1) derart ausgebildet und/oder insbesondere mittels einer Kontrolleinrichtung (CO) derart betrieben ist, dass am Ende (tAE) des mittels der Wärmepumpe (WP1) durchgeführten Aufheizzeitabschnitts (z.B. APR) eines Teilspülgangs (z.B. RG) eine im Spülbehälter (SB) vorhandene Behandlungsmenge an Wasser auf eine geforderte Mindesttemperatur (z.B. RT) unter Zuhilfenahme des Verflüssigers (VF1) der Wärmepumpe (WP1) erwärmt und das Frischwasser (FW) im Füllreservoir (WT1) mittels des Verdampfers (VD1) der Wärmepumpe (WP1) auf eine Temperatur (TWT) im Bereich zwischen - 4 °C und + 10°C abgekühlt ist, insbesondere zwischen 10% und 90 % des maximalen Füllvolumens (VO) an Wasser, insbesondere Frischwasser (FW), im Füllreservoir (WT1) in den gefrorenen Zustand gebracht ist.

11. Haushalts- Geschirrspülmaschine nach mindestens einem der vorhergehenden Ansprüche, **dadurch gekennzeichnet, dass** das Füllreservoir (WT1) mit dem Spülbehälter (SB) derart in thermischer Wirkverbindung steht, und/oder die Wärmepumpe (WP1) derart ausgebildet und/oder insbesondere unter Zuhilfenahme einer Kontrolleinrichtung (CO) derart betrieben ist, dass die Temperatur (TWT) des Frischwassers (FW) im Füllreservoir (WT1) während der Zeitdauer (RZ) nach dem Ende (z.B. tAE) des Aufheizzeitabschnitts (z.B. APR) eines vorausgehenden Teilspülgangs (z.B. RG), bei dem die im Spülbehälter (SB) vorhandene Wassermenge (WMi mit i= RG) unter Zuhilfenahme des Verflüssigers (VF1) der Wärmepumpe (WP1) aufgeheizt worden ist, bis zum Start (z.B. tZS) eines nachfolgenden Teilspülgangs (z.B. ZG), insbesondere bis zum Start (z.B. tKS) eines nachfolgenden Teilspülgangs (z.B. KG), bei dem die Wärmepumpe (WP1) erneut in Betrieb genommen ist, niedriger als die Temperatur (TSB) im Spülbehälter (SB) ist, und insbesondere überwiegend während dieser Zeitdauer (RZ) niedriger als die Umgebungstemperatur (UT) am Standort der Haushalts- Geschirrspülmaschine ist.

12. Haushalts- Geschirrspülmaschine nach mindestens einem der vorhergehenden Ansprüche, **dadurch gekennzeichnet, dass** das Füllreservoir (WT1) mit dem Spülbehälter (SB) derart in thermischer Wirkverbindung steht, und/oder die Wärmepumpe (WP1) derart ausgebildet und/oder insbesondere unter Zuhilfenahme einer Kontrolleinrichtung (CO) derart betrieben ist/sind, dass Eis/Eiswasser, das sich während des Aufheizzeitabschnitts (z.B. APR) einer vorausgehenden Teilspülgangs (z.B. RG), bei dem die im Spülbehälter (SB) vorhandene Wassermenge (WMi mit i= RG) unter Zuhilfenahme des Verflüssigers (VF1) der Wärmepumpe (WP1) aufgeheizt worden ist, im Füllreservoir (WT1) aufgrund von Wärmeentzug durch den Verdampfer (VD1) gebildet hat, bis zum Start (z.B. tZS) eines nachfolgenden Teilspülgangs (z.B. ZG), insbesondere bis zum Start (z.B. tKS) eines nachfolgenden Teilspülgangs (z.B. KG), bei der die Wärmepumpe (WP1) erneut in Betrieb genommen ist, im Wesentlichen durch Wärmetransport (QD) aus dem Spülbehälter (SB) in das Füllreservoir (WT1) hinein und/oder ggf. durch Wärmetransport (QA) aus der Umgebung der Haushalts- Geschirrspülmaschine in das Füllreservoir (WT1) hinein zu mindestens 25 %, insbesondere zwischen 40 % und 100 %, bevorzugt zu 100%, seines am Ende (tAE) des Aufheizzeitabschnitts (APR) jenes vorausgehenden Teilspülgangs (z.B. RG) vorliegenden Eisvolumens, aufgetaut ist, und dass das aufgetaute Wasser im Füllreservoir (WT1) zum Start (z.B. tZS) des nachfolgenden Teilspülgangs (z.B. ZG) eine Temperatur (TWT) oberhalb des Gefrierpunkts von Wasser, bevorzugt zwischen 15°C und 30°C, aufweist.

13. Haushalts- Geschirrspülmaschine nach mindestens einem der vorhergehenden Ansprüche, **dadurch gekennzeichnet, dass** das Füllreservoir (WT1) als offener Speicher, insbesondere Überlaufspeicher, ausgebildet ist.

14. Haushalts- Geschirrspülmaschine nach mindestens einem der vorhergehenden Ansprüche, **dadurch gekennzeichnet, dass** das Füllreservoir (WT1), seine einlaufseitige Frischwasser- Zuführvorrichtung (ZLV) zur Zuführung von Frischwasser (FW*) in das Füllreservoir (WT1), und/oder seine auslaufseitige Frischwasser- Abführvorrichtung (ALV) zur Entnahme von Frischwasser (FW) aus dem Füllreservoir (WT1) derart ausgebildet ist/sind, und/oder insbesondere unter Zuhilfenahme einer Kontrolleinrichtung (CO) derart einstellbar ist/sind, dass mit der Entnahme von Frischwasser (FW) aus dem Füllreservoir (WT1) für den jeweiligen wasserführenden Teilspülgang (z.B. ZG) die Zuführung von Frischwasser (FW*) in das Füllreservoir (WT1), insbesondere zeitlich und/oder mengenmäßig, gekoppelt ist, insbesondere korreliert.

15. Haushalts- Geschirrspülmaschine nach mindestens einem der vorhergehenden Ansprüche, **dadurch gekennzeichnet, dass** das Füllreservoir (WT1), seine einlaufseitige Frischwasser- Zuführvorrichtung (ZLV) zur Zuführung von Frischwasser (FW*) in das Füllreservoir (WT1), und/oder seine auslaufseitige Frischwasser- Abführvorrichtung (ALV) zur Entnahme von Frischwasser (FW) aus dem Füllreservoir (WT1) derart ausgebildet ist/sind, und/oder insbesondere unter Zuhilfenahme einer Kontrolleinrichtung (CO) derart einstellbar ist/sind, dass dem Füllreservoir (WT1) im Wesentlichen dieselbe Wassermenge (ΔWMi mit i = VG, RG, ZG, KG) an Frischwasser (FW), die aus ihm für den jeweiligen wasserführenden Teilspülgang (z.B. RG) entnommen und über die Frischwasser- Abführvorrichtung (ALV) in den Spülbehälter (SB) abgeführt ist, durch die Frischwasser-Zuführvorrichtung (ZLV) zeitlich weitgehend vollständig überlappend zu dieser Entnahme neu zugeführt ist.

16. Haushalts- Geschirrspülmaschine nach mindestens einem der vorhergehenden Ansprüche, **dadurch gekennzeichnet, dass** das Füllreservoir (WT1), seine einlaufseitige Frischwasser- Zuführvorrichtung (ZLV) zur Zuführung von Frischwasser (FW*) in das Füllreservoir (WT1), und/oder seine auslaufseitige Frischwasser- Abführvorrichtung (ALV) zur Entnahme von Frischwasser (FW) aus dem Füllreservoir (WT1) derart ausgebildet ist/sind, und/oder insbesondere unter Zuhilfenahme einer Kontrolleinrichtung (CO) derart einstellbar ist/sind, dass das Füllreservoir (WT1) während der ein oder mehreren Teilspülgänge (z.B. VG, RG, ZG, KG) und ggf. auch während des spülgangabschließenden Trocknungsgangs (TG) des jeweiligen Spülgangs (SG), insbesondere über die ein oder mehreren Füll- und/oder Abpumpsequenzen des gesamten Spülgangs (SG) hinweg, stets etwa mit demselben Sollpegelstand, insbesondere maximalen Sollpegelstand (VO), der dem maximalen Flüssigkeits- Füllvolumen des Füllreservoirs (WT1) zugeordnet ist, mit Frischwasser (FW), gefüllt ist.

17. Haushalts- Geschirrspülmaschine nach mindestens einem der vorhergehenden Ansprüche, **dadurch gekennzeichnet, dass** die einlaufseitige Frischwasser-Zuführvorrichtung (ZLV) zur Zuführung von Frischwasser (FW*) in das Füllreservoir (WT1) derart ausgebildet ist, und/oder insbesondere unter Zuhilfenahme einer Kontrolleinrichtung (CO) derart einstellbar ist, dass nach der Aufheizphase (APR) eines Teilspülgangs (z.B. RG), bei der die im Spülbehälter (SB) vorhandene Wassermenge (z.B. WMi mit i= RG) unter Zuhilfenahme des Verflüssigers (VF1) der Wärmepumpe (WP1) aufgeheizt worden ist und bei der die im Füllreservoir (WT1) vorhandene Frischwassermenge (z.B. mit i= RG) unter Zuhilfenahme des Verdampfers (VD1) der Wärmepumpe (WP1) auf eine Kaltwassertemperatur (TWT), die geringer als die Einlauftemperatur (TWT*) des Frischwassers (FW*) ist, insbesondere auf weniger als 8 ° C, abgekühlt, bevorzugt teilweise oder vollständig zu Eis gefroren ist, Frischwasser (FW*) mit einer gegenüber der Kaltwassertemperatur (TWT) höheren Einlauftemperatur (TWT*) zum Regenerieren dieses Kaltwassers oder Eises in das Füllreservoir (SB) neu eingelassen ist.

18. Haushalts- Geschirrspülmaschine nach mindestens einem der vorhergehenden Ansprüche, **dadurch gekennzeichnet, dass** mindestens ein Detektionsmittel (DV) zum Erfassen mindestens eines Parameters (T), der den jeweiligen Wärmeenergiegehalt des Füllreservoirs (WT1) kennzeichnet, vorgesehen ist, und dass eine Kontrolleinrichtung (CO) mit Hilfe dieses Parameters (T) den Arbeitsablauf, insbesondere die Einschalt- und/oder die Ausschaltzustände, der Wärmepumpe (WP1), und/oder einer sonstigen Komponente (ZV) des Füllreservoirs (WT1), deren Frischwasser- Zuführeinrichtung (ZLV) und/oder deren Abführvorrichtung kontrolliert, insbesondere steuert und/oder regelt.

19. Haushalts- Geschirrspülmaschine nach mindestens einem der vorhergehenden Ansprüche, **dadurch gekennzeichnet, dass** zusätzlich mindestens ein Wasserbewegungsmittel, insbesondere Strömungserzeugungsmittel (ZP), vorgesehen ist, das im Füllreservoir (WT1) eine Wasserbewegung, insbesondere Wasserströmung, bevorzugt Zirkulationsströmung (KS), erzwingt, insbesondere wenn die Wärmepumpe (WP1) in Betrieb ist.

20. Haushalts- Geschirrspülmaschine nach mindestens einem der vorhergehenden Ansprüche, **dadurch gekennzeichnet, dass** während des vorgegebenen Aufheizzeitabschnitts (APR) des Reinigungsgangs (RG) und während des vorgegebenen Aufheizzeitabschnitts (APK) des Klarspülgangs (KG) des jeweilig durchzuführenden Spülgangs (SG) ausschließlich die Wärmepumpe (WP1) zum Erwärmen von Spülflüssigkeit im Spülbehälter (SB) vorgesehen ist.

21. Haushalts- Geschirrspülmaschine nach mindestens einem der Ansprüche 1 bis 19, **dadurch gekennzeichnet, dass** zusätzlich zur Wärmepumpe (WP1) eine elektrische Heizung (HP) vorgesehen ist, die durch eine Kontrolleinrichtung (CO) parallel zur Wärmepumpe (WP1) zum Erwärmen von Spülflüssigkeit und/oder Luft im Spülbehälter (SB) auf eine geforderte Mindesttemperatur (RT, KT) in Betrieb nehmbar ist, oder die durch eine Kontrolleinrichtung (CO) erst nach der Aufheizzeitdauer der Wärmepumpe (WP1) nach deren Ausschalten zum Nacherwärmen von Spülflüssigkeit und/oder Luft im Spülbehälter (SB) auf eine geforderte Mindesttemperatur (RT, KT) in Betrieb nehmbar ist.

22. Haushalts- Geschirrspülmaschine nach mindestens einem der vorhergehenden Ansprüche, **dadurch gekennzeichnet, dass** die Wärmepumpe (WP1) während des spülgangabschließenden Trocknungsgangs (TG) betrieben ist.

23. Verfahren zum Waschen von Spülgut im Spülbehälter (SB) einer Haushalts-Geschirrspülmaschine (GS), die insbesondere nach mindestens einem der vorhergehenden Ansprüche ausgebildet ist, in ein oder mehreren wasserführenden Teilspülgängen (z.B. VG, RG, ZG, KG) und zum anschließenden Trocknen des Spülguts in mindestens einem nachfolgenden Trocknungsgang (TG) eines durchzuführenden Spülgangs (SG),
- wobei eine für den jeweilig durchzuführenden Teilspülgang (z.B. RG) im Spülbehälter (SB) geforderte Wassermenge (WMi mit i = VG, RG, ZG, KG) teilweise oder ganz aus zumindest einem außen am Spülbehälter (SB) angebrachten Füllreservoir (WT1), dessen Einlauf (IL1) mit einer einlaufseitigen Frischwasser- Zuführvorrichtung (ZLV) zur Befüllung mit Frischwasser (FW*) aus einem Frischwassernetz (WN) verbunden ist, und dessen Auslauf (OF1) mit einer auslaufseitigen Frischwasser-Abführvorrichtung (ALV) zur Entnahme einer für den jeweilig durchzuführenden Teilspülgang (z.B. RG) jeweils geforderten Frischwassermenge (ΔWMi mit i=VG, RG, ZG, KG) aus dem Füllreservoir (WT1) und zu deren Zuführung in den Spülbehälter (SB) verbunden ist, entnommen und dem Spülbehälter (SB) zugeführt wird,
- wobei für zumindest einen der Teilspülgänge (z.B. RG), für dessen Wassermenge (WMi mit i = RG) im Innenraum des Spülbehälters (SB) eine Erwärmung auf eine Mindesttemperatur (z.B. RT) gefordert ist, Wärmeenergie (QP1) mittels des Verdampfers (VD1) einer Wärmepumpe (WP1) aus dem im Füllreservoir (WT1) gespeicherten Frischwasser (FW) entzogen und Wärmeenergie (QP1*) mittels des Verflüssigers (VF1) der Wärmepumpe (WP1) in den Innenraum des Spülbehälters (SB) eingespeist wird,
- und wobei durch ein zwischen dem Innenraum des Spülbehälters (SB) und dem Innenraum des Füllreservoirs (WT1) vorgesehenes ein- oder mehrlagiges Isolationsmaterialsystem (SW1, BI, IS1, WI1) ein Wärmestrom (QD) aus dem Spülbehälter (SB) verringert wird.

## Claims

1. Household dishwasher (GS) for washing dishes in one or more water-conducting wash sub-cycles (for example VG, RG, ZG, KG) and for subsequently drying the dishes in at least one subsequent drying cycle (TG) of a wash cycle (SG) to be performed
- with a wash container (SB) for holding the dishes to be washed,
- with at least one fill reservoir (WT1) attached to the outside of the wash container (SB), the inlet (IL1) of which is connected to an inlet-side fresh water feed apparatus (ZLV) for filling with fresh water (FW*) from a fresh water network (WN) and the outlet (OF1) of which is connected to an outlet-side fresh water discharge apparatus (ALV) for taking a quantity of fresh water (ΔWMi where i=VG, RG, ZG, KG) required in each instance for the respective wash sub-cycle (for example VG, RG, ZG, KG) to be performed from the fill reservoir (WT1) and feeding it into the wash container (SB),
- with at least one heat pump (WP1), the circuit of which comprises a compressor (CO), pressure reduction means (DM), an evaporator (VD1) and a condenser (VF1), the evaporator (VD1) being thermally coupled to the fill reservoir (WT1) to extract heat energy from fresh water (FW) stored there and the condenser (VF1) being provided to feed heat energy (QP1*) into the interior space of the wash container (SB), and
- with a single-layer or multilayer insulation material system (SW1, BI, IS1, WI1) between the interior space of the wash container (SB) and the interior space of the fill reservoir (WT1) to reduce a heat flow (QD) from the wash container (SB).

2. Household dishwasher according to claim 1, **characterised in that** the fill reservoir (WT1) is attached to the outside of a wall, in particular a side wall (SW1), of the wash container (SB), in particular is attached there permanently with significant surface contact.

3. Household dishwasher according to at least one of the preceding claims, **characterised in that** the thermal insulation material system (SW1, BI, IS1, WI1) comprises at least one, in particular flat, heat insulation element (IS1), which is configured as a solid unit, in particular as insulating fleece or a foam material.

4. Household dishwasher according to claim 3, **characterised in that** the flat heat insulation element (IS1) rests on the outside of the outer wall (SW1) of the wash container (SB) or on the outside of a coating layer (BI), in particular a bitumen layer, applied to the wall and the fill reservoir (WT1) is positioned above this with surface contact.

5. Household dishwasher according to at least one of the preceding claims, **characterised in that** the fill reservoir (WT1) covers at least 50%, in particular between 70% and 100%, of the entire surface of the outside of the wall (SW1) assigned to it, preferably essentially the entire surface of the outside of the wall (SW1) of the wash container (SB) assigned to it.

6. Household dishwasher according to at least one of the preceding claims, **characterised in that** a number of, in particular the two opposing, side walls (SW1, SW2), preferably all the walls, of the wash container (SB) are each covered on the outside by at least one fill reservoir (WT1, WT2).

7. Household dishwasher according to at least one of the preceding claims, **characterised in that** the fill reservoir (WT1) has more thermal insulation on its wall side (WI1) facing the wash container (SB) than on its wall side (WA) facing away from the wash container (SB), in particular facing the environment.

8. Household dishwasher according to at least one of the preceding claims, **characterised in that** the thermal insulation material system (SW1, BI, IS1, WI1) as a whole has a thermal resistance Rₜₕ of at least 0.02 (K m²)/W, in particular between 0.1 (K m²)/W and 1 (K m²)/W.

9. Household dishwasher according to at least one of the preceding claims, **characterised in that** the fill reservoir (WT1) is provided on the inside and/or outside with PCM material (PE), its phase change temperature being higher than the phase change temperature of the fresh water (FW) stored in an intermediate manner in the fill reservoir (WT1) and in particular between 3°C and 10°C.

10. Household dishwasher according to at least one of the preceding claims, **characterised in that** the heat pump (WP1) is configured and/or in particular operated by means of a monitoring facility (CO) such that at the end (tAE) of the heating time segment (for example APR) of a wash sub-cycle (for example RG) performed by means of the heat pump (WP1) a treatment quantity of water present in the wash container (SB) is heated to a required minimum temperature (for example RT) with the aid of the condenser (VF1) of the heat pump (WP1) and the fresh water (FW) in the fill reservoir (WT1) is cooled by means of the evaporator (VD1) of the heat pump (WP1) to a temperature in a range between -4°C and +10°C, in particular between 10% and 90% of the maximum fill volume (VO) of water, in particular fresh water, in the fill reservoir (WT1) is made to freeze.

11. Household dishwasher according to at least one of the preceding claims, **characterised in that** the fill reservoir (WT1) is connected to the wash container (SB) in a thermally active manner and/or the heat pump (WP1) is configured and/or operated in particular with the aid of a monitoring facility (CO) such that the temperature (TWT) of the fresh water (FW) in the fill reservoir (WT1) during the time period (RZ) after the end (for example tAE) of the heating time segment (for example APR) of a preceding wash sub-cycle (for example RG), in which the quantity of water (WMi where i=RG) present in the wash container (SB) has been heated with the aid of the condenser (VF1) of the heat pump (WP1), until the start (for example tZS) of a subsequent wash sub-cycle (for example ZG), in particular to the start (for example tKS) of a subsequence wash sub-cycle (for example KG), in which the heat pump (WP1) is brought into operation again, is lower than the temperature (TSB) in the wash container (SB), and in particular is predominantly lower than the ambient temperature (UT) at the site of the household dishwasher during this time period (RZ).

12. Household dishwasher according to at least one of the preceding claims, **characterised in that** the fill reservoir (WT1) is connected to the wash container (SB) in a thermally active manner and/or the heat pump (WP1) is configured and/or operated in particular with the aid of a monitoring facility (CO) such that ice/icy water that has formed in the fill reservoir (WT1) due to the extraction of heat by the evaporator (VD1) during the heating time segment (for example APR) of a preceding wash sub-cycle (for example RG), in which the quantity of water (WMi where i=RG) present in the wash container (SB) has been heated with the aid of the condenser (VF1) of the heat pump (WP1), has thawed by at least 25%, in particular between 40% and 100%, preferably 100%, of its ice volume present at the end (tAE) of the heating time segment (APR) of the preceding wash sub-cycle (for example RG) by the start (for example tZS) of a subsequent wash sub-cycle (for example ZG), in particular by the start (for example tKS) of a subsequent wash sub-cycle (for example KG), in which the heat pump (WP1) has been brought into operation again, essentially by the transfer of heat (QD) from the wash container (SB) into the fill reservoir (WT1) and/or in some instances by the transfer of heat (QA) from the environment of the household dishwasher to the fill reservoir (WT1) and the thawed water in the fill reservoir (WT1) at the start (for example tZS) of the subsequent wash sub-cycle (for example ZG) has a temperature (TWT) above the freezing point of water, preferably between 15°C and 30°C.

13. Household dishwasher according to at least one of the preceding claims, **characterised in that** the fill reservoir (WT1) is configured as an open storage unit, in particular an overflow storage unit.

14. Household dishwasher according to at least one of the preceding claims, **characterised in that** the fill reservoir (WT1), its inlet-side fresh water feed apparatus (ZLV) for feeding fresh water (FW*) into the fill reservoir (WT1) and/or its outlet-side fresh water discharge apparatus (ALV) for taking fresh water (FW) from the fill reservoir (WT1) is/are configured and/or able to be set in particular with the aid of a monitoring facility (CO) such that the feeding of fresh water (FW*) into the fill reservoir (WT1) is coupled to, in particular correlated with, in particular in respect of time and/or quantity, the taking of fresh water (FW) from the fill reservoir (WT1) for the respective water-conducting wash sub-cycle (for example ZG).

15. Household dishwasher according to at least one of the preceding claims, **characterised in that** the fill reservoir (WT1), its inlet-side fresh water feed apparatus (ZLV) for feeding fresh water (FW*) into the fill reservoir (WT1) and/or its outlet-side fresh water discharge apparatus (ALV) for taking fresh water (FW) from the fill reservoir (WT1) is/are configured and/or able to be set in particular with the aid of a monitoring facility (CO) such that essentially the same quantity (ΔWMi where i=VG, RG, ZG, KG) of fresh water (FW) that is taken from the fill reservoir (WT1) for the respective water-conducting wash sub-cycle (for example RG) and discharged into the wash container (SB) by way of the fresh water discharge apparatus (ALV) is fed again to the fill reservoir (WT1) by the fresh water feed apparatus (ZLV) largely with a complete time overlap with it being taken.

16. Household dishwasher according to at least one of the preceding claims, **characterised in that** the fill reservoir(WT1), its inlet-side fresh water feed apparatus (ZLV) for feeding fresh water (FW*) into the fill reservoir (WT1) and/or its outlet-side fresh water discharge apparatus (ALV) for taking fresh water (FW) from the fill reservoir (WT1) is/are configured and/or able to be set in particular with the aid of a monitoring facility (CO) such that during the one or more wash sub-cycles (for example VG, RG, ZG, KG) and in some instances also during the drying cycle (TG) of the respective wash cycle (SG) that completes the wash cycle, in particular over the one or more filling and/or discharge sequences of the overall wash cycle (SG), the fill reservoir (WT1) is always filled with fresh water (FW) approximately to the same target level, in particular the maximum target level (VO), which is assigned to the maximum liquid fill volume of the fill reservoir (WT1).

17. Household dishwasher according to at least one of the preceding claims, **characterised in that** the inlet-side fresh water feed apparatus (ZLV) for feeding fresh water (FW*) into the fill reservoir (WT1) is configured and/or can be set in particular with the aid of a monitoring facility (CO) such that after the heating phase (APR) of a wash sub-cycle (for example RG), in which the quantity of water (for example WMi where i=RG) present in the wash container (SB) has been heated with the aid of the condenser (VF1) of the heat pump (WP1) and in which the quantity of fresh water (for example where i=RG) present in the fill reservoir (WT1) has been cooled to a cold water temperature (TWT) lower than the inflow temperature (TWT*) of the fresh water (FW*), in particular to less than 8°C, preferably being partially or completely frozen to form ice, with the aid of the evaporator (VD1) of the heat pump (WP1), fresh water (FW*) with a higher inflow temperature (TWT*) than the cold water temperature (TWT) is again introduced into the fill reservoir (SB) to regenerate said cold water or ice.

18. Household dishwasher according to at least one of the preceding claims, **characterised in that** at least one detection means (DV) is provided to detect at least one parameter (T) characterising the respective heat energy content of the fill reservoir (WT1) and a monitoring facility (CO) uses said parameter (T) to monitor, in particular control and/or regulate, the work sequence, in particular the activation and/or deactivation states, of the heat pump (WP1), and/or another component (ZV) of the fill reservoir (WT1), its fresh water feed apparatus (ZLV) and/or its discharge apparatus.

19. Household dishwasher according to at least one of the preceding claims, **characterised in that** at least one water movement means, in particular flow generation means (ZP) is/are additionally provided, forcing water movement, in particular water flow, preferably circulating flow (KS), in the fill reservoir (WT1), in particular when the heat pump (WP1) is operating.

20. Household dishwasher according to at least one of the preceding claims, **characterised in that** only the heat pump (WP1) is provided to heat wash liquid in the wash container (SB) during the predetermined heating time segment (APR) of the cleaning cycle (RG) and during the predetermined heating time segment (APK) of the final rinse cycle (KG) of the wash cycle (SG) to be performed .

21. Household dishwasher according to at least one of claims 1 to 19, **characterised in that** an electric heater (HP) is provided in addition to the heat pump (WP1), it being possible for said heater (HP) to be brought into operation by a monitoring facility (CO) parallel to the heat pump to heat wash liquid and/or air in the wash container (SB) to a required minimum temperature (RT, KT), or to be brought into operation by a monitoring facility (CO) only after the heating time period of the heat pump (WP1) after it has been deactivated to reheat wash liquid and/or air in the wash container (SB) to a required minimum temperature.

22. Household dishwasher according to at least one of the preceding claims, **characterised in that** the heat pump (WP1) is operated during the drying cycle (TG) that completes the wash cycle (SG).

23. Method for washing dishes in the wash container (SB) of a household dishwasher (GS), which is configured in particular according to at least one of the preceding claims, in one or more water-conducting wash sub-cycles (for example VG, RG, ZG, KG) and for then drying the dishes in at least one subsequent drying cycle (TG) of a wash cycle (SG) to be performed,
- wherein a quantity of water (WMi where i=VG, RG, ZG, KG) required for the respective wash sub-cycle (for example RG) to be performed in the wash container (SB) is taken partially or completely from at least one fill reservoir (WT1) attached to the outside of the wash container (SB), the inlet (IL1) of which is connected to an inlet-side fresh water feed apparatus (ZLV) for filling with fresh water (FW*) from a fresh water network (WN) and the outlet (OF1) of which is connected to an outlet-side fresh water discharge apparatus (ALV) for taking a quantity of fresh water (ΔWMi where i=VG, RG, ZG, KG) required in each instance for the respective wash sub-cycle (for example RG) to be performed from the fill reservoir (WT1) and feeding it into the wash container (SB), and fed to the wash container (SB),
- wherein for at least one of the wash sub-cycles (for example RG), for the quantity of water (WMi where i=RG) for which heating to a minimum temperature (for example RT) is required in the interior space of the wash container (SB), heat energy (QP1) is extracted by means of the evaporator (VD1) of a heat pump (WP1) from the fresh water (FW) stored in the fill reservoir (WT1) and heat energy (QP1*) is fed into the interior space of the wash container (SB) by means of the condenser (VF1) of the heat pump (WP1),
- and wherein a single-layer or multilayer insulation material system (SW1, BI, IS1, WI1) between the interior space of the wash container (SB) and the interior space of the fill reservoir (WT1) reduces a heat flow (QD) from the wash container (SB).

## Revendications

1. Lave-vaisselle ménager (GS) pour laver de la vaisselle dans un ou plusieurs cycle(s) de lavage partiel(s) à circulation d'eau (p.ex. VG, RG, ZG, KG) et pour le séchage subséquent de la vaisselle dans au moins un cycle de séchage (TG) suivant d'un cycle de lavage à effectuer (SG)
- avec une cuve de lavage (SB) pour l'accueil de la vaisselle,
- avec au moins un réservoir de remplissage (WT1) apposé à l'extérieur de la cuve de lavage (SB), dont l'entrée (IL1) est reliée à un dispositif d'alimentation en eau fraîche côté entrée (ZLV) pour le remplissage en eau fraîche (FW*) au départ d'un réseau d'eau fraîche (WN), et dont la sortie (OF1) est reliée à un dispositif d'évacuation d'eau fraîche côté sortie (ALV) pour le prélèvement d'une quantité d'eau fraîche (ΔWMi avec i=VG, RG, ZG, KG) requise pour le cycle de lavage partiel respectif à effectuer (p.ex. VG, RG, ZG, KG) au départ du réservoir de remplissage (WT1) et pour la mener dans la cuve de lavage (SB),
- avec au moins une pompe à chaleur (WP1), dont le circuit englobe un compresseur (CO), un moyen de réduction de la pression (DM), un évaporateur (VD1) et un condenseur (VF1), dans lequel l'évaporateur (VD1) est couplé thermiquement au réservoir de remplissage (WT1) pour le prélèvement d'énergie calorifique (QP1) au départ de l'eau fraîche (FW) y stockée et le condenseur (VF1) est prévu pour l'injection d'énergie calorifique (QP1*) dans l'espace intérieur de la cuve de lavage (SB), et
- avec un système de matériau isolant à une ou plusieurs couche(s) (SW1, BI, IS1, WI1) entre l'espace intérieur de la cuve de lavage (SB) et l'espace intérieur du réservoir de stockage (WT1) pour la réduction d'un flux thermique (QD) issu de la cuve de lavage (SB).

2. Lave-vaisselle ménager selon la revendication 1, **caractérisé en ce que** le réservoir de remplissage (WT1) est contigu à l'extérieur à une paroi, en particulier une paroi latérale (SW1) de la cuve de lavage (SB), en particulier y est apposé de manière fixe en contact à pleine surface.

3. Lave-vaisselle ménager selon au moins une des revendications précédentes, **caractérisé en ce que** le système de matériau isolant thermique (SW1, BI, IS1, WI1) englobe au moins un élément d'isolation thermique (131), en particulier plan, exécuté sous la forme d'un corps solide, en particulier non tissé isolant ou d'un matériau moussé.

4. Lave-vaisselle ménager selon la revendication 3, **caractérisé en ce que** l'élément d'isolation thermique plan (IS1) repose à l'extérieur sur la paroi extérieure (SW1) de la cuve de lavage (SB) ou à l'extérieur sur une couche de revêtement (BI) apposée sur la paroi, en particulier une couche bitumeuse, le réservoir de remplissage (WT1) posant par-dessus en contact à pleine surface.

5. Lave-vaisselle ménager selon au moins une des revendications précédentes, **caractérisé en ce que** le réservoir de remplissage (WT1) couvre en extérieur au moins 50%, en particulier entre 70% et 100% de la surface totale de la paroi (SW1) lui respectivement affectée, de préférence essentiellement la surface totale de la paroi (SW1) lui affectée de la cuve de lavage (SB).

6. Lave-vaisselle ménager selon au moins une des revendications précédentes, **caractérisé en ce que** plusieurs, en particulier les deux parois latérales opposées (SW1, SW2), de préférence toutes les parois de la cuve de lavage (SB) sont respectivement couvertes en extérieur par au moins un réservoir de remplissage (WT1, WT2).

7. Lave-vaisselle ménager selon au moins une des revendications précédentes, **caractérisé en ce que** le réservoir de remplissage (WT1) est davantage isolé thermiquement sur son côté de paroi (WI1) dirigé vers la cuve de lavage (SB) que sur son côté de paroi (WA) éloigné de la cuve de lavage (SB), en particulier dirigé vers l'environnement.

8. Lave-vaisselle ménager selon au moins une des revendications précédentes, **caractérisé en ce que** le système de matériau isolant thermique (SW1, BI, IS1, WI1) présente globalement une résistance thermique Rₜₕ d'au moins 0,02 (K m²)/W, en particulier entre 0,1 (K m²)/W et 1 (K m²)/W.

9. Lave-vaisselle ménager selon au moins une des revendications précédentes, **caractérisé en ce que** le réservoir de remplissage (WT1) est doté à l'intérieur et/ou à l'extérieur d'un matériau PCM (PE) dont la température de changement de phase est supérieure à la température de changement de phase de l'eau fraîche (FW) stockée temporairement dans le réservoir de remplissage (WT1) et se trouve en particulier entre 3°C et 10°C.

10. Lave-vaisselle ménager selon au moins une des revendications précédentes, **caractérisé en ce que** la pompe à chaleur (WP1) est exécutée de telle sorte et/ou exploitée en particulier au moyen d'un dispositif de contrôle (CO) qu'à la fin (tAE) de la période de chauffage (p.ex. APR) d'un cycle de lavage partiel (p.ex. RG) réalisée au moyen de la pompe à chaleur (WP1), une quantité d'eau de traitement présente dans la cuve de lavage (SB) est portée à une température minimale requise (p.ex. RT) à l'aide du condenseur (VF1) de la pompe à chaleur (WP1) et l'eau fraîche (FW) présente dans le réservoir de remplissage est refroidie (WT1) au moyen de l'évaporateur (VD1) de la pompe à chaleur (WP1) à une température (TWT) entre -4 °C et + 10°C, en particulier entre 10% et 90 % du volume de remplissage maximal (VO) en eau, en particulier l'eau fraîche (FW) présente dans le réservoir de remplissage (WT1) est portée à l'état gelé.

11. Lave-vaisselle ménager selon au moins une des revendications précédentes, **caractérisé en ce que** le réservoir de remplissage (WT1) se trouve de telle sorte en liaison fonctionnelle thermique avec la cuve de lavage (SB), et/ou la pompe à chaleur (WP1) est exécutée de telle sorte et/ou exploitée en particulier à l'aide d'un dispositif de contrôle (CO) que la température (TWT) de l'eau fraîche (FW) dans le réservoir de remplissage (WT1) a été chauffée pendant la durée (RZ) après la fin (p.ex. tAE) de la période de chauffage (p.ex. APR) d'un cycle de lavage partiel précédent (p.ex. RG), dans lequel la quantité d'eau (WMi avec i= RG) présente dans la cuve de lavage (SB) a été chauffée à l'aide du condenseur (VF1) de la pompe à chaleur (WP1), jusqu'au démarrage (p.ex. tZS) d'un cycle de lavage partiel suivant (p.ex. ZG), en particulier jusqu'au démarrage (p.ex. tKS) d'un cycle de lavage partiel suivant (p.ex. KG) dans lequel la pompe à chaleur (WP1) est à nouveau mise en service, est inférieure à la température (TSB) dans la cuve de lavage (SB) et est en particulier essentiellement pendant cette durée (RZ) inférieure à la température ambiante (UT) du lieu auquel le lave-vaisselle ménager se trouve.

12. Lave-vaisselle ménager selon au moins une des revendications précédentes, **caractérisé en ce que** le réservoir de remplissage (WT1) se trouve de telle sorte en liaison fonctionnelle thermique avec la cuve de lavage (SB), et/ou la pompe à chaleur (WP1) est exécutée de telle sorte et/ou exploitée en particulier à l'aide d'un dispositif de contrôle (CO) que la glace/l'eau glacée, qui s'est créée durant la période de chauffage (p.ex. APR) d'un cycle de lavage partiel précédent (p.ex. RG), dans lequel la quantité d'eau (WMi avec i= RG) présente dans la cuve de lavage (SB) a été chauffée à l'aide du condenseur (VF1) de la pompe à chaleur (WP1), dans le réservoir de remplissage (WT1) en raison du prélèvement de chaleur par l'évaporateur (VD1), a fondu jusqu'au démarrage (p.ex. tZS) d'un cycle de lavage partiel suivant (p.ex. ZG), en particulier jusqu'au démarrage (p.ex. tKS) d'un cycle de lavage partiel suivant (p.ex. KG) dans lequel la pompe à chaleur (WP1) est à nouveau mise en service, essentiellement par transport de chaleur (QD) au départ de la cuve de lavage (SB) dans le réservoir de remplissage (WT1) et/ou le cas échéant par transport de chaleur (QA) au départ de l'environnement du lave-vaisselle ménager dans le réservoir de remplissage (WT1), à concurrence minimale de 25 %, en particulier entre 40 % et 100 %, de préférence à 100 % de son volume de glace existant à la fin (tAE) de la période de chauffage (APR) dudit cycle de lavage partiel précédent (p.ex. RG), et **en ce que** l'eau fondue se trouvant dans le réservoir de remplissage (WT1) présente, au démarrage (p.ex. tZS) du cycle de lavage partiel suivant (p.ex. ZG), une température (TWT) supérieure au point de congélation de l'eau, de préférence entre 15°C et 30°C.

13. Lave-vaisselle ménager selon au moins une des revendications précédentes, **caractérisé en ce que** le réservoir de remplissage (WT1) est exécuté sous la forme d'un réservoir ouvert, en particulier d'un réservoir à débordement.

14. Lave-vaisselle ménager selon au moins une des revendications précédentes, **caractérisé en ce que** le réservoir de remplissage (WT1), son dispositif d'alimentation en eau fraîche côté entrée (ZLV) pour l'amenée d'eau fraîche (FW*) dans le réservoir de remplissage (WT1), et/ou son dispositif d'évacuation d'eau fraîche côté sortie (ALV) pour le prélèvement d'eau fraîche (FW) au départ du réservoir de remplissage (WT1) est/sont exécuté(s) de telle sorte et/ou est/sont en particulier à l'aide d'un dispositif de contrôle (CO) réglable(s) de telle sorte que le prélèvement d'eau fraîche (FW) au départ du réservoir de remplissage (WT1) pour le cycle de lavage partiel à circulation d'eau respectif (p.ex. ZG) présente un couplage en particulier temporel et/ou quantitatif, en particulier une corrélation avec l'amenée d'eau fraîche (FW*) dans le réservoir de remplissage (WT1).

15. Lave-vaisselle ménager selon au moins une des revendications précédentes, **caractérisé en ce que** le réservoir de remplissage (WT1), son dispositif d'alimentation en eau fraîche côté entrée (ZLV) pour l'amenée d'eau fraîche (FW*) dans le réservoir de remplissage (WT1), et/ou son dispositif d'évacuation d'eau fraîche côté sortie (ALV) pour le prélèvement d'eau fraîche (FW) au départ du réservoir de remplissage (WT1) est/sont exécuté(s) de telle sorte et/ou est/sont en particulier à l'aide d'un dispositif de contrôle (CO) réglable(s) de telle sorte que le réservoir de remplissage (WT1) est à nouveau alimenté d'une quantité d'eau (ΔWMi avec i = VG, RG, ZG, KG) en eau fraîche (FW) essentiellement identique à celle prélevée en son sein pour le cycle de lavage à circulation d'eau respectif (p.ex. RG) et évacuée via le dispositif d'évacuation d'eau fraîche côté sortie (ALV) dans la cuve de lavage (SB), par le dispositif d'alimentation en eau fraîche (ZLV), selon un chevauchement temporel largement intégral par rapport à ce prélèvement.

16. Lave-vaisselle ménager selon au moins une des revendications précédentes, **caractérisé en ce que** le réservoir de remplissage (WT1), son dispositif d'alimentation en eau fraîche côté entrée (ZLV) pour l'amenée d'eau fraîche (FW*) dans le réservoir de remplissage (WT1), et/ou son dispositif d'évacuation d'eau fraîche côté sortie (ALV) pour le prélèvement d'eau fraîche (FW) au départ du réservoir de remplissage (WT1) est/sont exécuté(s) de telle sorte, et/ou est/sont en particulier à l'aide d'un dispositif de contrôle (CO) réglable(s) de telle sorte que le réservoir de remplissage (WT1) est, durant le ou les cycles de lavage partiel(s) (p.ex. VG, RG, ZG, KG) et le cas échéant également durant le cycle de séchage (TG) terminant le cycle de lavage du cycle de lavage respectif (SG), rempli d'eau fraîche (FW) en particulier au-delà de la ou des séquence(s) de remplissage et/ou de pompage de l'ensemble du cycle de lavage (SG), toujours approximativement selon le même niveau de consigne, en particulier selon le niveau de consigne maximal (VO), affecté au volume de remplissage maximal en fluide du réservoir de remplissage (WT1).

17. Lave-vaisselle ménager selon au moins une des revendications précédentes, **caractérisé en ce que** le dispositif d'alimentation en eau fraîche côté entrée (ZLV) pour l'amenée d'eau fraîche (FW*) dans le réservoir de remplissage (WT1) est exécuté de telle sorte, et/ou est en particulier à l'aide d'un dispositif de contrôle (CO) réglable de telle sorte qu'après la phase de chauffage (APR) d'un cycle de lavage partiel (p.ex. RG), dans lequel la quantité d'eau (p.ex. WMi avec i= RG) présente dans la cuve de lavage (SB) a été chauffée à l'aide du condenseur (VF1) de la pompe à chaleur (WP1) et dans lequel la quantité d'eau fraîche (p.ex. avec i= RG) présente dans le réservoir de remplissage (WT1) est refroidie à l'aide de l'évaporateur (VD1) de la pompe à chaleur (WP1) à une température d'eau froide (TWT) inférieure à la température d'entrée (TWT*) de l'eau fraîche (FW*), en particulier à moins de 8° C, de préférence partiellement ou intégralement en glace, de l'eau fraîche (FW*) à une température d'entrée (TWT*) supérieure à la température d'eau froide (TWT) est à nouveau admise dans le réservoir de remplissage (SB) pour la régénération de cette eau froide ou glace.

18. Lave-vaisselle ménager selon au moins une des revendications précédentes, **caractérisé en ce qu'**au moins un moyen de détection (DV) pour la saisie d'au moins un paramètre (T) caractérisant la teneur en énergie calorifique respective du réservoir de remplissage (WT1) est prévu, et **en ce qu'**un dispositif de contrôle (CO) contrôle, en particulier commande et/ou régule à l'aide de ce paramètre (T) le processus de travail, en particulier les états d'activation et/ou les états de désactivation de la pompe à chaleur (WP1) et/ou d'un autre composant (ZV) du réservoir de remplissage (WT1), son dispositif d'alimentation en eau fraîche (ZLV) et/ou son dispositif d'évacuation.

19. Lave-vaisselle ménager selon au moins une des revendications précédentes, **caractérisé en ce qu'**au moins un moyen de déplacement d'eau est en outre prévu, en particulier un moyen de génération d'écoulement (ZP), qui force dans le réservoir de remplissage (WT1) un déplacement de l'eau, en particulier un écoulement d'eau, de préférence un écoulement de circulation (KS), en particulier lorsque la pompe à chaleur (WP1) est en fonctionnement.

20. Lave-vaisselle ménager selon au moins une des revendications précédentes, **caractérisé en ce que** durant la période de chauffage (APR) prescrite du cycle de lavage (RG) et durant la période de chauffage (APK) prescrite du cycle de rinçage (KG) du cycle de lavage (SG) respectif à effectuer, seule la pompe à chaleur (WP1) est prévue afin de chauffer le liquide de lavage dans la cuve de lavage (SB).

21. Lave-vaisselle ménager selon au moins une des revendications 1 à 19, **caractérisé en ce qu'**outre la pompe à chaleur (WP1), un chauffage électrique (HP) est prévu, lequel peut être mis en service par un dispositif de contrôle (CO) parallèlement à la pompe à chaleur (WP1) pour chauffer le liquide de lavage et/ou l'air dans la cuve de lavage (SB) à une température minimale requise (RT, KT) ou qu'un dispositif de contrôle (CO) peut uniquement mettre en service après la durée de chauffage de la pompe à chaleur (WP1) après sa désactivation, pour le réchauffage de liquide de lavage et/ou d'air dans la cuve de lavage (SB) à une température minimale requise (RT, KT).

22. Lave-vaisselle ménager selon au moins une des revendications précédentes, **caractérisé en ce que** la pompe à chaleur (WP1) est exploitée durant le cycle de séchage (TG) terminant le cycle de lavage.

23. Procédé pour le lavage de vaisselle dans la cuve de lavage (SB) d'un lave-vaisselle ménager (GS) exécuté en particulier selon au moins une des revendications précédentes, dans un ou plusieurs cycle(s) de lavage partiel(s) à circulation d'eau (p.ex. VG, RG, ZG, KG) et pour le séchage subséquent de la vaisselle dans au moins un cycle de séchage (TG) suivant d'un cycle de lavage à effectuer (SG),
- dans lequel une quantité d'eau (WMi avec i = VG, RG, ZG, KG) requise dans la cuve de lavage (SB) pour le cycle de lavage (p.ex. RG) respectif à effectuer est partiellement ou intégralement prélevée au départ d'au moins un réservoir de remplissage (WT1) apposé à l'extérieur de la cuve de lavage (SB), dont l'entrée (IL1) est reliée à un dispositif d'alimentation en eau fraîche côté entrée (ZLV) pour le remplissage en eau fraîche (FW*) au départ d'un réseau d'eau fraîche (WN), et dont la sortie (OF1) est reliée à un dispositif d'évacuation d'eau fraîche côté sortie (ALV) pour le prélèvement hors du réservoir (WT1) d'une quantité d'eau fraîche (ΔWMi avec i=VG, RG, ZG, KG) requise pour le cycle de lavage partiel respectif à effectuer (p.ex. RG) et menée dans la cuve de lavage (SB),
- dans lequel pour au moins un des cycles de lavage partiels (p.ex. RG), pour la quantité d'eau duquel (WMI avec i = RG) dans l'espace l'intérieur de la cuve de lavage (SB) un chauffage selon une température minimale (p.ex. RT) est requis, de l'énergie calorifique (QP1) est prélevée au moyen de l'évaporateur (VD1) d'une pompe à chaleur (WP1) au départ de l'eau fraîche (FW) stockée dans le réservoir de remplissage (WT1) et de l'énergie calorifique (QP1*) est injectée au moyen du condenseur (VF1) de la pompe à chaleur (WP1) dans l'espace intérieur de la cuve de lavage (SB),
- et dans lequel un système de matériau isolant à une ou plusieurs couche(s) (SW1, BI, IS1, Wl1) prévu entre l'espace intérieur de la cuve de lavage (SB) et l'espace intérieur du réservoir de stockage (WT1) réduit un flux thermique (QD) issu de la cuve de lavage (SB).
